(19)

**Europäisches Patentamt**
**European Patent Office**
**Office européen des brevets**

(11) **EP 4 523 835 A1**

(12) **EUROPEAN PATENT APPLICATION**
published in accordance with Art. 153(4) EPC

(43) Date of publication:
**19.03.2025 Bulletin 2025/12**

(51) International Patent Classification (IPC):
**B23K 26/359** (2014.01)     **B23K 26/064** (2014.01)
**B23K 26/067** (2006.01)     **B23K 26/364** (2014.01)

(21) Application number: **22941660.7**

(52) Cooperative Patent Classification (CPC):
**B23K 26/064; B23K 26/067; B23K 26/359;**
**B23K 26/364**

(22) Date of filing: **11.05.2022**

(86) International application number:
**PCT/JP2022/019995**

(87) International publication number:
**WO 2023/218580 (16.11.2023 Gazette 2023/46)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **NIKON CORPORATION**
**Tokyo 140-8601 (JP)**

(72) Inventor: **LIU, Zhigiang**
**Tokyo 140-8601 (JP)**

(74) Representative: **Hoffmann Eitle**
**Patent- und Rechtsanwälte PartmbB**
**Arabellastraße 30**
**81925 München (DE)**

(54) **PROCESSING OPTICAL SYSTEM, PROCESSING DEVICE, AND PROCESSING METHOD**

(57)     To provide a processing optical system, a processing apparatus, and a processing method capable of forming a riblet structure with an ideal shape. A processing optical system (15) includes a first optical system (16) that is configured to split a processing light (EL0) from a light source (2) into a first processing light (EL1) and a second processing light (EL2); a second optical system (17) that is configured to split the second processing light (EL2) into a plurality of second processing lights (EL2) and to irradiate the split second processing lights (EL2) onto an object (W) from different incident directions respectively, thereby forming interference fringes (IS) on a surface of the object (W); and a third optical system (18) that is configured to irradiate the first processing light (EL1) from the first optical system (16) toward an interference area (IA) on the surface of the object (W), the interference fringes (IS) being formed in the interference area (IA).

FIG.12

## Description

TECHNICAL FIELD

The present disclosure relates, for example, to processing optical systems, processing apparatuses, and processing methods for processing objects.

BACKGROUND

Patent Literature 1 discloses a processing apparatus capable of processing the object to form riblets on the surface of an object such as an aircraft's airframe. Such processing apparatus is required to properly process the object.

CITATION LIST

Patent Literature

Patent Literature 1: US 4,994,639

SUMMARY

According to a first aspect, a processing optical system is provided. The processing optical system includes a first optical system that is configured to split a processing light from a light source into a first processing light and a second processing light; a second optical system that is configured to split the second processing light into a plurality of second processing lights and to irradiate the split second processing lights onto an object from different incident directions respectively to form interference fringes on a surface of the object; and a third optical system that is configured to irradiate the first processing light from the first optical system toward an interference area on the surface of the object, the interference fringes being formed in the interference area.

According to a second aspect, a processing optical system is provided. The processing optical system includes an interference fringe formation optical system that is configured to split a second processing light, among first and second processing lights, which are pulsed lights with emission durations that at least partially overlap, into a plurality of second processing lights, and to irradiate the split plurality second processing lights onto the object from different incident directions respectively, thereby forming interference fringes on a surface of the object; and an irradiation optical system that is configured to irradiate the first processing light toward an interference area where the interference fringes are formed.

According to a third aspect, a processing apparatus for conducting a riblet processing on a surface of an object by using a light from a light source is provided. The processing apparatus includes the processing optical system; and a positional relation changing mechanism that is configured to change a positional relation between the surface of the object and the interference fringes formed on the surface of the object by the processing optical system.

According to a fourth aspect, a processing method for a riblet processing on a surface of an object by using a light from a light source is provided. The method includes splitting a processing light from the light source into a first processing light and a second processing light; splitting the second processing light into a plurality of second processing lights, and irradiating the split plurality second processing lights onto the object from different incident directions respectively, thereby forming interference fringes on the surface of the object; and irradiating the first processing light toward an interference area on the surface of the object, the interference fringes being formed in the interference area.

BRIEF DESCRIPTION OF THE DRAWINGS

[FIG. 1] FIG. 1 is a sectional view schematically showing an entire configuration of a processing system of the present embodiment.
[FIG. 2] FIG. 2 is a system configuration diagram showing a system configuration of the processing system of the present embodiment.
[FIG. 3A] FIG. 3A is a perspective view showing a riblet structure.
[FIG. 3B] FIG. 3B is a sectional view showing the riblet structure (sectional view taken along a line III-III' of FIG. 3A).
[FIG. 3C] FIG. 3C is a top view showing the riblet structure.
[FIG. 4] FIG. 4 is a plan view showing one example of interference fringes.
[FIG. 5] FIG. 5 is a configuration diagram showing a configuration of a processing optical system of the present embodiment.
[FIG. 6A] FIG. 6A shows the fluence distribution of a processing light (interference light) in a comparative example in which interference fringes are formed by a plurality of second processing lights without irradiating a first processing light and a sectional shape of a riblet structure that is formed by the processing light of the comparative example.
[FIG. 6B] FIG. 6B shows the fluence distribution of a processing light in the present embodiment in which the first processing light is overlappingly irradiated onto an interference area where interference fringes have been formed by the plurality of second processing lights and a sectional shape of a riblet structure that is formed by the processing light of the present embodiment.
[FIG. 7] FIG. 7 is a graph showing a relation between the fluence of light and the amount of processing of a work.
[FIG. 8] FIG. 8 shows the fluence distribution of a processing light (interference light) in a comparative example in which interference fringes are formed by at least second processing lights without irradiating a first processing light, and a sectional shape of a riblet structure that is formed by the processing light of the comparative example.

[FIG. 9] FIG. 9 shows the fluence distribution of a processing light in the present embodiment in which the first processing light is overlappingly irradiated onto an interference area where interference fringes have been formed by the plurality of second processing lights and a sectional shape of a riblet structure that is formed by the processing light of the present embodiment.

[FIG. 10A] FIG. 10A shows an ideal waveform.

[FIG. 10B] FIG. 10B shows two waveforms (basic frequency waveform and twofold frequency waveform) obtained by conducting a Fourier transform on the ideal waveform.

[FIG. 11] FIG. 11 is an explanatory view showing a table prepared by arranging irradiation modes in irradiation areas, interference areas, and superimposed areas in processing optical systems of five examples.

[FIG. 12] FIG. 12 is an explanatory view showing a configuration of the processing optical system of the first example.

[FIG. 13] FIG. 13 is an explanatory view showing the state of the second processing light on a splitting surface, the state of the second processing light on a reflection surface, and the state of the second processing light on a transmissive surface, in a special beam splitter of the processing optical system of the first example.

[FIG. 14] FIG. 14 is an explanatory view showing a configuration of the processing optical system of the second example.

[FIG. 15] FIG. 15 is an explanatory view showing the state of the second processing light on a splitting surface, the state of the second processing light on a reflection surface, and the state of the second processing light on a transmissive surface, in a special beam splitter of the processing optical system of the second example.

[FIG. 16] FIG. 16 is an explanatory view showing a configuration of the processing optical system of the third example.

[FIG. 17] FIG. 17 is an explanatory view showing the state of the second processing light on a splitting surface, the state of the second processing light on a reflection surface, and the state of the second processing light on a transmissive surface, in a special beam splitter of the processing optical system of the third example.

[FIG. 18] FIG. 18 is an explanatory view showing a configuration of the processing optical system of the fourth example.

[FIG. 19] FIG. 19 is an explanatory view showing the state of the second processing light on a splitting surface, the state of the second processing light on a reflection surface, and the state of the second processing light on a transmissive surface, in a special beam splitter of the processing optical system of the fourth example.

[FIG. 20] FIG. 20 is an explanatory view showing a configuration of the processing optical system of the fifth example.

[FIG. 21] FIG. 21 is an explanatory view showing the state of the second processing light on a splitting surface, the state of the second processing light on a reflection surface, and the state of the second processing light on a transmissive surface, in a special beam splitter of the processing optical system of the fifth example.

[FIG. 22] FIG. 22 is an explanatory view showing a configuration of a processing optical system of a modified example.

[FIG. 23] FIG. 23 is an explanatory view showing two interference areas and two irradiation areas that are formed on the surface of a work by the second optical system of the processing optical system of the modified example.

[FIG. 24] FIG. 24 is an explanatory view showing a configuration of a processing optical system of another modified example.

[FIG. 25] FIG. 25 is an explanatory view showing a configuration of a processing optical system of still another modified example.

DESCRIPTION OF EMBODIMENTS

Embodiments of the processing optical system, the processing apparatus, and the processing method are explained with reference to the drawings. In the following, embodiments of the processing optical system, the processing apparatus, and the processing method are explained by using a processing system SYS that is capable of processing a work W as one example of the object. However, the present invention is not limited to the embodiments described below. Furthermore, in the following explanation, the positional relations of various constituent elements constituting the processing system SYS are explained by using the XYZ orthogonal coordinate system defined by mutually orthogonal X, Y, and Z axes. In the following explanation, for convenience of explanation, the X-axis and Y-axis directions are each referred to as the horizontal direction (i.e., a predetermined direction in the horizontal plane), and the Z-axis direction is referred to as the vertical direction (i.e., a direction orthogonal to the horizontal plane and, in effect, vertical direction). The directions of rotation around the X, Y, and Z axes (in other words, the directions of inclination) are referred to as the θX, θY, and θZ directions, respectively. Here, the Z-axis direction may be referred to as the direction of gravity. The XY plane may be referred to as the horizontal direction.

FIRST EMBODIMENT

(1) Configuration of Processing System SYS

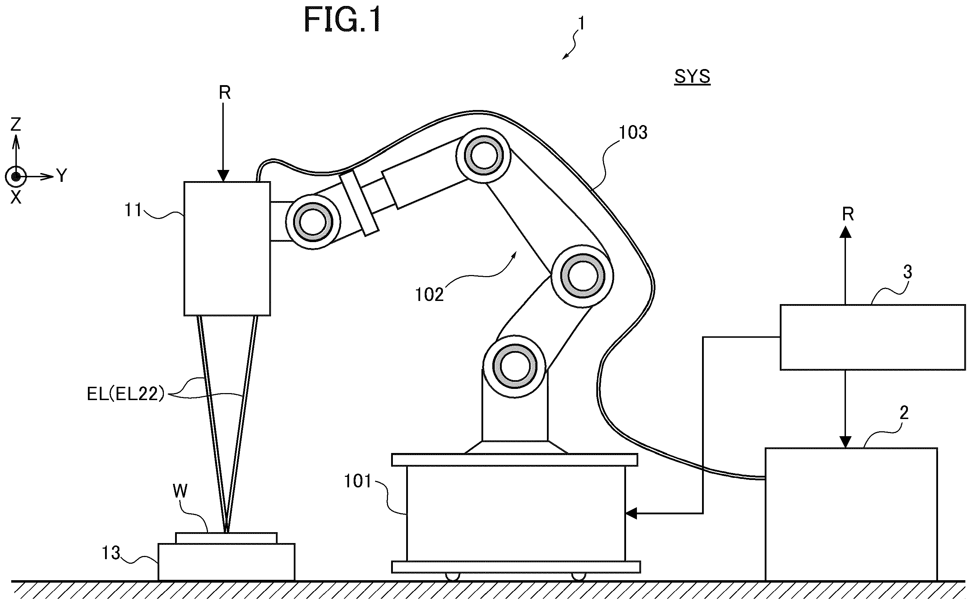

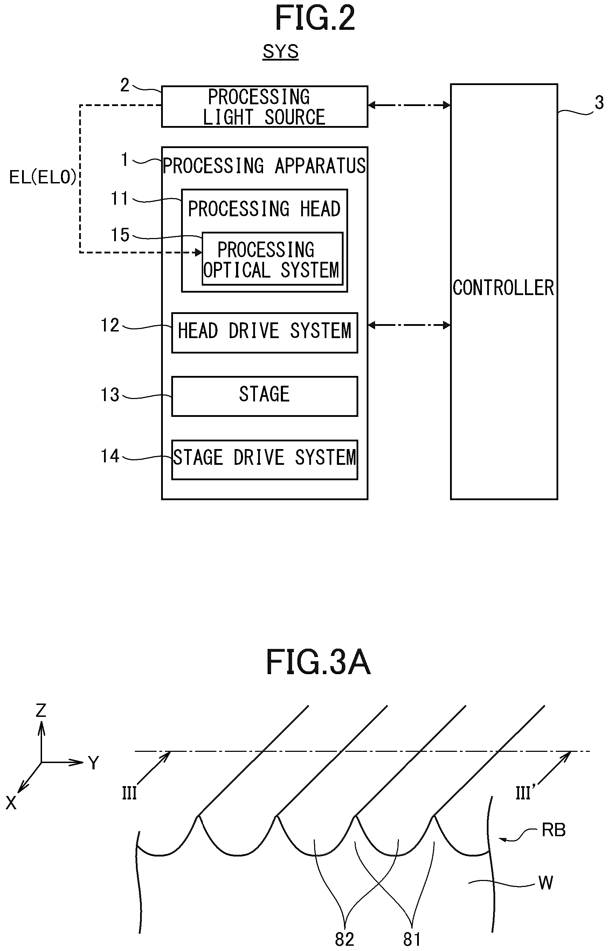

Firstly, a configuration of the processing system SYS of the present embodiment is explained with reference to FIGS. 1 and 2. FIG. 1 is a sectional view schematically showing a configuration of the processing system SYS of the present embodiment. FIG. 2 is a system configuration diagram showing a system configuration of the processing system SYS of the present embodiment.

As shown in FIGS. 1 and 2, the processing system SYS includes a processing apparatus 1, a processing light source 2, and a controller 3. The processing apparatus 1 includes a processing head 11. The processing head 11 is attached as an end effector to an articulated robot 102 which is mounted on a self-propelled driver 101. The processing head 11 is configured to irradiate a processing light EL from the processing light source 2 via a beam transmission optical system 103 toward the surface of the work W placed on a stage 13. The controller 3 is configured to control the processing head 11, the self-propelled driver 101, the articulated robot 102, and the processing light source 2.

The beam transmission optical system 103 transmits the processing light EL from the processing light source 2 that supplies the processing light EL to the processing head 11. The processing head 11 irradiates the processing light EL from the beam transmission optical system 103 toward the surface of the work W placed on the stage 13, based on the command from the controller 3 (see arrow R in FIG. 1). The articulated robot 102 changes the position and posture of the processing head 11 relative to the surface of the work W, based on the command from the controller 3, to change the position at which the processing light EL is irradiated onto the surface of the work W and the irradiation direction of the processing light EL to the surface. The self-propelled driver 101 changes the positions and postures of the articulated robot 102 and the processing head 11 attached to the articulated robot 102, with respect to the surface of the work W, based on the command from the controller 3, to change the position at which the processing light EL is irradiated onto the surface of the work W and the irradiation direction of the processing light EL to the surface. The details of the configuration of the processing head 11 are described hereinafter with reference to FIGS. 2 to 6.

The processing apparatus 1 is capable of processing the work W, which is an object to be processed (also referred to as a base material) as a body, under the control of the controller 3. The work W may be, for example, a metal, an alloy (e.g., duralumin, etc.), a semiconductor (e.g., silicon), a resin, a composite material such as CFRP (Carbon Fiber Reinforced Plastic), etc., a paint (as one example, a paint layer applied to a substrate), a glass, or an object including any material(s).

The surface of the work W may be coated with a film made of a material different from the work W. In this case, the surface of the film formed as a coating on the surface of the work W may be a surface to be processed by the processing apparatus 1. Even in this case, the processing apparatus 1 may be considered to process the work W (i.e., process the work W coated with the film).

The processing apparatus 1 irradiates the processing light EL onto the work W to process the work W. The processing light EL may be any type of light as long as it can process the work W by the irradiation onto the work W. In the present embodiment, the explanation will proceed by using an example where the processing light EL is laser light. However, the processing light EL may be any type of light other than laser light. Furthermore, the wavelength of the processing light EL may be any wavelength as long as it can process the work W by the irradiation onto the work W. For example, the processing light EL may be visible light or invisible light (e.g., at least one of infrared light, ultraviolet light, extreme ultraviolet light, etc.). The processing light EL includes pulsed light (e.g., pulsed light with a pulse width of sub-picosecond). This pulse width is the emission time of the pulsed light. However, the processing light EL need not include pulsed light. In other words, the processing light EL may be continuous light.

The processing light EL is supplied to the processing apparatus 1 from the processing light source 2 which generates the processing light EL, via a light transmission member (e.g., at least one of an optical fiber or a mirror) not shown in the drawings. The processing apparatus 1 irradiates the processing light EL, which is supplied from the processing light source 2, onto the work W. In case that the processing light EL is laser light as mentioned above, the processing light source 2 may include a laser light source (e.g., semiconductor laser such as laser diode (LD: Laser Diode)). The laser light source may include at least one of fiber laser, $CO_2$ laser, YAG laser, excimer laser, etc. However, in case that the processing light EL is not laser light, the processing light source 2 may include any light source (e.g., at least one of LED (Light Emitting Diode), discharge lamp, etc.).

The processing apparatus 1 may perform a removal processing to remove a part of the work W by irradiating the processing light EL onto the work W. For example, the processing apparatus 1 may perform a removal processing to remove a part of the work W by using a principle of thermal processing. Specifically, when the processing light EL is irradiated onto the surface of the work W, energy of the processing light EL is transmitted to an irradiated portion of the work W onto which the processing light EL has been irradiated, and to a proximate portion of the work W that is in proximity to the irradiated portion. When heat caused by the energy of the processing light EL is transmitted, the heat caused by the energy of the processing light EL melts a material that constitutes the irradiated portion and the proximate portion of the work W. The melted material disperses as droplets. Alternatively, the melted material evaporates by the heat caused by the energy of the processing light EL. As a result, the irradiated portion and the proximate portion of the work W are removed. When conducting the thermal processing, the processing light EL may contain a pulsed light with a pulse width of milliseconds or longer or continuous light.

On the other hand, depending on the characteristics of the processing light EL, the processing apparatus 1 may perform a removal processing to remove a part of the work W by using the principle of non-thermal processing (e.g., ablation processing). That is, the processing apparatus 1 may perform non-thermal processing (e.g., ablation processing) against the work W. When a light that is high in photon density (in other words, fluence) is used as the processing light EL, the material constituting the irradiated portion and the proximate portion of the work W evaporates and scatters instantly. That is, the material constituting the irradiated portion and the proximate portion of the work W evaporates and scatters within a time that is sufficiently shorter than the thermal diffusion time of the work W. In this case, the material constituting the irradiated portion and the proximate portion of the work W may be released from the work W as at least one of ion, atom, radical, molecule, cluster, or solid fragment. When non-thermal processing is conducted, the processing light EL may include a pulsed light with a pulse width of sub-picosecond (or in some cases, sub-nanosecond or sub-femtosecond). In the case of using a pulsed light with a pulse width of sub-picosecond (or in some cases, sub-nanosecond or sub-femtosecond) as the processing light EL, the material constituting the irradiated portion and the proximate portion of the work W may sublimate without going through a melted condition. Therefore, it becomes possible to process the work W, while minimizing the effect of heat caused by energy of the processing light EL on the work W.

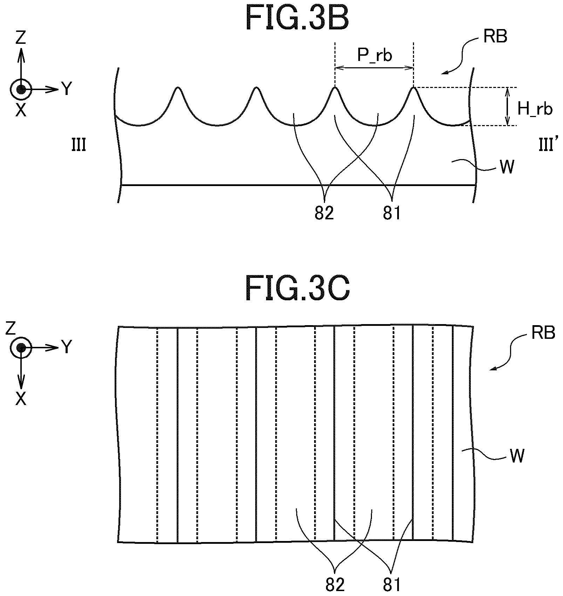

In the present embodiment, the processing apparatus 1 may form a riblet structure RB (see FIG. 3, etc.) on the surface of the work W by conducting the removal processing. The processing for forming the riblet structure RB may be referred to as riblet processing. In other words, the processing apparatus 1 may perform the riblet processing on the surface of the work W.

The riblet structure RB may include an uneven structure that is capable of reducing the resistance (in particular, at least one of frictional resistance or turbulent frictional resistance) of the surface of the work W against the fluid. Therefore, the riblet structure RB may be formed on the work W having a member disposed or located in the fluid. In other words, the riblet structure RB may be formed on the work W having a member that moves relative to the fluid. The "fluid" mentioned here means a medium (e.g., at least one of gas or liquid) flowing relative to the surface of the work W. For example, in case that the surface of the work W moves relative to the medium in a condition where the medium itself stands still, this medium may be referred to as fluid. The condition where the medium stands still may mean a condition where the medium stands still relative to a predetermined reference object (e.g., the ground surface).

In case that the riblet structure RB including a structure capable of reducing resistance (in particular, at least one of frictional resistance or turbulent frictional resistance) of the surface of the work W relative to fluid is formed on the work W, the work W becomes easier to move relative to fluid. This reduces the resistance that hinders the movement of the work W relative to the fluid, thereby leading to energy saving. That is, it becomes possible to manufacture a turbine blade as one example of the work W that is environmentally friendly. With this, it is possible to meet Goal 7 "Energy for all and clean" of Sustainable Development Goals (SDGs) led by the United Nations and to contribute to Target 7.3 "By 2030, double the global rate of improvement in energy efficiency".

The riblet structure RB may be formed on a work W other than the turbine blade. One example of the work W on which the riblet structure RB is formed may be at least one of a turbine vane, which may be referred to as a stator blade, a fan, an impeller, a propeller, or a pump. A fan is a member (typically a rotating body) to form a flow of gas and is used for blowers, etc. An impeller is a member used for, for example, pumps, and rotatable so that the pump generates a force to discharge (or suck out) fluid. A propeller is, for example, a member (typically, a rotating body) to convert the rotational power from a prime mover including at least one of engine or motor to propulsion power for a moving object including at least one of airplane, ship, etc. Another example of the work W on which the riblet structure is formed may be a body (e.g., airframe or hull) of a moving object including at least one of airplane, ship, etc.

Now, the riblet structure RB is explained with reference to FIGS. 3A, 3B, and 3C. As shown in FIGS. 3A, 3B, and 3C, the riblet structure RB may have a structure including raised structure bodies 81. The raised structure bodies 81 extend in a first direction along the surface of the work W and are arranged in a second direction that is along the surface of the work W and crosses the first direction. In other words, the riblet structure RB may have a structure including the plurality of raised structure bodies 81 that are formed to respectively extend in the first direction and are aligned in the second direction. In an example shown in FIGS. 3A, 3B, and 3C, the riblet structure RB has a structure including the raised structure bodies 81 that respectively extend in the X-axis direction and are arranged in the Y-axis direction relative to each other.

The raised structure bodies 81 are structure bodies that project along directions that cross both of the first direction (direction in which the raised structure bodies 81 extend) and the second direction (direction in which the raised structure bodies 81 are arranged). Each of the raised structure bodies 81 is a structure body that projects from the surface of the work W. In an example shown in FIGS. 3A, 3B, and 3C, the raised structure body 81 projects in the Z-axis direction. The raised structure body 81 may have a projection-shaped structure, with a projection(s) relative to the surface of the work W. The raised structure body 81 may have an elevated structure with an elevation(s) relative to the surface of the work W. The raised structure body 81 may have a mountain-shape structure with a mountain(s) relative to the surface of the work W. Between adjacent raised structure bodies 81, there is formed a valley structure 82 that is recessed relative to the surrounding. Therefore, the riblet structure RB may have a structure including the valley structure 82 that extend in the first direction along the surface of the work W and are arranged along the surface of the work W in the second direction crossing the first direction. In other words, the riblet structure RB may have a structure including the plurality of valley structures 81 that respectively extend in the first direction and are aligned along the second direction. In an example shown in FIGS. 3A, 3B, and 3C, the riblet structure RB has a structure including the valley structures 82 that extend in the X-axis direction and are arranged in the Y-axis direction. The valley structure 82 may be referred to as a valley-shaped structure body.

The raised structure body 81 may be regarded as a structure projecting from the valley structure 82. The raised structure body 81 between adjacent two valley structures 8 2 may be regarded as a structure that forms a projection-shaped structure, a raised-shaped structure, or a mountain-shaped structure. The valley structure 82 may be regarded as being a structure that is sunken from the raised structure body 81. The valley structure 82 may be regarded as a structure that forms a valley-shaped structure between adjacent two raised structure bodies 81. The valley structure 82 may be referred to as a valley-like structure body.

At least one height H_rb of the plurality of raised structure bodies 81 may be set at a height that is determined in accordance with a pitch P_rb of the raised structure bodies 81. For example, at least one height H_rb of the plurality of raised structure bodies 81 may be equal to or less than the pitch P_rb of the raised structure bodies 81. For example, at least one height H_rb may be a half or less of the pitch P_rb of the raised structure bodies 81. As an example, the pitch P_rb of the raised structure bodies 81 may be greater than 5 $\mu$m and less than 200 $\mu$m. In this case, at least one height H_rb may be greater than 2.5 $\mu$m and less than 100 $\mu$m.

For processing of the riblet structure RB on the work W, as shown in FIGS. 1 and 2, the processing apparatus 1 includes the processing head 11, a head drive system 12 (the self-propelled driver 101 and the articulated robot 102 in an example of FIG. 1), the stage 13, and a stage drive system 14. The processing head 11 irradiates the processing light EL from the processing light source 2 onto the work W. The processing head 11 includes a processing optical system 15 for irradiating the processing light EL onto the work W. The processing head 11 irradiates the processing light EL onto the work W through the processing optical system 15.

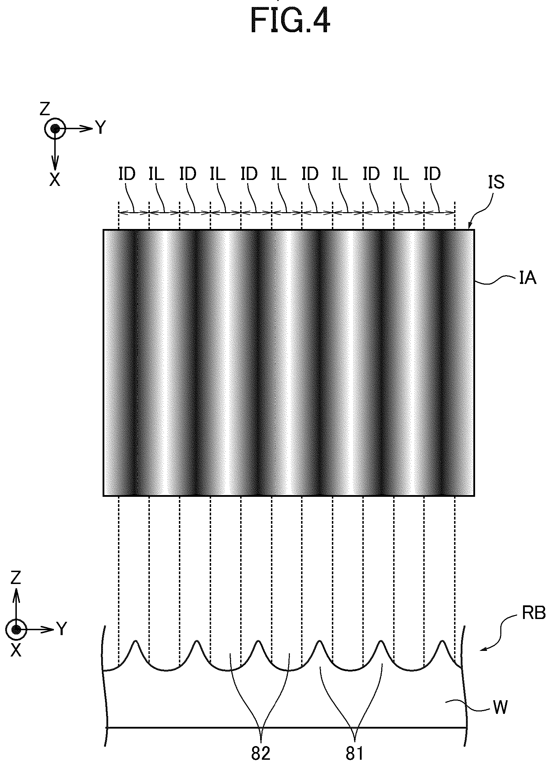

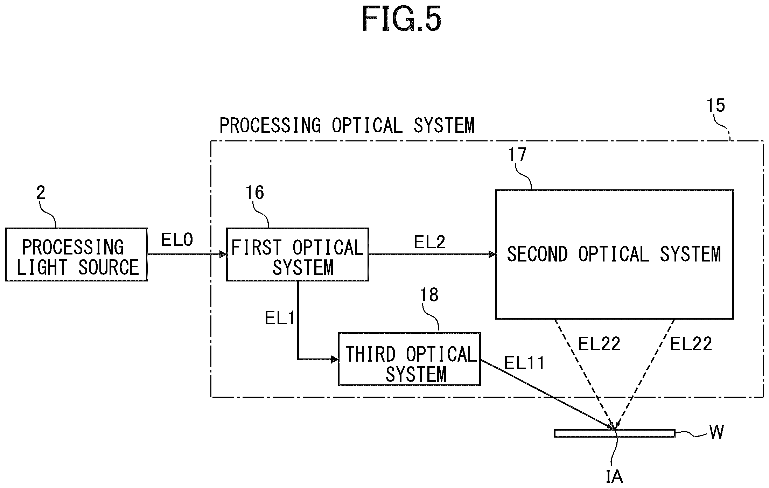

In the present embodiment, the processing optical system 15 may form the riblet structure RB onto the surface of the work W by forming interference fringes IS (see FIG. 4, etc.) on the surface of the work W. Specifically, the processing optical system 15 irradiates a plurality of processing lights (two processing lights EL in the example shown in FIG. 1) generated by splitting the processing light EL from the processing light source 2, onto the work W from different incident directions, respectively. As a result, the plurality of processing lights EL interfere with each other, generating interference light. In this case, it may be regarded that the processing optical system 15 substantially irradiates the interference light generated by the interference of the plurality of processing lights EL, onto the work W. As a result, the interference fringes IS caused by the interference light are formed on the surface of the work W. Since a detailed structure of the processing optical system 15 is described hereinafter in detail with reference to FIG. 5, etc., its explanation is omitted here.

One example of the interference fringes IS is shown in FIG. 4. The interference fringes IS may be fringes including bright parts IL and dark parts ID. The bright part IL may include a part of the interference fringes IS, where fluence is greater (i.e., higher) than a predetermined amount. The bright part IL may include a part that is irradiated with a light segment of the interference light, which forms the interference fringes IS, where the fluence is greater than a predetermined amount. The dark part ID may include a part of the interference fringes IS, where fluence is less (i.e., lower) than a predetermined amount. The dark part ID may include a part that is irradiated with a light segment of the interference light, which forms the interference fringes IS, where the fluence is less than a predetermined amount. The fluence of the bright part IL may be greater than that of the dark part ID.

FIG. 4 further shows a relation between the interference fringes IS and the riblet structure RB. The bright part IL may be used mainly for forming the valley structure 82. In this case, the processing optical system 15 may form the valley structures 82, which constitute the riblet structure RB, on the surface of the work W, by forming, on the surface of the work W, the bright parts IL included in the interference fringes IS to remove a portion of the work W. The processing optical system 15 may form the valley structure 82 on the surface of the work W by irradiating a light segment of the interference light, which forms the bright parts IL, onto the surface of the work W to remove a portion of the work W. The processing optical system 15 may form the valley structures 82 on the surface of the work W by using the processing light EL, which reaches the bright parts IL (i.e., using a light segment of the processing light EL, which reaches the bright parts IL), to remove a portion of the work W. In this case, the interference fringes IS may include fringes where the bright parts IL extend along the direction (X-axis direction in the example of FIG. 4), in which the valley structure 82 extends, and are arranged along the direction (Y-axis direction (fringe pitch direction) in the example of FIG. 4) in which the valley structures 82 are aligned. In other words, the interference fringes IS may include fringes where the plurality of bright parts IL extend in the direction (X-axis direction in the example of FIG. 4), in which the valley structures 82 extend, and are aligned along the direction (Y-axis direction (fringe pitch direction) in the example of FIG. 4) in which the valley structures 82 are aligned.

The dark part ID may be used mainly for forming the raised structure body 81. In this case, the processing optical system 15 may form the raised structure bodies 81, which constitute the riblet structure RB, on the surface of the work W by forming the dark parts ID, included in the interference fringes IS, on the surface of the work W to remove a portion of the work W (or, in some cases, not to remove a portion of the work W). The processing optical system 15 may form the raised structure body 81 on the surface of the work W by irradiating a light segment of the interference light, which forms the dark parts ID, onto the surface of the work W to remove a portion of the work W. The processing optical system 15 may form the raised structure bodies 81 on the surface of the work W by using the processing light EL, which reaches the dark parts ID (i.e., using a light segment of the processing light EL, which reaches the dark parts ID), to remove a portion of the work W. In this case, the interference fringes IS may include the plurality of fringes in which the dark parts ID extending along the direction (X-axis direction in the example of FIG. 4), in which the raised structure body 81 extends, are arranged along the direction (Y-axis direction in the example of FIG. 4) in which the raised structure bodies 81 are arranged. In other words, the interference fringes IS may include fringes in which the plurality of dark parts ID extending in the direction (X-axis direction in the example of FIG. 4), in which the raised structure bodies 81 extend, are aligned along the direction (Y-axis direction in the example of FIG. 4) in which the raised structure bodies 81 are aligned.

As shown in FIGS. 1 and 2, the head drive system 12 (the self-propelled driver 101 and the articulated robot 102) moves the processing head 11 along at least one of X-axis direction, Y-axis direction, or Z-axis direction under the control of the controller 3. The head drive system 12 may move the processing head 11 along at least one of θX direction, θY direction, or θZ direction besides or as an alternative to at least one of X-axis direction, Y-axis direction, or Z-axis direction. When the processing head 11 moves, a positional relation between the stage 13 (and the work W placed on the stage 13) and the processing head 11 changes. As a result, a positional relation between an interference area IA (see FIG. 4), where the processing head 11 forms the interference fringes IS on the work W, and the stage 13 and the work W changes. In other words, it is possible to move the interference area IA on the work W. On the stage 13, the work W is placed. The stage 13 need not hold the work W placed on the stage 13. In other words, the stage 13 need not add a holding power for holding the work W, to the work W placed on the stage 13. Alternatively, the stage 13 may hold the work W placed on the stage 13. In other words, the stage 13 may add a holding power for holding the work W, to the work W placed on the stage 13. For example, the stage 13 may hold the work W by vacuum and/or electrostatic suction. Alternatively, a jig for holding the work W may hold the work W, and the stage 13 may hold the jig holding the work W.

The stage drive system 14 moves the stage 13 under the control of the controller 3. Specifically, the stage drive system 14 moves the stage 13 relative to the processing head 11. For example, under the control of the controller 3, the stage drive system 14 may move the stage 13 along at least one of X-axis direction, Y-axis direction, Z-axis direction, θX direction, θY direction, or θZ direction. Moving the stage 13 along at least one of θX direction, θY direction, or θZ direction may be regarded as being equivalent to changing the posture of the stage 13 (and the work W placed on the stage 13) around at least one of X-axis, Y-axis, or Z-axis. Alternatively, moving the stage 13 along at least one of θX direction, θY direction, or θZ direction may be regarded as being equivalent to rotating (or rotationally moving) the stage 13 around at least one of X-axis, Y-axis, or Z-axis.

When the stage 13 moves, a positional relation between the stage 13 (and the work W placed on the stage 13) and the processing head 11 changes. As a result of the stage 13, the work W and the processing, a positional relation between the interference area IA (see FIG. 4), where the processing head 11 forms the interference fringes IS on the work W, and the stage 13 and the work W changes. In other words, the interference area IA moves on the work W.

The processing system SYS may change a positional relation between the work W placed on the stage 13 and the processing head 11 by moving both of the stage 13 and the processing head 11 under the control of the controller 3. Furthermore, the processing system SYS may move the interference fringes IS relative to the work W without moving the processing head 11 and the stage 13.

The controller 3 controls operation of the processing system SYS. For example, the controller 3 may generate the processing control information for processing the work W and may control the processing apparatus 1 based on the processing control information to process the work W in accordance with the generated processing control information. In other words, the controller 3 may control processing of the work W.

The controller 3 may include, for example, a processor and a storage. The processor may include, for example, at least one of CPU (Central Processing Unit) or GPU (Graphics Processing Unit)). The controller 3 functions as a device that controls the operation of the processing system SYS by having the processor execute a computer program. This computer program is a computer program to make the controller 3 (e.g., processor) perform (i.e., execute) the operations that should be performed by the controller 3. In other words, the computer program is designed to enable the controller 3 to cause the processing system SYS to perform the operations described later. The computer program to be executed by the processor may be recorded in the storage (i.e., storage medium) of the controller 3 or may be recorded in any storage medium (e.g., hard disk or semiconductor memory) that is built in the controller 3 or may be externally attached to the controller 3. Alternatively, the processor may download the computer program to be executed from a device outside of the controller 3 via a network interface.

The controller 3 need not be provided inside the processing system SYS. For example, the controller 3 may be installed outside the processing system SYS as a server, etc. In this case, the controller 3 and the processing system SYS may be connected by a wired and/or wireless network (or data bus and/or communication lines). As a wired network, it is optional to use a network that uses a serial bus interface represented by, for example, at least one of IEEE1394, RS-232x, RS-422, RS-423, RS-485, or USB. As a wired network, it is optional to use a network that uses a parallel bus interface. As a wired network, it is optional to use a network that uses an interface based on Ethernet (registered trademark) represented by at least one of 10BASE-T, 100BASE-TX, or 1000BASE-T. As a wireless network, it is optional to a network using radio waves. As one exemplary network using radio waves, it is possible to cite a network based on IEEE802.1x (e.g., at least one of wireless LAN or Bluetooth (registered trademark)). As a wireless network, it is optional to use a network using infrared rays. As a wireless network, it is optional to use a network using optical communication. In this case, the controller 3 and the processing system SYS may be configured to be able to send and receive various types of information via the network. The controller 3 may be able to send information, such as commands, control parameters, etc., to the processing system SYS via the network. The processing system SYS may include a receiver that receives information, such as commands, control parameters, etc., from the controller 3 via the network. Alternatively, it is optional to provide a first controller, which performs a part of the processing performed by the controller 3, inside the processing system SYS, and a second controller, which performs another part of the processing performed by the controller 3, outside the processing system SYS.

In the controller 3, an arithmetic model that can be constructed by machine learning may be implemented by the processor executing a computer program. As an exemplary arithmetic model that can be constructed by machine learning, it is possible to cite, for example, an arithmetic model including a neural network (so-called Artificial Intelligence (AI)). In this case, learning of the arithmetic model may include learning of parameters (at least one of weight or bias) of the neural network. The controller 3 may control the operation of the processing system SYS by using an arithmetic model. In other words, the operation to control the operation of the processing system SYS may include the operation to control the operation of the processing system SYS by using an arithmetic model. The controller 3 may implement an arithmetic model that has already been constructed by offline machine learning using teacher data. The arithmetic model implemented in the controller 3 may be updated by online machine learning on the controller 3. Alternatively, besides or as an alternative to the arithmetic model implemented in the controller, the controller 3 may control the operation of the processing system SYS by using an arithmetic model that has been implemented in an external device of the controller 3 (i.e., a device provided outside the processing system SYS).

As a recording medium for recording a computer program to be executed by the processor, it is optional to use at least one of optical disk such as CD-ROM, CD-R, CD-RW, flexible disk, MO, DVD-ROM, DVD-RAM, DVD-R, DVD+R, DVD-RW, DVD+RW, Blue-ray(registered trademark); magnetic medium such as magnetic tape; magneto-optical disk; semiconductor memory such as USB memory; or any other medium capable of storing programs. The recording medium may include a device capable of recording computer programs (e.g., a general-purpose or dedicated device in which the computer program is implemented in the form of at least one of software, firmware, etc.). Furthermore, each processing or function, included in the computer program, may be realized by a logical processing block that is realized in the controller 3 (i.e., a computer) by the controller 3 executing the computer program, may be realized by hardware such as a predetermined gate array (FPGA and ASIC) provided by the controller 3, or may be realized in the form of a mixture of a logical processing block(s) and a partial hardware module(s) that realizes some elements of the hardware.

(2) Processing Optical System 15

(2-1) Outline of Processing Optical System 15

Next, the processing optical system 15 that forms the interference fringes IS on the surface of the work W is explained. As shown in FIG. 5, the processing optical system 15 includes a first optical system 16, a second optical system 17, and a third optical system 18. In the processing optical system 15, the first optical system 16 splits the processing light EL, which is generated by the processing light source 2, into two processing lights EL, and one of them is irradiated from the third optical system 18 onto the work W. In the processing optical system 15, the second optical system 17 splits the other of the split processing lights EL to generate a plurality of processing lights EL (two processing lights

**EP 4 523 835 A1**

EL in the example shown in FIG. 1) and irradiate them onto the work W from different directions, respectively. Upon this, the plurality of processing lights EL generated by the second optical system 17 interfere with each other, thereby generating the interference light. Therefore, it is optional to regard that the processing optical system 15 substantially irradiates the interference light, which is generated by the interference of the plurality of processing lights EL, onto the work W. Thus, in the processing optical system 15, the interference fringes IS caused by the interference light are formed by the second optical system 17 in an interference area IA on the surface of the work W, and the processing light EL is irradiated from the third optical system 18 onto the interference area IA.

In the following explanation, each processing light EL is distinguished by referring to it, as follows. First, the processing light EL generated by the processing light source 2 is referred to as a processing light EL0. A light that is separated from the processing light EL0 by the first optical system 16 and then is directed toward the third optical system 18 is referred to as a first processing light EL1. A light that is separated from the processing light EL0 by the first optical system 16 and then is directed toward the second optical system 17 is referred to as a second processing light EL2. Lights that are split from the second processing light EL2 by the second optical system 17 and then are irradiated onto the work W are referred to as second processing lights EL22. The first processing light EL1 from the first optical system 16, which is irradiated by the third optical system 18 onto the work W, is referred to as a first processing light EL11.

Therefore, the first optical system 16 can also be referred to as a splitting optical system, since it splits the processing light EL0 from the processing light source 2 to generate the first and second processing lights EL1, EL2 as pulsed lights of which emission durations at least partially overlap. The second optical system 17 can also be referred to as an interference fringe formation optical system, which forms the interference fringes IS on the surface of the work W by irradiating the plurality of second processing lights EL22, which have been generated by splitting the second processing light EL2, onto the work W from different incident directions respectively. The third optical system 18 can also be referred to as an irradiation optical system, which irradiates the first processing light EL11 from the first processing light EL1 toward the interference area IA in which the interference fringes IS are formed.

As mentioned above, the processing optical system 15 forms the interference fringes IS by irradiating the plurality of second processing lights EL22 from the second optical system 17 onto the work W from different incident directions, respectively. The number of the processing lights EL22 may be an integer of 2 or more, as long as they form the interference fringes IS.

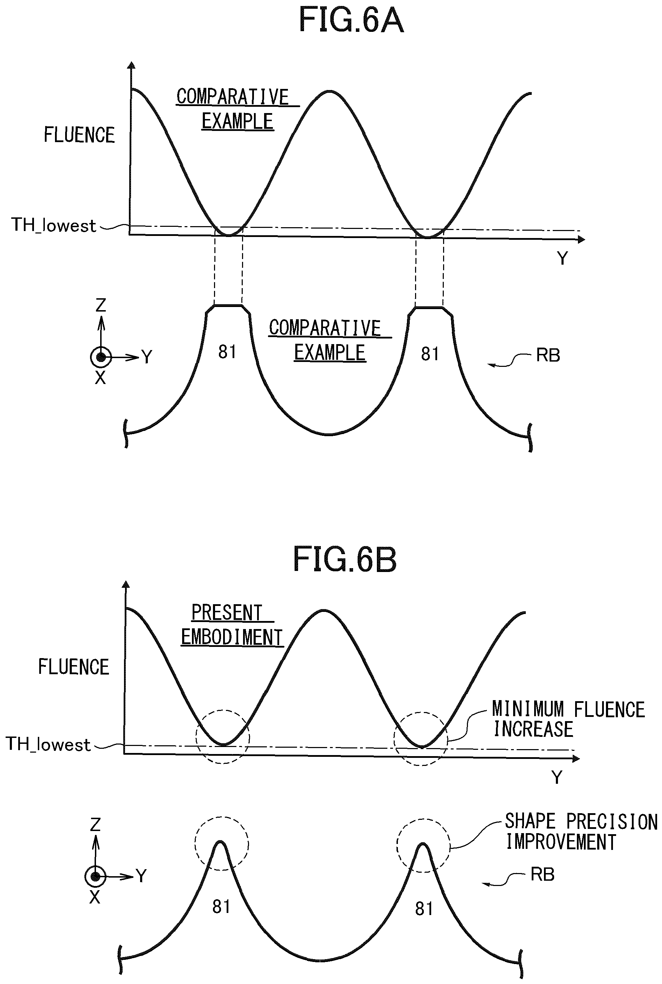

In the present embodiment where the first processing light EL11 is irradiated from the third optical system 18 by an addition to the interference area IA by the plurality of second processing lights EL22, the fluence distribution of the processing light changes in the interference area IA where the interference fringes IS are formed on the surface of the work W, as compared with the comparative example where the first processing light EL11 is not irradiated. Specifically, FIG. 6A shows the fluence distribution of the processing light in the comparative example, and FIG. 6B shows the fluence distribution of the processing light in the present embodiment. As shown in FIGS. 6A and 6B, the minimum fluence of the processing light becomes higher in the present embodiment, as compared with the comparative example. The minimum fluence may be the minimum value of the fluence of the processing light in the dark part ID of the interference fringes IS. The minimum fluence may be the minimum value of the fluence of the processing light that reaches the dark part ID of the interference fringes IS. The reason why the minimum fluence of the present embodiment becomes larger than that of the comparative example is that an overlapped irradiation of the plurality of second processing lights EL22 and the first processing light EL11 provides the processing light with a light component that does not affect the formation of the interference fringes IS, but affects the fluence distribution. In other words, the processing optical system 15 provides the interference light with a light component (so-called DC component of the fluence distribution of the interference fringes IS) that does not affect the formation of the interference fringes IS, but affects the fluence distribution, by an overlapped irradiation of the plurality of second processing lights EL22 and the first processing light EL11. The processing optical system 15 provides the interference light with the DC component of the fluence distribution of the interference fringes IS by an overlapped irradiation of the plurality of second processing lights EL22 and the first processing light EL11, without affecting a contrast component (i.e., a component affecting shading (tone) of the interference fringes IS) of the fluence distribution that affects the formation of the interference fringes IS.

Conversely, the processing optical system 15 may irradiate the first processing light EL11 to overlap the plurality of second processing lights EL22, so as not to affect the formation of the interference fringes, but to provide the interference light with a light component that affects the fluence distribution. The processing optical system 15 may irradiate the first processing light EL11 to overlap the plurality of second processing lights EL22, so as not to affect the formation of the interference fringes IS, but to provide the interference light with a light component that increases the minimum fluence. The first processing light EL11 (its fluence), which is irradiated to overlap the plurality of second processing lights EL22, may be set so as not to affect the formation of the interference fringes IS, but to make it possible to provide the interference light with a light component that affects the fluence distribution. The first processing light EL11 (its fluence), which is irradiated to overlap the second processing lights EL22, may be determined, based on at least one of a characteristic of the processing light EL0, a characteristic of the interference light, a characteristic of the work W, or a characteristic of the riblet structure RB. The first processing light EL11 (its fluence), which is irradiated to overlap the second processing lights EL22, may be determined, based on the result of an experiment or simulation that forms the riblet structure RB on the work W by forming the interference fringes IS.

As shown in FIG. 6A, in the riblet structure RB formed in the comparative example, the shape of a tip of the raised structure body 81 may become a flat shape. This is because, as mentioned above, the minimum fluence is relatively small in the comparative example. Therefore, as shown in FIG. 6A, in the comparative example, there is a relatively high possibility that the fluence of at least a portion of the dark part ID of the interference fringes IS becomes smaller than the lower limit value TH_lowest of the fluence at which the work W can be processed (that is, a part of the work W can be removed). As a result, there is a relatively high possibility that at least a portion of a part of the work W, where the dark part ID is formed, is not processed, thereby resulting in a flat shape of the tip of the raised structure body 81. Considering the characteristics of the riblet structure RB, in case that the shape of the tip of the raised structure body 81 is flat, as compared with the case that the shape of the tip of the raised structure body 81 is sharp, there is a possibility that the effect of reducing the resistance of the surface of the work W against fluid decreases.

On the other hand, as shown in FIG. 6B, in the riblet structure RB formed in the present embodiment, as compared with the comparative example, there is a low possibility that the shape of the tip of the raised structure body 81 becomes flat. This is because, as mentioned above, in the present embodiment, the minimum fluence is relatively large. Therefore, as shown in FIG. 6B, in the present embodiment, there is a relatively low possibility that the fluence of at least a portion of the dark part ID of the interference fringes IS becomes smaller than the lower limit value TH_lowest of the fluence at which the work W can be processed. In other words, there is a relatively high possibility that the fluence of at least a portion of the dark part ID of the interference fringes IS is set at a fluence at which the work W can be processed. As a result, there is a relatively high possibility that the part of the work W, where the dark part ID of the interference fringes IS is formed, is processed, thereby resulting in the shape of the tip of the raised structure body 81 becoming closer to or conforming to an ideal shape (e.g., sharp shape). In other words, in the present embodiment, as compared with the comparative example, the precision of the shape of the riblet structure RB is improved. As a result, in the present embodiment, there is a relatively high possibility of forming a riblet structure RB that is relatively high in the effect of reducing the resistance of the surface of the work W against the fluid.

Thus, as compared with the comparative example, the processing apparatus 1 of the present embodiment can make the shape of the riblet structure RB become closer to or conform to an ideal shape. As compared with the comparative example, the processing apparatus 1 can form a riblet structure RB having a shape that is close to or conforms to an ideal shape. In this case, the processing apparatus 1 may be regarded as adjusting the shape of the riblet structure RB such that the shape of the riblet structure RB to be formed on the work W becomes a predetermined shape that is closer to an ideal shape than the shape of the riblet structure RB to be formed in the comparative example, by irradiating the first processing light EL11 to overlap the plurality of second processing lights EL22. As a result, the processing apparatus 1 can enjoy the effect of being capable of properly processing the work W to form a riblet structure RB having a shape that is close to or conforms to an ideal shape.

Considering that the above effect can be properly enjoyed when the minimum fluence of the processing light becomes equal to or greater than the lower limit value TH_lowest of the fluence at which the work W can be processed, the processing optical system 15 may set the first processing light EL11 (its fluence) that is irradiated to overlap the plurality of second processing light EL22, such that the minimum fluence of the processing light is set to be equal to or greater than the lower limit value TH_lowest. The processing optical system 15 may set the first processing light EL11 (its fluence) that is irradiated to overlap the plurality of second processing lights EL22, such that the minimum fluence of the processing light is set at a fluence at which the work W can be processed. The first processing light EL11 (its fluence), which is irradiated to overlap the plurality of second processing lights EL22, may be set such that the minimum fluence of the processing light is set at a fluence at which the work W can be processed. As a result, the above effect becomes properly enjoyable.

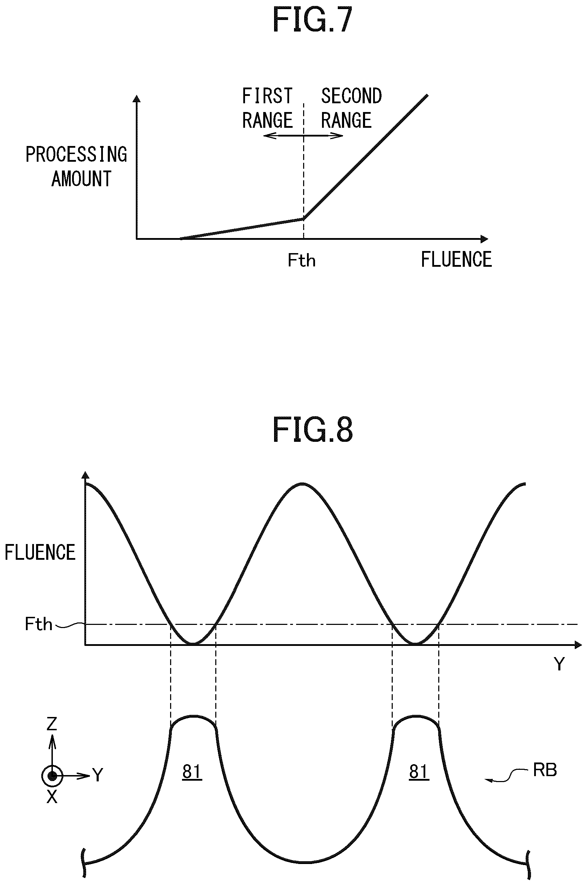

Depending on the characteristics of the work W, there is a possibility that a relation between the fluence of the light that is irradiated onto the work W and the amount of processing of the work W (for example, the amount of removal per unit time, as one example the amount of processing per one pulse) changes, depending on the fluence. For example, depending on the characteristics of the work W, as shown in FIG. 7, there is a possibility that a first relation between the fluence and the amount of processing of the work W, in case that the fluence of the processing light irradiated onto the work W (or the fluence of the plurality of second processing lights EL22 to generate the interference light and the fluence of the first processing light EL11 to be overlapped thereon) is smaller than a predetermined threshold Fth, becomes different from a second relation between the fluence and the amount of processing of the work W in case that the fluence of the processing light (interference light) irradiated onto the work W is larger than the predetermined threshold Fth. In this case, as shown in an upper part of FIG. 7, if the fluence of the processing light changes across both a first range smaller than the predetermined threshold Fth and a second range larger than the predetermined threshold Fth, the amount of processing in a first part of the work W, where a light portion of the processing light having a fluence smaller than the predetermined threshold Fth is irradiated, becomes different from the amount of processing in a second part of the work W, where a light portion of the processing light having a fluence larger than the predetermined threshold Fth is irradiated. In the example shown in FIG. 7, the ratio of the increase in the amount of processing to the increase in fluence in the second relation is larger than the ratio of the increase in the amount of processing to the increase in fluence in the first relation. In this case, the amount of processing in the first part of the work W, where a light portion of the processing light having a fluence smaller than the predetermined threshold Fth is irradiated, becomes smaller than the amount of processing in the second part of the work W, where a light portion of the processing light having a fluence larger than the predetermined threshold Fth is irradiated. As a result, there is a possibility that the amount of processing in the first part of the work W becomes insufficient and/or the amount of processing in the second part of the work W becomes excessive. Therefore, there is a possibility that the precision of the shape of the riblet structure RB to be formed on the work W becomes worse. For example, as shown in a lower part of FIG. 8, there is a possibility that the shape of the tip of the raised structure body 81, which is formed mainly by a light portion of the processing light where the fluence is relatively small (e.g., a light portion irradiated onto the dark part ID), becomes flat.

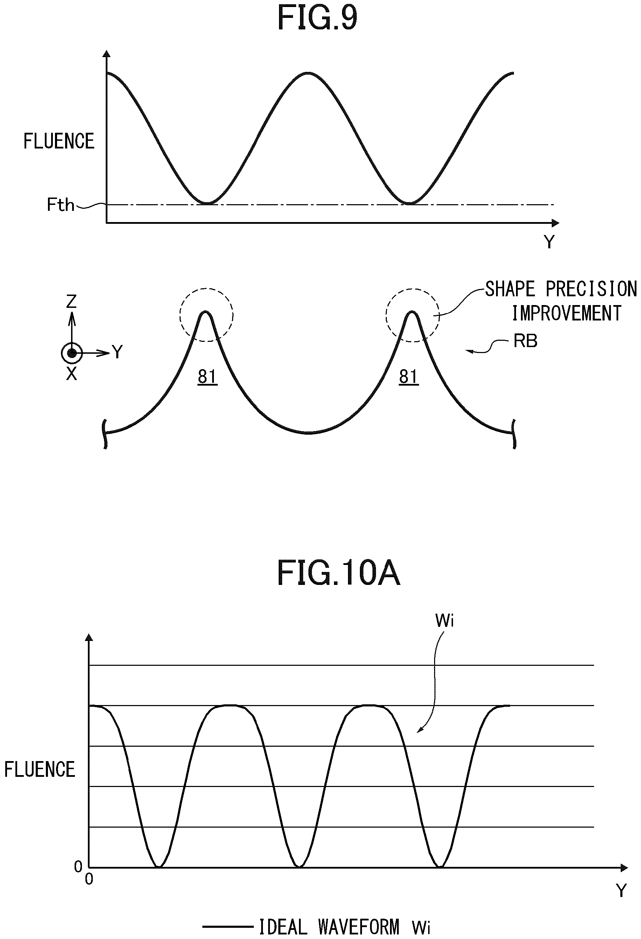

Therefore, as shown in an upper part of FIG. 9, the processing optical system 15 may set the first processing light EL11 (its fluence) irradiated to overlap the plurality of second processing lights EL22, such that the minimum fluence of the interference light becomes equal to or greater than the predetermined threshold Fth. Alternatively, the processing optical system 15 may set the first processing light EL11 (its fluence) irradiated to overlap the plurality of second processing lights EL22, such that the minimum fluence of the interference light becomes equal to or greater than a threshold that is obtained by adding a predetermined margin to the predetermined threshold Fth. In other words, the processing optical system 15 may set the first processing light EL11 (its fluence) irradiated to overlap the plurality of second processing lights EL22, such that the minimum fluence of the interference light becomes equal to or greater than a threshold to be set based on the predetermined threshold Fth. In this case, as shown in a lower part of FIG. 9, there is a relatively high possibility that the shape of the tip of the raised structure body 81, which is formed mainly by a light portion of the processing light where the fluence is relatively small (e.g., a light portion irradiated onto the dark part ID), becomes an ideal shape. As a result, the above effect becomes properly enjoyable.

In other words, an object (the work W in the embodiment) has a characteristic in which a first relation between the fluence and the amount of processing, in case that the fluence of each processing light is smaller than a predetermined threshold, becomes different from a second relation between the fluence and the amount of processing, in case that the fluence of each processing light is larger than the predetermined threshold. The ratio of the increase in the amount of processing to the increase in fluence of the processing light in the second relation is larger than the ratio of the increase in the amount of processing to the increase in fluence of the processing light in the first relation. The second optical system 17 sets the first processing light EL from the third optical system 18, such that the minimum fluence of the processing light reaching the dark part of the interference fringes becomes equal to or greater than the predetermined threshold.

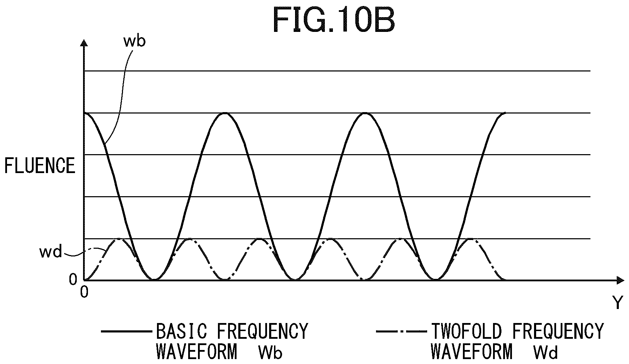

Herein, for the riblet structure RB, there is a low possibility that a mode of the processing light for obtaining an ideal shape (the shape of waveform (hereinafter also referred to ideal waveform Wi)) becomes a clean sinusoidal waveform. However, the riblet structure RB has a periodic shape. Therefore, the ideal waveform Wi also becomes periodic. Thus, the ideal waveform Wi can be shown as sinusoidal waveforms by a Fourier transform. One example of this is shown in FIGS. 10A and 10B. FIG. 10A shows an ideal waveform Wi as one example. FIG. 10B shows two waveforms (basic frequency waveform Wb and twofold frequency waveform Wd) obtained by conducting the Fourier transform on the ideal waveform Wi. Therefore, the ideal waveform Wi of FIG. 10A is one obtained by superposition of the basic frequency waveform Wb and the twofold frequency waveform Wd of FIG. 10B.

From this, the processing optical system 15 processes the work W by forming interference fringes IS (hereinafter also referred to as interference fringes IS1) showing the basic frequency waveform Wb and processes the work W by forming interference fringes IS (hereinafter also referred to as interference fringes IS2) showing the twofold frequency waveform Wd, thereby forming a riblet structure RB of ideal shape. In other words, the processing optical system 15 forms interference fringes IS that substantially show the ideal waveform Wi by using the interference fringes IS1 and the interference fringes IS2, thereby forming a riblet structure RB of ideal shape. The processing optical system 15 can also form the interference fringes IS1 and the interference fringes IS2, in place of forming the interference fringes IS showing the ideal waveform Wi, to form a riblet structure RB of ideal shape.

The ideal waveform Wi changes depending on the shape that the riblet structure RB is required to have. The number and type (multiples of frequency, amplitude, etc.) of sinusoidal waveforms obtained by the Fourier transform also change together. Therefore, it suffices that the processing optical system 15 suitably sets the shape of the basic frequency waveform Wb and the number and shape of n-fold frequency waveform Wn to be superposed on the basic frequency waveform Wb, in accordance with the ideal waveform Wi that has been set to form the required riblet structure RB. Herein, the processing optical system 15 can make a superposition of the basic frequency waveform Wb, which has been obtained by conducting the Fourier transform on the ideal waveform Wi, and at least one n-factor frequency waveform Wn, which has been obtained by conducting the Fourier transform in the same manner. Furthermore, the processing optical system 15 may make a superposition of the basic frequency waveform Wb, which has been obtained by conducting the Fourier transform on the ideal waveform Wi, and two n-factor frequency waveforms Wn, which have been obtained by conducting the Fourier transform in the same manner. Furthermore, the processing optical system 15 may make a superposition of the basic frequency waveform Wb, which has been obtained by conducting the Fourier transform on the ideal waveform Wi, and at least three n-factor frequency waveforms Wn, which have been obtained by conducting the Fourier transform in the same manner.

From these, the processing optical system 15 splits, in the first optical system 16, the processing light EL0 from the processing light source 2 into the first and second processing lights EL1, EL2. In the processing optical system 15, the second optical system 17 generates the basic frequency waveform Wb and the plurality of n-fold frequency waveforms Wn as the second processing lights EL22 from the second processing light EL2 and irradiates them onto the work W from different incident directions, respectively, thereby forming the interference fringes IS per frequency. In the processing optical system 15, the third optical system 18 irradiates the first processing light EL1 as the first processing light EL11 to overlap each second processing light EL22 in the interference area IA where each interference fringe IS is formed. With this, while the processing optical system 15 performs a proper processing of the work W by each interference fringe IS, it can form a riblet structure RB with an ideal shape, which is similar to the case using an ideal waveform Wi, by superposing each interference fringe IS.

Here, in the interference fringes IS, the period changes according to the angle of the second processing light EL22 to interfere with. The smaller the angle, the longer the period. The larger the angle, the narrower (shorter) the period. In the interference fringes IS, the amplitude changes according to the fluence of the plurality of second processing lights EL22. Therefore, the second optical system 17 can change at least one of amplitude or period in the interference fringes IS by changing the incident angle of the plurality of second processing lights EL22 to be emitted. With this, it can form interference fringes IS of the basic frequency waveform Wb and the n-fold frequency waveform Wn. Furthermore, the second optical system 17 can adjust at least one of amplitude or period in the interference fringes IS by changing the incident angle of the plurality of second processing lights EL22 to be emitted. With this, it can make appropriate the basic frequency waveform Wb and the n-fold frequency waveform Wn.

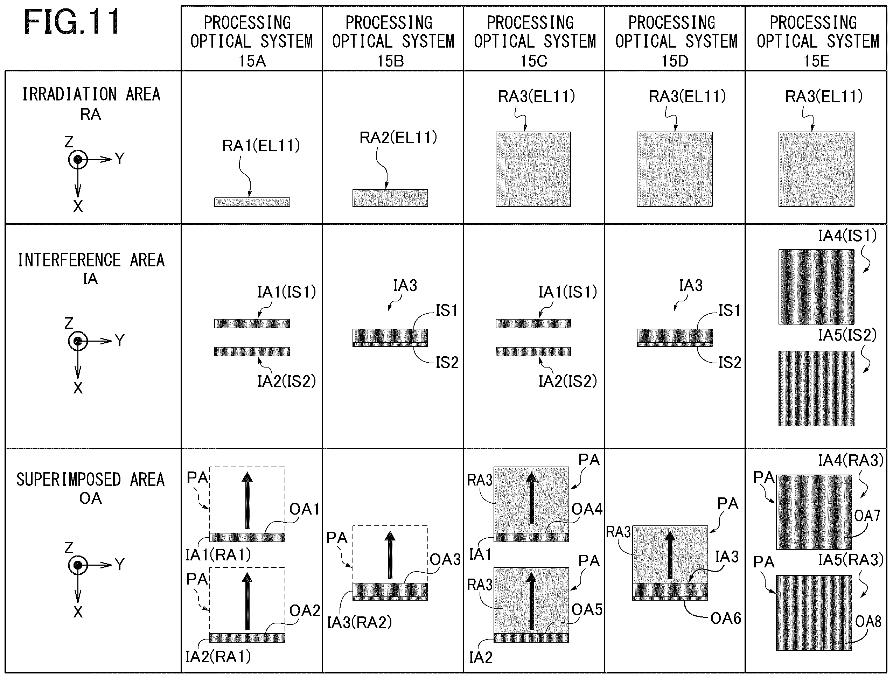

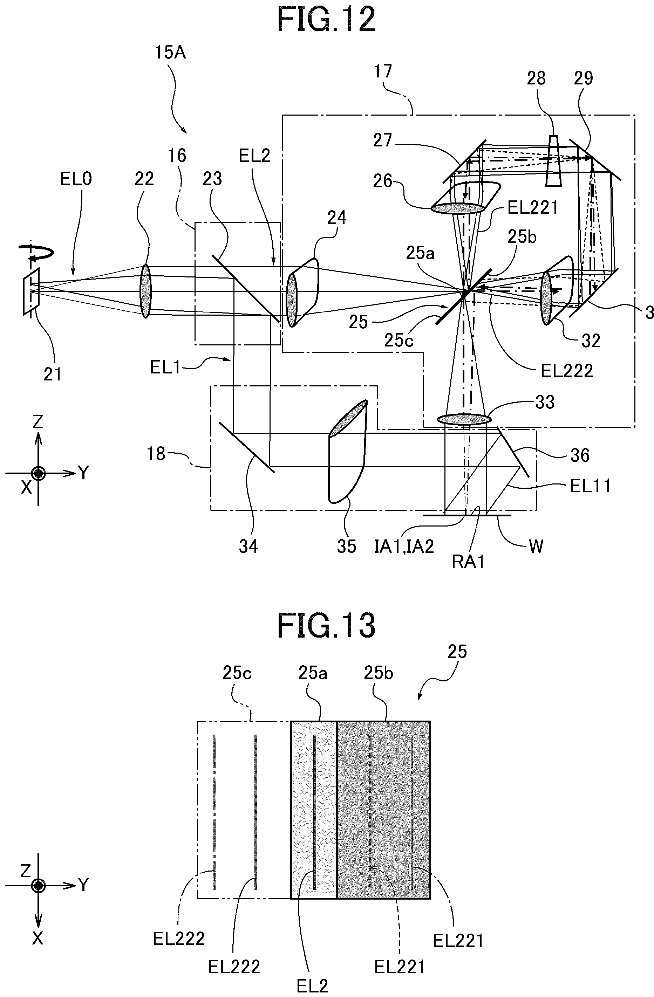

Next, five examples of the processing method by the processing optical system 15 are explained by using FIG. 11. FIG. 11 is a table prepared by arranging modes (formation conditions) of the first processing light EL11 in the irradiation area RA, of the interference fringes IS in the interference area IA, and of the superimposed area OA in the processing area PA, in the five examples. Here, the processing area PA indicates an area where the processing of the riblet structure RB is possible by the processing optical system 15 (processing head 11), that is, an area where the first processing light EL11 and the second processing lights EL22 can be irradiated. This irradiatable area includes the area, where the first processing light EL11 and the second processing lights EL22 can be irradiated at once (at the same time), and the total of the area, where the first processing light EL11 and the processing lights EL22 are irradiated by scanning or sweeping (changing the irradiation position of) the first processing light EL11 and the second processing lights EL22 by the galvanometer mirror 21 (see FIG. 12, etc.), etc. In other words, the processing area PA is an area where the work W placed on the stage 13 can be irradiated with the first processing light EL11 and the second processing lights EL22, without a relative movement of the stage 13 and the processing optical system 15 (processing head 11). In the present embodiment, this processing area PA is rectangular having a side extending in the X-axis direction and a side extending in the Y-axis. In the processing optical system 15 (processing head 11), the area, where the first processing light EL11 is irradiated by the third optical system 18, is referred to as the irradiation area RA.

In the following, in case that the interference area IA or irradiation area RA is smaller than the processing area PA, the first processing light EL11 or second processing lights EL22 are scanned over the entirety (entirety as the scanning range) of the processing area PA by using the galvanometer mirror 21. Therefore, the galvanometer mirror 21 functions as an interference fringe moving member that moves the position of the interference range IA relative to the second optical system 17 in a direction that crosses and typically is perpendicular to the optical axis of the second optical system 17. This galvanometer mirror 21 as the interference fringe moving member has a function that also moves the irradiation area RA in a direction that crosses and typically is perpendicular to the optical axis of the second optical system 17. This scanning range may be smaller than the processing area PA (may process only a part of the processing area PA). The processing area PA may be set to be smaller than an area where the first processing light EL11 or the second processing lights EL22 can actually be scanned. In this case, the scanning area may be larger than the processing area PA (the first processing light EL11 or the second processing lights EL22 may be irradiated onto an area wider than the processing area PA).

FIG. 11 shows five examples of the processing method using a processing optical system 15A, a processing optical system 15B, a processing optical system 15C, a processing optical system 15D, and a processing optical system 15E, in this order from the left side. In FIG. 11, the upper row shows modes of the irradiation area RA by the first processing light EL11, the middle row shows modes of the interference area IA (interference fringes IS) by the second processing lights EL22, and the lower row shows modes of the irradiation area RA and the interference area IA (the superimposed area OA) in the processing area PA.

In the processing method using the processing optical system 15A, as shown in the upper row, the irradiation area RA (hereinafter referred to as irradiation area RA1) of the first processing light EL11 by the third optical system 18 is made to be smaller than the processing area PA (see the lower row). In detail, in the processing method using the processing optical system 15A, the irradiation area RA1 is made to be a rectangular shape where the dimension is equal to the processing area PA in the Y-axis direction and where the dimension is smaller than the processing area PA in the X-axis direction.

In the processing method using the processing optical system 15A, as shown in the middle row, the interference area IA to form the interference fringes IS by the plurality of second processing lights EL22 from the second optical system 17 is made to be a rectangular shape that is generally equal to the irradiation area RA1 in size. In the processing method using the processing optical system 15A, in the interference area IA, the interference fringes IS1 (hereinafter referred to as interference area IA1) showing the basic frequency waveform Wb and the interference fringes IS2 (hereinafter referred to as interference area IA2) showing the twofold frequency waveform Wd are formed at different timings (time).

In the processing method using the processing optical system 15A, as shown in the lower row, there are superimposed the interference area IA1 where the interference fringes IS1 showing the basic frequency waveform Wb are formed, and the irradiation area RA1 which is formed by irradiating the first processing light EL11. In the following, an area, where the interference area IA1 and the irradiation area RA1 are superimposed, is also referred to as a superimposed area OA1. In the processing method using the processing optical system 15A, the superimposed area OA1 is scanned over the entire processing area PA. In other words, in the processing method using the processing optical system 15A, the entire processing area PA is scanned by forming the superimposed area OA1 by superimposing the interference area IA1 and the irradiation area RA1 at one end in the X-axis direction in the processing area PA and then moving the superimposed area OA1 toward the other end in the X-axis direction. Then, in the processing method using the processing optical system 15A, a superimposed area OA2 is formed by superimposing the interference area IA2 where the interference fringes IS2 showing the twofold frequency waveform Wd are formed, and the irradiation area RA1 caused by irradiating the first processing light EL11. Then, in the processing method using the processing optical system 15A, the entire processing area PA is scanned with the superimposed area OA2 including the twofold frequency waveform Wd, similar to the superimposed area OA1 including the basic frequency waveform Wb.

With this, in the processing method using the processing optical system 15A, it is possible to irradiate the entire processing area PA on the surface of the work W with the interference fringes IS1 showing the basic frequency waveform Wb and the interference fringes IS2 showing the twofold frequency waveform Wd. Upon this, in the processing method using the processing optical system 15A, an irradiation is conducted in a manner to superimpose each of the interference fringes IS1 and the interference fringes IS2 and the first processing light EL11. As a result, it is possible to appropriately process the work W even at a part where the dark part ID of each of the interference fringes IS1, IS2 is formed. Therefore, in the processing method using the processing optical system 15A, it is possible to form a riblet structure RB with an ideal shape on the surface of the work W of the processing area PA.

In the processing method using the processing optical system 15B, as shown in the upper row, the irradiation area RA (hereinafter referred to as irradiation area RA2) of the first processing light EL11 by the third optical system 18 is made to be smaller than the processing area PA. In detail, in the processing method using the processing optical system 15B, the irradiation area RA2 is made to be a rectangular shape where the dimension is equal to the processing area PA in the Y-axis direction and where the dimension is smaller than the processing area PA in the X-axis direction.

In the processing method by the processing optical system 15B, as shown in the middle row, the interference area IA (hereinafter referred to as interference area IA3), where the interference fringes IS are formed by the plurality of second processing lights EL22 from the second optical system 17, is made to be a rectangular shape with a dimension that is generally equal to the irradiation area RA2. In the processing method using the processing optical system 15B, in the interference area IA3, the interference fringes IS1 showing the basic frequency waveform Wb and the interference fringes IS2 showing the twofold frequency waveform Wd are formed to be aligned in the X-axis direction. In other words, in the processing method using the processing optical system 15B, in the interference area IA3, the interference fringes IS2 of the twofold frequency waveform Wd are formed on one of the ends in the X-axis direction, and the interference fringes IS1 of the basic frequency waveform Wb are formed to be aligned therewith on the other end in the X-axis direction. In this example, in the interference area IA3, the area where the interference fringes IS1 of the basic frequency waveform Wb are formed becomes a first area, and the area where the interference fringes IS2 of the twofold frequency waveform Wd are formed becomes a second area. The order of the first and second areas may be suitably set, and it is not limited to this example.

In the processing method using the processing optical system 15B, as shown in the lower row, there are superimposed the interference area IA3, where the interference fringes IS1, IS2 of the two-types frequency waveforms Wb, Wd are formed into alignment with each other, and the irradiation area RA2 which is formed by irradiating the first processing light EL11. In the following, an area where the interference area IA3 and the irradiation area RA2 are superimposed is also referred to as a superimposed area OA3. In the processing method using the processing optical system 15B, the entire processing area PA is scanned with this superimposed area OA3. In other words, in the processing method using the processing optical system 15B, the entire processing area PA is scanned by forming the superimposed area OA3 by superimposing the interference area IA3 and the irradiation area RA2 at one end in the X-axis direction in the processing area PA and then moving the superimposed area OA3 toward the other end in the X-axis direction.

With this, in the processing method using the processing optical system 15B, it is possible to irradiate the entire processing area PA on the surface of the work W with the interference fringes IS1 showing the basic frequency waveform Wb and the interference fringes IS2 showing the twofold frequency waveform Wd. Upon this, in the processing method using the processing optical system 15B, irradiation is conducted in a manner to superimpose the aligned interference fringes IS1, IS2 and the first processing light EL11. As a result, it is possible to appropriately process the work W even at a part where the dark part ID of each of the interference fringes IS1, IS2 is formed. Therefore, in the processing method using the processing optical system 15B, it is possible to form a riblet structure RB with an ideal shape on the surface of the work W of the processing area PA.

In the irradiation area RA2 of this example, the interference fringes IS1 showing the basic frequency waveform Wb and the interference fringes IS2 showing the twofold frequency waveform Wd are formed into alignment with each other. In other words, the two interference fringes IS are formed in a positional relation in which they are in contact with each other in the Y-axis direction. However, the interference fringes IS1, IS2 may be formed in a positional relation in which they are apart from each other in the Y-axis direction. They may be formed in a positional relation in which they at least partially overlap. It is not limited to the above example.

In the processing method using the processing optical system 15C, as shown in the upper row, the irradiation area RA (hereinafter referred to as irradiation area RA3) of the first processing light EL11 by the third optical system 18 is made to be the same size as that of the processing area PA. Furthermore, in the processing method by the processing optical system 15C, as shown in the middle row, the interference area IA to form the interference fringes IS by the plurality of second processing lights EL22 from the second optical system 17 is made to be smaller than the processing area PA. In detail, in the processing method by the processing optical system 15C, similar to the processing method using the processing optical system 15A, the interference area IA is made to be a rectangular shape where the dimension is equal to the processing area PA in the Y-axis direction and where the dimension is smaller than the processing area PA in the X-axis direction. In the processing method using the processing optical system 15C, similar to the processing method using the processing optical system 15A, in the interference area IA, the interference fringes IS1 showing the basic frequency waveform Wb and the interference fringes IS2 showing the twofold frequency waveform Wd are formed at different timings (time). In other words, in the processing method using the processing optical system 15C, similar to the processing method using the processing optical system 15A, there are formed the interference area IA1, where the interference fringes IS1 showing the basic frequency waveform Wb are formed, and the interference area IA2, where the interference fringes IS2 showing the twofold frequency waveform Wd are formed.

In the processing method using the processing optical system 15C, as shown in the lower row, the irradiation area RA3 is formed by irradiating the first processing light EL11 onto the processing area PA where the interference area IA1 by the interference fringes IS1 of the basic frequency waveform Wb and the interference area IA2 by the interference fringes IS2 of the twofold frequency waveform Wd are formed. Here, the irradiation area RA3 has the same size as that of the processing area PA. The interference area IA1 and the interference area IA2 are made to be smaller than the processing area PA. Therefore, in the irradiation area RA3 (processing area PA), an area where the interference area IA1 and the interference area IA2 are formed becomes a superimposed area OA where the first processing light EL11 and the plurality of second processing lights EL22 (interference fringes IS1, IS2) are superimposed. In the processing method using the processing optical system 15C, the entire processing area PA is scanned with the interference area IA1 or the interference area IA2, while the irradiation area RA3 is formed. In other words, in the processing method using the processing optical system 15C, while the irradiation area RA3 is formed in the processing area PA, the interference area IA1 is formed at one end in the X-axis direction in the processing area PA, and the interference area IA1 is moved toward the other end in the X-axis direction, thereby scanning the entire processing area PA to form a superimposed area OA4 in the entire processing area PA. Then, in the processing method using the processing optical system 15C, while the irradiation area RA3 is formed in the processing area PA, the interference area IA2 is formed at one end in the X-axis direction in the processing area PA, and the interference area IA2 is moved toward the other end in the X-axis direction, thereby scanning the entire processing area PA to form a superimposed area OA5 in the entire processing area PA.

With this, in the processing method using the processing optical system 15C, it is possible to irradiate the entire processing area PA on the surface of the work W with the interference fringes IS1 showing the basic frequency waveform Wb and the interference fringes IS2 showing the twofold frequency waveform Wd. Upon this, in the processing method using the processing optical system 15C, the entire processing area PA is scanned with the first processing light EL11. Therefore, irradiation is conducted in a manner to surely superimpose the interference fringes IS1, IS2 and the first processing light EL11. As a result, it is possible to appropriately process the work W even at a part where the dark part ID of each of the interference fringes IS1, IS2 is formed. Therefore, in the processing method using the processing optical system 15C, it is possible to form a riblet structure RB with an ideal shape on the surface of the work W of the processing area PA.

In the processing method using the processing optical system 15D, as shown in the upper row, similar to the processing method using the processing optical system 15C, the irradiation area RA3 of the first processing light EL11 by the third optical system 18 is made to be the same size as that of the processing area PA. In the processing method using the processing optical system 15D, as shown in the middle row, similar to the processing method using the processing optical system 15B, the interference area IA3 to form the interference fringes IS by the plurality of second processing lights EL22 from the second optical system 17 is made to be smaller than the processing area PA. In detail, in the processing method using the processing optical system 15C, the interference area IA3 is made to be a rectangular shape where the dimension is equal to the processing area PA in the Y-axis direction and where the dimension is smaller than the processing area PA in the X-axis direction. In the processing method using the processing optical system 15D, similar to the processing method using the processing optical system 15B, in the interference area IA3, the interference fringes IS1 showing the basic frequency waveform Wb and the interference fringes IS2 showing the twofold frequency waveform Wd are formed to be aligned in the X-axis direction. In other words, in the processing method using the processing optical system 15D, in the interference area IA3, the interference fringes IS2 of the twofold frequency waveform Wd are formed on one of the ends in the X-axis direction, and the interference fringes IS1 of the basic frequency waveform Wb are formed to be aligned therewith on the other end in the X-axis direction.

In the processing method using the processing optical system 15D, as shown in the lower row, the irradiation area RA3 is formed by irradiating the first processing light EL11 onto the processing area PA in which the interference area IA3, where the interference fringes IS1, IS2 of the two-types frequency waveforms Wb, Wd are aligned with each other, is formed. The irradiation area RA3 has the same size as that of the processing area PA. The interference area IA3 is made to be smaller than the processing area PA. Therefore, in the irradiation area RA3 (processing area PA), an area where the interference area IA3 is formed becomes a superimposed area OA6 where the first processing light EL11 and the plurality of second processing lights EL22 (interference fringes IS1, IS2) are superimposed. In the processing method using the processing optical system 15D, the entire processing area PA is scanned with the interference area IA3, while the irradiation area RA3 is formed. In other words, in the processing method using the processing optical system 15D, while the irradiation area RA3 is formed in the processing area PA, the interference area IA3 is formed at one end in the X-axis direction in the processing area PA, and the interference area IA3 is moved toward the other end in the X-axis direction, thereby scanning the entire processing area PA to form the superimposed area OA6 in the entire processing area PA.

With this, in the processing method using the processing optical system 15D, it is possible to irradiate the entire processing area PA on the surface of the work W with the interference fringes IS1 showing the basic frequency waveform Wb and the interference fringes IS2 showing the twofold frequency waveform Wd. Upon this, in the processing method using the processing optical system 15D, the entire processing area PA is scanned with the first processing light EL11. Therefore, irradiation is conducted in a manner to superimpose the interference fringes IS1, IS2 and the first processing light EL11. As a result, it is possible to appropriately process the work W even at a part where the dark part ID of each of the interference fringes IS1, IS2 is formed. Therefore, in the processing method using the processing optical system 15D, it is possible to form a riblet structure RB with an ideal shape on the surface of the work W of the processing area PA.

In the processing method using the processing optical system 15E, as shown in the upper row, similar to the processing methods using the processing optical systems 15C, 15D, the irradiation area RA3 of the first processing light EL11 by the third optical system 18 is made to be the same size as that of the processing area PA. In the processing method using the processing optical system 15E, as shown in the middle row, the interference area IA to form the interference fringes by the plurality of second processing lights EL22 from the second optical system 17 is made to be generally the same size as that of the irradiation area RA3, that is, the processing area PA. Therefore, in the processing method using the processing optical system 15E, the second optical system 17 can form the interference fringes IS in the entire processing area PA without moving the interference area IA. In other words, in the processing method using the processing optical system 15E, there does not change the positional relation (a constant positional relation) between the irradiation area RA3 by the third optical system 18 and the interference area IA formed by the second optical system 17.

In the processing method using the processing optical system 15E, as shown in the lower row, in the interference area IA, the interference fringes IS1 (hereinafter referred to as interference area IA4) showing the basic frequency waveform Wb and the interference fringes IS2 (hereinafter referred to as interference area IA5) showing the twofold frequency waveform Wd are formed at different timings (time). Upon this, in the processing method using the processing optical system 15E, there are superimposed the interference area IA4, where the interference fringes IS1 showing the basic frequency waveform Wb are formed, and the irradiation area RA3 that is formed by irradiating the first processing light EL11. In the following, an area where the interference area IA4 and the irradiation area RA3 are superimposed is also referred to as a superimposed area OA7. Then, in the processing method using the processing optical system 15E, there are superimposed the interference area IA5, where the interference fringes IS2 showing the twofold frequency waveform Wd are formed, and the irradiation area RA3 that is formed by irradiating the first processing light EL11. In the following, an area where the irradiation area RA3 is superimposed on the interference area IA5 is also referred to as a superimposed area OA8. Here, the irradiation area RA3, the interference area IA4, and the interference area IA5 have the same size as that of the processing area PA. Therefore, in the superimposed areas OA6, OA7, the first processing light EL11 and the plurality of second processing lights EL22 (interference fringes IS1, IS2) are superimposed in the entire processing area PA.

With this, in the processing method using the processing optical system 15E, it is possible to irradiate the entire processing area PA on the surface of the work W with the interference fringes IS1 showing the basic frequency waveform Wb and the interference fringes IS2 showing the twofold frequency waveform Wd. Upon this, in the processing method using the processing optical system 15E, the entire processing area PA is scanned with the first processing light EL11. Therefore, irradiation is conducted in a manner to superimpose the interference fringes IS1 or interference fringes IS2 and the first processing light EL11. As a result, it is possible to appropriately process the work W even at a part where the dark part ID of each of the interference fringes IS1, IS2 is formed. Therefore, in the processing method using the processing optical system 15E, it is possible to form a riblet structure RB with an ideal shape on the surface of the work W of the processing area PA.

Next, specific configuration examples of the five processing optical systems 15A, 15B, 15C, 15D, and 15E are explained in this order by using FIGS. 12 to 21. In FIGS. 12, 14, 16, 18, and 20, the processing light source 2 is omitted, and only the processing light EL0 from the processing light source 2 is shown.

(2-2) Processing Optical System 15A

FIG. 12 is a view showing a configuration of the processing optical system 15A. The processing light source 2 is omitted in FIG. 12. As shown in FIG. 12, the processing optical system 15A includes the galvanometer mirror 21 and a collimating lens 22, to allow the processing light EL0 from the processing light source 2 to proceed to the first optical system 16. As mentioned above, the galvanometer mirror 21 is an interference fringe moving member that moves the position of the interference area IA relative to the second optical system 17 in a direction that crosses and is typically perpendicular to the optical axis of the second optical system 17 and reflects the processing light EL0 from the processing light source 2 toward a beam splitter 23. This galvanometer mirror 21 is capable of changing its inclination in the rotational direction around a rotation axis extending in the Z-axis direction. The galvanometer mirror 21 can change the direction of reflection of the processing light EL0 toward the beam splitter 23 by changing the inclination. The galvanometer mirror 21 can change the direction of reflection of the processing light EL0 within a range where the second processing light EL2 after splitting can be incident on a splitting surface 25a of the special beam splitter 25. In other words, the galvanometer mirror 21 can change the direction in which the processing light EL0 travels, within a range where the second processing light EL2 can be incident on the splitting surface 25a. This galvanometer mirror 21 may be driven under the control of the controller 3 or under the control of another controller.

The collimating lens 22 turns the processing light EL0 from the processing light source 2, which has been reflected by the galvanometer mirror 21, into a collimated light (parallel light). In other words, while the processing light EL0 from the processing light source 2 in this example is a diffusing (divergent) light, such processing light EL0 is turned into a collimated light (parallel light) by the collimating lens 22.

The processing optical system 15A includes the beam splitter 23 as the first optical system 16 which splits the processing light EL0 from the processing light source 2 into the first and second processing lights EL1, EL2. On this beam splitter 23, the processing light EL0 collimated by the collimating lens 22 is incident. The beam splitter 23 splits the processing light EL0 into the first and second processing lights EL1, EL2. In detail, the beam splitter 23 reflects a part of the processing light EL0 to generate the first processing light EL1 which proceeds to the third optical system 18 and transmits another part of the processing light EL0 to generate the second processing light EL2 which proceeds to the second optical system 17. The beam splitter 23 may be one that transmits a part of the processing light EL0 to generate the first processing light EL1 and that reflects another part of the processing light EL0 to generate the second processing light EL2. This beam splitter 23 may be an amplitude-dividing beam splitter or polarizing beam splitter. The beam splitter 23 allows the second processing light EL2, which has been generated by transmitting, to proceed in parallel with the Y-axis direction to the second optical system 17. Therefore, the galvanometer mirror 21 as an interference fringe moving member is disposed in an optical path between the processing light source 2 and the beam splitter 23 as the first optical system 16 which is disposed at a position to split the processing light EL0 into the first and second processing lights EL1, EL2. As mentioned above, the galvanometer mirror 21 moves the position of the interference area IA relative to the second optical system 17 in a direction that crosses (is perpendicular to) the optical axis of the second optical system 17.

In the processing optical system 15A as an example in FIG. 12, before being incident on the first optical system 16 (its galvanometer mirror 21), the processing light EL0 from the processing light source 2 is split into two by using a diffractive optical element (DOE) or beam splitter, which is not shown in the drawings. In the processing optical system 15A, the two split processing lights EL0 are concentrated on one point or a narrow area close to that at respective different positions on the galvanometer mirror 21 (its reflection surface). In the first optical system 16, the two processing lights EL0 are reflected by the galvanometer mirror 21 and then transmitted through the collimating lens 22. One of the split processing lights EL0 is reflected by the beam splitter 23 to result in the first processing light EL1. The other of the split processing lights EL0 is transmitted through the beam splitter 23 to result in the second processing light EL2. With this, the processing optical system 15A can prevent the energy of the processing light EL0, which is from the processing light source 2, from concentrating on a narrow spot in the beam splitter 23, thereby suppressing damage to the beam splitter 23 from the processing light EL0. The processing optical system 15A concentrates the two processing lights EL0 at one point or a narrow area close to that of the galvanometer mirror 21 (its reflection surface). Therefore, it is possible to easily and properly adjust the change of the traveling direction of the processing light EL0 by changing the inclination of the galvanometer mirror 21.

The processing optical system 15A includes, as the second optical system 17 to generate the plurality of second processing lights EL22 by splitting the second processing light EL2 from the first optical system 16, a first cylindrical lens 24, a special beam splitter 25, a second cylindrical lens 26, a first mirror 27, an optical deflecting member 28, a second mirror 29, a third mirror 31, a third cylindrical lens 32, and a lens 33. Here, the second optical system 17 of the processing optical system 15A need not include the first cylindrical lens 24, the second cylindrical lens 26, the second mirror 29, and the lens 33. The first cylindrical lens 24 is an optical member that has a shape extending in the X-axis direction and a refractive power only in the Z-axis direction, thereby resulting in a convex lens in a cross-section perpendicular to the X-axis direction. This first cylindrical lens 24 does not change the second processing light EL2 from the first optical system 16 in the X-axis direction but condenses it in the Z-axis direction. In the first cylindrical lens 24, the back focus in the travel direction of the second processing light EL2 is set in the vicinity of the splitting surface 25a of the special beam splitter 25. Therefore, the first cylindrical lens 24 turns the second processing light EL2 into a linear light extending in the X-axis direction on the splitting surface 25a (see FIG. 13).

The special beam splitter 25 splits the second processing light EL2, which has been turned into the linear light extending in the X-axis direction by the first cylindrical lens 24, into the plurality of second processing lights EL22. Therefore, the special beam splitter 25 functions as a light-splitting member that splits the second processing light EL2 into the plurality of second processing lights EL22. In the following description, for convenience of explanation, there is described an example in which the special beam splitter 25 splits the second processing light EL2 into the two second processing lights EL22 (when indicated separately, one is referred to as the second processing light EL221, and the other as the second processing light EL222). The special beam splitter 25 also has a function that combines the two split second processing lights EL22 and allows both second processing lights EL22 to proceed toward the lens 33, that is, the work W in front. The condensing position of the second processing light EL2 that is formed by the first cylindrical lens 24 may be slightly displaced from the special beam splitter 25 in the optical axis direction.

This special beam splitter 25 is a rectangular plate-shaped member and is disposed to have an inclination of 45 degrees relative to the Y-axis direction around a center axis extending in the X-axis direction. The special beam splitter 25 includes the splitting surface 25a, a reflective surface 25b and a transmissive surface 25c, each of which extends in the X-axis direction (see FIG. 13). In the special beam splitter 25, the splitting surface 25a is located in the vicinity of the center axis in the 45-degree inclination direction, the reflective surface 25b is located on the upper side in the inclination direction and on the right side (close to the third cylindrical lens 32) when viewed in FIGS. 12 and 13, and the transmissive surface 25c is located on the lower side in the inclination direction and on the left side (close to the first cylindrical lens 24) when viewed in FIGS. 12 and 13. The inclination angle of the special beam splitter 25 is not limited to 45 degrees.

The splitting surface 25a splits the second processing light EL2, which has been turned into a linear light extending in the X-axis direction by the first cylindrical lens 24, into the plurality of second processing lights EL22. This splitting surface 25a includes an amplitude-dividing beam splitter or polarizing beam splitter, generates the second processing light EL221 by reflecting a part of the second processing light EL2, and generates the second processing light EL222 by transmitting another part of the second processing light EL2. Here, the special beam splitter 25 is disposed to have an inclination of 45 degrees relative to the Y-axis direction. Therefore, the second processing light EL221 resulting from reflection by the splitting surface 25a proceeds to the second cylindrical lens 26 in parallel with the Z-axis direction, and another processing light EL222 resulting from transmission through the splitting surface 25a proceeds to the third cylindrical lens 32 in parallel with the Y-axis direction.

As mentioned hereinafter, the reflective surface 25b reflects the second processing light EL221, resulting from reflection by the third mirror 31 and then condensing by the third cylindrical lens 32, thereby allowing it to proceed downward (toward the lens 33) in the Z-axis direction. Therefore, the reflective surface 25b is configured such that the back surface facing the side of the third cylindrical lens 32 in the special beam splitter 25 is made to have an optical characteristic to reflect light. This reflective surface 25b can be formed by subjecting an end portion on an upper side of the back surface of the special beam splitter 25 to a partial vapor deposition, etc. As long as the reflective surface 25b reflects the second processing light EL221 from the third cylindrical lens 32 toward the lens 33, it suffices to suitably set the configuration and the position. They are not limited to those of this example.

As mentioned hereinafter, the transmissive surface 25c transmits the second processing light EL222, resulting from reflection by the first mirror 27 and then condensing by the second cylindrical lens 26, thereby allowing it to proceed downward (toward the lens 33) in the Z-axis direction. Here, it is desirable that the transmissive surface 25c does not have any optical action on the second processing light EL222 from the cylindrical lens 26. Therefore, the transmissive surface 25c of this example is made to be a void, that is, the portion corresponding to the transmissive surface 25c in the special beam splitter 25 is cut out. As long as the transmissive surface 25c transmits the second processing light EL222 from the second cylindrical lens 26 toward the lens 33, it suffices to suitably set the configuration and the position. They are not limited to those of this example.

The second cylindrical lens 26 is an optical member that has a shape extending in the X-axis direction and that has a refractive power only in the Y-axis direction, thereby resulting in a convex lens in a cross-section perpendicular to the X-axis direction. In this second cylindrical lens 26, the front focus in the travel direction of the second processing light EL221 is set in the vicinity of the splitting surface 25a of the special beam splitter 25, thereby turning the second processing light EL221 into a collimated light (parallel light) having a predetermined size in the X-axis direction and Y-axis direction. The second cylindrical lens 26 allows the second processing light EL221 in the collimated condition to proceed to the first mirror 27 in parallel with the Z-axis direction. Furthermore, the second cylindrical lens 26 does not change the second processing light EL222, which has been reflected by the first mirror 27, in the X-axis direction, but condenses it in the Y-axis direction, thereby turning it into a linear light extending in the X-axis direction on the transmissive surface 25c, as mentioned hereinafter (see FIG. 13).

The first mirror 27 is a plate-shaped member and is disposed to have an inclination of 45 degrees relative to the Z-axis direction around a center axis extending in the X-axis direction. The first mirror 27 reflects the second processing light EL221 from the second cylindrical lens 26, thereby allowing it to proceed to the optical deflecting member 28 in parallel with the Y-axis direction. The first mirror 27 reflects the second processing light EL222 from the second mirror 29, which has been transmitted through the optical deflecting member 28, thereby allowing it to proceed to the second cylindrical lens 26.

The optical deflecting member 28 is a member that changes (deflects) the travel directions of the lights (second processing lights EL221, EL222) between the first and second mirrors 27, 29. The optical deflecting member 28 is an optical member that has a shape extending in the X-axis direction and a refractive power only in the Z-axis direction, thereby refracting the travel direction of the light either upwardly or downwardly in the Z-axis direction between the first and second mirrors 27, 29. The optical deflecting member 28 in this example is trapezoidal (wedge-shaped) in a cross-section perpendicular to the X-axis direction to have a thickness (dimension in the Y-axis direction) that is minimum at the top side in the Z-axis direction and increases as going downward in the Z-axis direction. Therefore, as compared with a case that the optical deflecting member 28 is not installed, the optical deflecting member 28 refracts the light from one of the first and second mirrors 27, 29 downward in the Z-axis direction and allows it to proceed toward the other of the first and second mirrors 27, 29. This optical deflecting member 28 can be disposed in an optical path between the first and second mirrors 27, 29 and can be removed from the optical path. It is driven under the control of the controller 3 in the first embodiment.

The second mirror 29 is a plate-shaped member and is disposed with a reference position that is inclined by 45 degrees relative to the Z-axis direction around a center axis extending in the X-axis direction, to be inclined around the center axis relative to the reference position. The second mirror 29 is positioned conjugate to the special beam splitter 25 (its splitting surface 25a). In FIG. 12, the second mirror 29 in this example is inclined to the left (opposite to clockwise) around the center axis relative to the reference position. This inclination direction from the reference position may be clockwise and is not limited to this example. The second mirror 29 reflects the second processing light EL221, which has been transmitted through the optical deflecting member 28, to allow it to proceed to the third mirror 31, and reflects the second processing light EL222, which has been reflected by the third mirror 31, to allow it to proceed to the optical deflecting member 28.

The third mirror 31 is a plate-shaped member and is disposed to have an inclination of 45 degrees relative to the Z-axis direction around a center axis extending in the X-axis direction. The third mirror 31 reflects the second processing light EL221, which has been reflected by the second mirror 29, thereby allowing it to proceed to the third cylindrical lens 32, and reflects the second processing light EL222, which has been transmitted through the third cylindrical lens 32, to allow it to proceed to the second mirror 29 in parallel with the Z-axis direction.

The third cylindrical lens 32 is an optical member that has a shape extending in the X-axis direction and that has a refractive power only in the Z-axis direction, thereby resulting in a convex lens in a cross-section perpendicular to the X-axis direction. In this third cylindrical lens 32, the front focus in the travel direction of the second processing light EL222 is set in the vicinity of the splitting surface 25a of the special beam splitter 25, thereby turning the second processing light EL222 into a collimated light (parallel light) having a predetermined size in the X-axis and Y-axis directions. The third cylindrical lens 32 allows the second processing light EL222 in the collimated condition to proceed to the third mirror 31 in parallel with the Y-axis direction. Furthermore, the third cylindrical lens 32 does not change the second processing light EL221, which has been reflected by the third mirror 31, in the X-axis direction, but condenses it in the Y-axis direction, thereby turning it into a linear light extending in the X-axis direction on the reflective surface 25b, as mentioned hereinafter (see FIG. 13).

Here, the focal points of the second and third cylindrical lens 26, 32 may coincide with each other. By the second and third cylindrical lens 26, 32 and the optical deflecting member 28, with respect to the second processing light EL221, the splitting surface 25a and the reflective surface 25b become optically conjugate to each other in the YZ plane. By the second and third cylindrical lens 26, 32 and the optical deflecting member 28, with respect to the second processing light EL222, the splitting surface 25a and the transmissive surface 25c become optically conjugate to each other in the YZ plane. Here, the optical deflecting member 28 displaces the incident position of the second processing light EL221, which is incident on the special beam splitter 25, from a position of the splitting surface 25a to a position of the reflective surface 25b, and displaces the incident position of the second processing light EL 222, which is incident on the special beam splitter 25, from a position of the splitting surface 25a to a position of the transmissive surface 25c. In other words, the optical deflecting member 28 has the function of spatially separating the optical paths of the light from the special beam splitter 25 and the light incident on the special beam splitter 25.

As mentioned hereinafter, the lens 33 condenses the lights on the surface of the work W to form interference fringes IS on the surface of the work W by the second processing light EL221, which has been reflected by the reflective surface 25b as mentioned hereinafter, and by the second processing light EL222, which has been transmitted through the transmissive surface 25c as mentioned hereinafter. In other words, the lens 33 causes a center axis in an optical path where the second processing light EL221 reflected by the reflective surface 25b proceeds, and a center axis in an optical path where the second processing light EL222 transmitted through the transmissive surface 25c, to coincide with each other on the surface of the work W. In other words, the lens 33 condenses each of the second processing lights EL221, EL222, which are incident on positions away from the optical axis, and makes them obliquely incident on the surface of the work W to cross them each other on the surface of the work W. With this, on the surface of the work W, the interference fringes IS are formed in a linear area extending in the Y-axis direction, thereby forming the interference area IA.

Furthermore, the processing optical system 15A includes a fourth mirror 34, a fourth cylindrical lens 35, and a fifth mirror 36, as the third optical system 18 that allows the first processing light EL1 from the first optical system 16 to proceed to the interference area IA. The fourth mirror 34 is a plate-shaped member and is disposed to have an inclination of 45 degrees relative to the Z-axis direction around a center axis extending in the X-axis direction. The fourth mirror 34 reflects the first processing light EL1 from the first optical system 16 and allows it to proceed to the fourth cylindrical lens 35 in parallel with the Y-axis direction.

The fourth cylindrical lens 35 does not change the first processing light EL1 in the Z-axis direction but condenses it in the X-axis direction. In the fourth cylindrical lens 35, the back focus in the travel direction of the first processing light EL1 is set at a position, where the interference area IA is formed, on the surface of the work W which comes after the fifth mirror 36. Therefore, the fourth cylindrical lens 35 turns the first processing light EL1 into a linear light extending in the Z-axis direction and allows it to proceed to the fifth mirror 36 in parallel with the Y-axis direction.

The fifth mirror 36 is a plate-shaped member and is disposed to have an inclination of 45 degrees relative to the Z-axis direction around a center axis extending in the X-axis direction. The fifth mirror 36 reflects the first processing light EL1 from the fourth cylindrical lens 35, thereby allowing it to proceed to the surface of the work W. Therefore, in the third optical system 18, the first processing light EL1 goes through the fourth mirror 34 and the fourth cylindrical lens 35 and then is reflected by the fifth mirror 36, thereby proceeding to the surface of the work W, as the first processing light EL11. This first processing light EL11 is turned to a linear light extending in the Z-axis direction by the fourth cylindrical lens 35 and then is turned to a linear light extending in the Y-axis direction due to its reflection by the fifth mirror 36 toward the surface of the work W.

Next, the operation of the processing optical system 15A is explained. Firstly, the processing light EL0 emitted from the processing light source 2 is reflected by the galvanometer mirror 21, then passes through the collimating lens 22, and then is split into the first and second processing lights EL1, EL2 by the beam splitter 23 as the first optical system 16. Here, the first and second processing lights EL1, EL2 are in a collimated condition by passing through the collimating lens 22. The first processing light EL1 proceeds to the third optical system 18, and the second processing light EL2 proceeds to the second optical system 17.

In the second optical system 17, the second processing light EL2 turns into a linear light extending in the X-axis direction by passing through the first cylindrical lens 24, to proceed to the splitting surface 25a of the special beam splitter 25 (see FIG. 13). Then, a part of the second processing light EL2 is reflected as the second processing light EL221 by the splitting surface 25a toward the second cylindrical lens 26. Another part of the second processing light EL2 is passed (transmitted) through the splitting surface 25a as the second processing light EL222 to proceed to the third cylindrical lens 32. The second processing light EL221 passes through the second cylindrical lens 26, followed by reflection by the first mirror 27, then reflections by the second and third mirrors 29, 31, and then passing through the third cylindrical lens 32, thereby proceeding toward the special beam splitter 25. The second processing light EL222 passes through the third cylindrical lens 32, followed by reflections by the third and second mirrors 31, 29, then reflection by the first mirror 27, and then passing through the second cylindrical lens 26, thereby proceeding toward the special beam splitter 25. Upon this, in case that the optical deflecting member 28 is disposed in the optical path between the first and second mirrors 27, 29, the second processing lights EL221, EL222 also pass through the optical deflecting member 28.

Here, all of the special beam splitter 25 (its splitting surface 25a) and the first and third mirrors 27, 31 are plate-shaped members and are inclined by 45 degrees relative to the Z-axis direction, and the second mirror 29 is also a plate-shaped member and has a reference position that is inclined by 45 degrees relative to the Z-axis direction. Therefore, in the second optical system 17, the second processing lights EL221, EL222 are basically made to proceed from the special beam splitter 25 in their respective different rotational directions (clockwise direction and counterclockwise direction), thereby returning to the special beam splitter 25. In the second optical system 17, the second mirror 29 is inclined in a counterclockwise direction in FIG. 12 around the center axis relative to the reference position. Therefore, the second processing light EL221 reflected by the second mirror 29, as compared with the case of being at the reference position, proceeds to a position that is displaced rightward in the third mirror 31 and then is reflected there, thereby proceeding toward a position that is displaced upward in the special beam splitter 25, that is, the reflective surface 25b (see FIG. 13). The second processing light EL222 reflected by the second mirror 29, as compared with the case of being at the reference position, proceeds to a position that is displaced downward in the first mirror 27 and then is reflected there, thereby proceeding toward a position that is displaced downward in the special beam splitter 25, that is, the transmissive surface 25c (see FIG. 13). With this, the second optical system 17 can generate a spatial position difference between the second processing lights EL221, EL222, while they are passed through basically the same optical path. Therefore, it can also be said that the second optical system 17 forms a square Sagnac optical system.

In the second optical system 17, the second processing light EL221 is reflected by the reflective surface 25b to proceed toward the lens 33, and the second processing light EL222 is transmitted through the transmissive surface 25c to proceed toward the lens 33. In this way, in the second optical system 17, the special beam splitter 25 is such that the second processing light EL221 resulting from reflection by the splitting surface 25a is reflected by the reflective surface 25b toward the lens 33 and that the second processing light EL222 resulting from transmission through the splitting surface 25a is transmitted through the transmissive surface 25c to proceed toward the lens 33. Therefore, the second optical system 17 can utilize the second processing light EL2 from the first optical system 16 with an extremely high efficiency to generate the second processing lights EL221, EL222 which are irradiated onto the work W from different incident directions.

The second optical system 17 transmits the second processing lights EL221, EL222 through the lens 33, thereby condensing them on the surface of the work W to form the interference fringes IS. Here, in the second optical system 17, the angle of the second mirror 29 is set, in consideration of the arrangement and optical performance of each optical member, such that the angle between the second processing lights EL221, EL222 after passing through the lens 33 can lead to the formation of the interference fringes IS1 of the basic frequency waveform Wb. In other words, the second optical system 17 sets the arrangement and optical performance of each optical member and the angle of the second mirror 29 according to the period of the interference fringes IS1 of the basic frequency waveform Wb. With this, the second optical system 17 can form, on the surface of the work W, the interference area IA1 (see FIG. 11) of the interference fringes IS1 showing the basic frequency waveform Wb.

The second optical system 17 makes it possible to dispose the optical deflecting member 28 in an optical path between the first and second mirrors 27, 29. As compared with the case that the optical deflecting member 28 is not installed, the optical deflecting member 28 refracts the light from one of the first and second mirrors 27, 29 downward in the Z-axis direction and directs it toward the other of the first and second mirrors 27, 29. Therefore, due to passing through the optical deflecting member 28, as compared with the case of not passing through the optical deflecting member 28, the second processing light EL221 proceeds to a position that is displaced downward in the second mirror 29 and then is reflected there such that the amount of an upward (outward) displacement on the reflective surface 25b of the special beam splitter 25 increases (see the reference sign EL221 indicated by a single-dotted line of FIG. 13). Due to passing through the optical deflecting member 28, as compared with the case of not passing through the optical deflecting member 28, the second processing light EL222 has an increased downward displacement in the first mirror 27 and is reflected there such that the amount of a downward (outward) displacement on the transmissive surface 25c of the special beam splitter 25 increases (see the reference sign EL222 indicated by a single-dotted line of FIG. 13).

Therefore, in the second optical system 17, due to disposing the optical deflecting member 28, as compared with the case of not disposing the optical deflecting member 28, it is possible to widen the distance between the second processing lights EL221, EL222 when allowing them to proceed toward the lens 33. With this, in the second optical system 17, due to disposing the optical deflecting member 28, as compared with the case of not disposing the optical deflecting member 28, it is possible to increase the angle between the second processing lights EL221, EL222 after passing them through the lens 33. Therefore, due to disposing the optical deflecting member 28, as compared with the case of not disposing the optical deflecting member 28, it is possible to form interference fringes with a smaller period on the surface of the work W. The second optical system 17 sets the shape (angle (refractivity (optical setting))) of the optical deflecting member 28, in view of the arrangement and optical performance of each optical member, such that the angle between the second processing lights EL221, EL222 after passing them through the lens 33 when disposing the optical deflecting member 28 can lead to forming the interference fringes IS2 of twofold frequency waveform Wd on the surface of the work W. In other words, the second optical system 17 sets the arrangement and optical performance of each optical member and the shape of the optical deflecting member 28, according to the period of the interference fringes IS2 of the twofold frequency waveform Wd. With this, the second optical system 17 can form the interference area IA2 (see FIG. 11) of the interference fringes IS2 showing the twofold frequency waveform Wd on the surface of the work W by disposing the optical deflecting member 28.

The cycle (pitch) P of the interference fringes IS1 or IS2 that are formed on the surface of the work W is given by:

$$P = \lambda/(2n \times \sin\theta)$$

where the wavelength of the second processing light EL221 or EL222 is $\lambda$, the refractive index to the wavelength $\lambda$ of the medium on the side of the lens 33 of the work W is n, and the crossing angle between the processing lights EL221 and EL222 toward the work W is $2\theta$.

Here, consider the case where it is necessary to make a difference in amplitude between the basic frequency waveform Wb and the twofold frequency waveform Wd. In this case, it is necessary to set a similar difference in amplitude (the amount of energy) also between the waveform showing the distribution of the amount of energy given to the work W by the interference fringes IS1 showing the basic frequency waveform Wb and the waveform showing the distribution of the amount of energy given to the work W by the interference fringes IS2 showing the twofold frequency waveform Wd. This difference in amplitude (the amount of energy) can be set by changing the period of time for forming the superimposed area OA by superimposing the interference area IA and the irradiation area RA, that is, changing the speed of scanning by the galvanometer mirror 21. Furthermore, the above difference in amplitude (the amount of energy) can be set by changing the intensity of the processing light EL0 from the processing light source 2 when forming the interference areas IA1, IA2. It is possible to change the intensity of this processing light EL0 by changing the output of the processing light source 2 or by installing an optical member with a light-reducing effect in the optical path from the processing light source 2 to the first optical system 16.

Thus, in the second optical system 17, it is possible to change the emitting position and the emitting angle of the second processing lights EL221, EL222 after passing through the lens 33 from the optical deflecting member 28 by changing the positions of the second processing lights EL221, EL222 in the optical deflecting member 28. The second optical system 17 forms the interference fringes IS1 of the basic frequency waveform Wb by removing the optical deflecting member 28 from the optical path. Therefore, it is possible to secure the intensity in the interference fringes IS1 and properly form the interference fringes IS with a substantially ideal waveform Wi. This is because in general the interference fringes IS1 of the basic frequency waveform Wb is required in many cases to have a higher intensity, as compared with the interference fringes IS of the n-fold frequency waveform Wn. Therefore, in case that the n-fold frequency waveform Wn is required to have a higher intensity, the second optical system 17 may form the interference fringes IS1 of the n-fold frequency waveform Wn by removing the optical deflecting member 28 from the optical path. When three or more of the n-fold frequency waveforms Wn are superimposed, it suffices that the second optical system 17 is provided with a plurality of the optical deflecting members 28 with shapes (refraction angles) different from each other and that the second optical system 17 makes it possible to dispose them individually in an optical path between the first and second mirrors 27, 29 and to remove them individually from the optical path.

In the third optical system 18, the first processing light EL1 from the first optical system 16 is reflected by the fourth mirror 34, then passes through the fourth cylindrical lens 35, and then is allowed as a linear light extending in the Z-axis direction to proceed to the fifth mirror 36. In the third optical system 18, due to the reflection by the fifth mirror 36, the first processing light EL11 is irradiated as a linear light extending in the Y-axis direction onto a position, where the interference area IA (interference area IA1, IA2) has been formed, on the surface of the work W, thereby forming the irradiation area RA1 (see FIG. 11). With this, under a condition that the optical deflecting member 28 is removed in the second optical system 17, the processing optical system 15A can form the superimposed area OA1 (see FIG. 11) by superimposing the interference area IA1 and the irradiation area RA1 on the surface of the work W. Furthermore, under a condition that the optical deflecting member 28 is disposed in the second optical system 17, the processing optical system 15A can form the superimposed area OA2 (see FIG. 11) by superimposing the interference area IA2 and the irradiation area RA1 on the surface of the work W.

This processing optical system 15A sets fluence of the first processing light EL11, in consideration of the arrangement and optical performance in the first, second, and third optical systems 16, 17, 18, such that the minimum fluence of the processing light in the superimposed area OA2 becomes a fluence at which the work W can be processed. In other words, the processing optical system 15A sets the splitting ratio of the processing light EL0 from the processing light source 2, based on the arrangement and optical performance of each optical member in the first, second, and third optical systems 16, 17, 18, such that the fluence of the interference fringes IS1, IS2 becomes equal to or greater than the lower limit value TH_lowest of the fluence at which the work W can be processed.

By driving the galvanometer mirror 21, the processing optical system 15A can move the superimposed area OA1 on the surface of the work W, that is, while keeping a condition in which the interference area IA1 and the irradiation area RA1 are superimposed. Therefore, in the processing optical system 15A, the area where the superimposed area OA1 is movable by driving the galvanometer mirror 21 results in the processing area PA. The processing optical system 15A scans the entire processing area PA with the superimposed area OA1 including the basic frequency waveform Wb by moving the superimposed area OA1 by driving the galvanometer mirror 21. Then, under the condition that the optical deflecting member 28 is disposed, the processing optical system 15A scans the entire processing area PA with the superimposed area OA2 including the twofold frequency waveform Wd by moving the superimposed area OA2 by driving the galvanometer mirror 21. With this, the processing optical system 15A can irradiate the entire processing area PA on the surface of the work W, with the interference fringes IS1 showing the basic frequency waveform Wb and the interference fringes IS2 showing the twofold frequency waveform Wd, under the condition that the first processing light EL11 is superimposed. Therefore, the processing optical system 15A can form the riblet structure RB with the ideal shape on the surface of the work W of the processing area PA. By moving the stage 13, the processing optical system 15A can turn any position on the surface of the work W into the processing area PA, thereby forming the riblet structure RB with the ideal shape at any position on the surface of the work W.

(2-3) Processing Optical System 15B

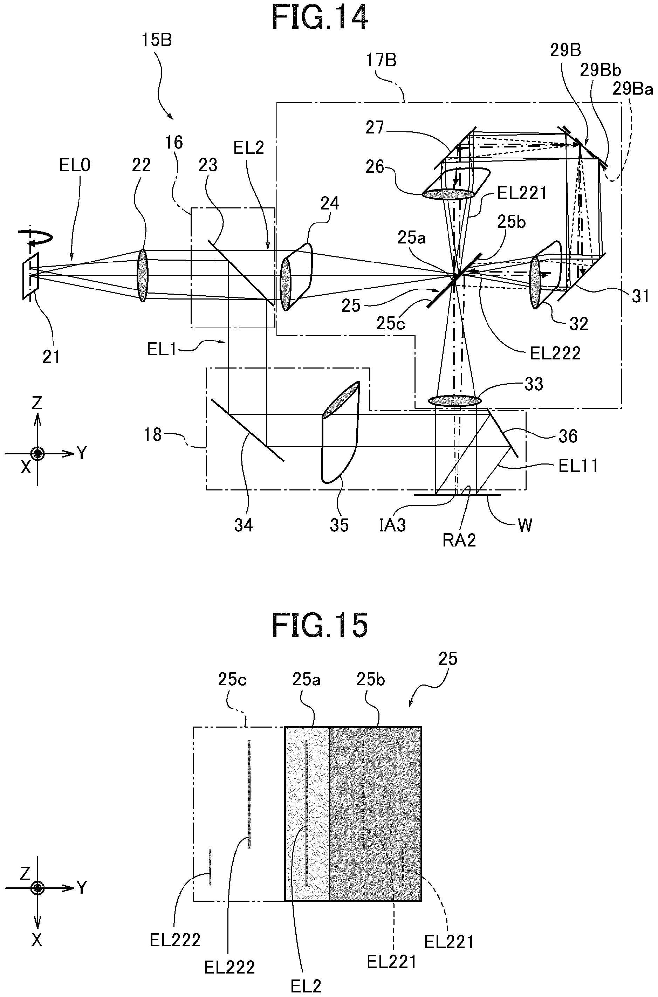

Since the processing optical system 15B is similar to the processing optical system 15A in terms of basic concept and configuration, the parts of equivalent configurations are designated by the same reference signs, and their detailed explanations are omitted. As shown in FIG. 14, the first and third optical systems 16, 18 of the processing optical system 15B have configurations equivalent to those of the processing optical system 15A. In the processing optical system 15B, the second optical system 17B that splits the second processing light EL2 from the first optical system 16 into the plurality of second processing lights EL22 is different from the second optical system 17 of the processing optical system 15A. In this second optical system 17B, as compared with the second optical system 17 of the processing optical system 15A, the optical deflecting member 28 is not provided, and a second mirror 29B is different.

The second mirror 29B is formed of a combination of two plate-shaped members in the X-axis direction. Each of them is disposed with a reference position that is inclined by 45 degrees relative to the Z-axis direction around a center axis extending in the X-axis direction, to be inclined around the center axis relative to the reference position. This second mirror 29B includes a first reflective part 29Ba on the far side (negative side (minus side) in the X-axis direction) of FIG. 14 and a second reflective part 29Bb on the near side (positive side (plus side) in the X-axis direction) of FIG. 14. In FIG. 14, for ease of understanding, the first reflective part 29Ba is shown by a dashed line, and the second reflective part 29Bb is shown by a solid line. In this second mirror 29, in FIG. 14, both of the first and second reflective parts 29Ba, 29Bb are inclined to the left (opposite to clockwise rotation) around the center axes relative to the reference positions. As long as the first and second reflective parts 29Ba, 29Bb are inclined in the same direction, the inclination direction from this reference position may be clockwise, and it is not limited to this example. In the second mirror 29, both of the first reflective parts 29Ba, 29Bb reflect the second processing light EL221 from the first mirror 27 to allow it to proceed to the third mirror 31, and both of the first reflective parts 29Ba, 29Bb reflect the second processing light EL222 from the third mirror 31 to allow it to proceed to the first mirror 27.

The angle of the first reflective part 29Ba is set, in consideration of the arrangement and optical performance of each optical member, such that the angle between the second processing lights EL221, EL222 after passing through the lens 33 can lead to the formation of the interference fringes IS1 of the basic frequency waveform Wb. In other words, the angle of the first reflective part 29Ba is set, according to the period of the interference fringes IS1 of the basic frequency waveform Wb and according to the arrangement and optical performance of each optical member. The angle of the second reflective part 29Bb is set, in consideration of the arrangement and optical performance of each optical member, such that the angle between the second processing lights EL221, EL222 after passing through the lens 33 can lead to the formation of the interference fringes IS2 of the twofold frequency waveform Wd. In other words, the angle of the second reflective part 29Bb is set, according to the period of the interference fringes IS2 of the twofold frequency waveform Wd and according to the arrangement and optical performance of each optical member. Therefore, in the second mirror 29B, the second reflective part 29Bb on the near side is more inclined to the reference position than the first reflective part 29Ba on the far side.

Here, after the second processing light EL2 as a linear light extending in the X-axis direction on the splitting surface 25a (see FIG. 15) is split, the second processing lights EL221, EL222 turn to collimated lights (parallel lights) of a predetermined size in the X-axis and Y-axis directions by the second and third cylindrical lens 26, 32. Since the second processing lights EL221, EL222 proceed to the second mirror 29B under the condition that they have a predetermined size in the X-axis direction, a part is reflected by the first reflective part 29Ba, and another part is reflected by the second reflective part 29Bb.

With this, as shown in FIG. 15, on the reflective surface 25b of the special beam splitter 25, the second processing light EL221 turns into a linear light extending in the X-axis direction on an upper side in the X-axis direction (corresponding to the far side in the X-axis direction in FIG. 14) and into a linear light extending in the X-axis direction at a rightward-displaced position on a down side in the X-axis direction (corresponding to the near side in the X-axis direction in FIG. 14). Furthermore, on the transmissive surface 25c of the special beam splitter 25, the second processing light EL222 turns into a linear light extending in the X-axis direction on an upper side in the X-axis direction (corresponding to the far side in the X-axis direction in FIG. 14) and into a linear light extending in the X-axis direction at a leftward-displaced position on a lower side in the X-axis direction (corresponding to the near side in the X-axis direction in FIG. 14). Here, the difference in length between the upper and lower sides of the second processing lights EL221 and EL222 corresponds to the period of time for forming the superimposed area OA by superimposing the interference area IA and the irradiation area RA and is set according to the difference between the intensity (amplitude) of the basic frequency waveform Wb and the intensity (amplitude) of the twofold frequency waveform Wd.

Therefore, a part of the second processing lights EL221, EL222 is set to form the interference fringes IS1 of the basic frequency waveform Wb, and another part of them is set to form the interference fringes IS2 of the twofold frequency waveform Wd. Therefore, the second optical system 17B can form, on the surface of the work W, the interference area IA3 (see FIG. 11), in which the interference fringes IS1 showing the basic frequency waveform Wb and the interference fringes IS2 showing the twofold frequency waveform Wd are aligned side-by-side, by irradiating the surface of the work W with the second processing lights EL221, EL222 after passing through the lens 33.

Next, the operation of the processing optical system 15B is explained. Firstly, the processing light EL0 emitted from the processing light source 2 is reflected by the galvanometer mirror 21, then passes through the collimating lens 22, and then is split into the first and second processing lights EL1, EL2 by the beam splitter 23 as the first optical system 16. The first processing light EL1 proceeds to the third optical system 18, and the second processing light EL2 proceeds to the second optical system 17B. In the second optical system 17B, the second processing light EL2 turns into a linear light extending in the X-axis direction by passing through the first cylindrical lens 24, and splits by the splitting surface 25a of the special beam splitter 25 into the second processing light EL221 to proceed to the second cylindrical lens 26 and into the second processing light EL222 to proceed to the third cylindrical lens 32. Similar to the second optical system 17B of the processing optical system 15A, the second optical system 17B allows the second processing lights EL221, EL222 to proceed in rotational directions (clockwise and counterclockwise directions) different from each other and then to proceed from the special beam splitter 25 toward the lens 33.

The second optical system 17B passes the second processing lights EL221, EL222 through the lens 33, thereby condensing them on the surface of the work W to form the interference fringes IS. The second processing lights EL221, EL222 are reflected by the first reflective part 29Ba on the far side of FIG. 14 and by the second reflective part 29Bb on the near side of FIG. 14. Therefore, the second optical system 17B irradiates the second processing lights EL221, EL222 after their passing through the lens 33, onto the surface of the work W, at an angle capable of forming the interference fringes IS1 of the basic frequency waveform Wb, with the far side (negative side (minus side) in the X-axis direction) of FIG. 14. It also irradiates them onto the surface of the work W, at an angle capable of forming the interference fringes IS2 of the twofold frequency waveform Wd, with the near side (positive side (plus side) in the X-axis direction) of FIG. 14. With this, the second optical system 17B forms, on the surface of the work W, the interference area IA3 where the interference fringes IS1 showing the basic frequency waveform Wb and the interference fringes IS2 showing the twofold frequency waveform Wd are aligned side-by-side.

The third optical system 18 turns the first processing light EL1 from the first optical system 16, into the linear first processing light EL11 extending in the Z-axis direction by passing through the fourth cylindrical lens 35. Then, the third optical system 18 irradiates the first processing light EL11 as a linear light extending in the Y-axis direction, at a position where the interference area IA3 has been formed, onto the surface of the work W, thereby forming the irradiation area RA2. With this, the processing optical system 15B can form the superimposed area OA3 by superimposing the interference area IA3 and the irradiation area RA2 on the surface of the work W by the second optical system 17B.

By driving the galvanometer mirror 21, the processing optical system 15B can move the superimposed area OA3 on the surface of the work W, that is, while keeping a condition in which the interference area IA3 and the irradiation area RA3 are superimposed. The processing optical system 15B scans the entire processing area PA with the superimposed area OA3 including the basic frequency waveform Wb and the twofold frequency waveform Wd by moving the superimposed area OA3 through driving the galvanometer mirror 21. With this, the processing optical system 15B can irradiate the entire processing area PA on the surface of the work W, with the interference fringes IS1 showing the basic frequency waveform Wb and the interference fringes IS2 showing the twofold frequency waveform Wd, under the condition that the first processing light EL11 is superimposed. Therefore, the processing optical system 15B can form the riblet structure RB with the ideal shape on the surface of the work W of the processing area PA. By moving the stage 13, the processing optical system 15B can turn any position on the surface of the work W into the processing area PA, thereby forming the riblet structure RB with the ideal shape at any position on the surface of the work W.

(2-4) Processing Optical System 15C

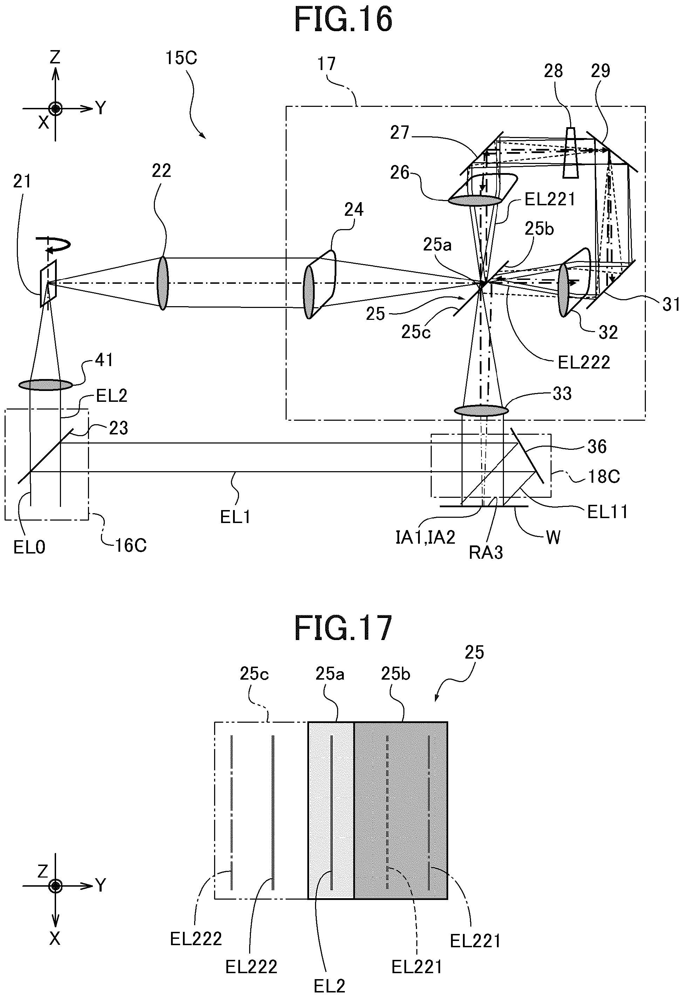

Since this processing optical system 15C is similar to the processing optical system 15A in terms of basic concept and configuration, the parts of equivalent configurations are designated by the same reference signs, and their detailed explanations are omitted. As shown in FIG. 16, the second optical system 17 of the processing optical system 15C have a configuration equivalent to that of the processing optical system 15A. In the processing optical system 15C, the first optical system 16C that splits the processing light EL0 from the processing light source 2 into the first and second processing lights EL1, EL2, and the third optical system 18C that generates the first processing EL11 from the first processing light EL1 and then irradiates it onto the work W are different from the first and third optical systems 16, 18 of the processing optical system 15A. Furthermore, the configuration from the first optical system 16C to the second optical system 17 of the processing optical system 15C is different from that of the processing optical system 15A.

The processing optical system 15C is different from the processing optical system 15A in that there has been changed the position (arrangement) of the first optical system 16C (beam splitter 23) relative to the galvanometer mirror 21 and the collimating lens 22 and in that a lens 41 is newly provided. The beam splitter 23 as the first optical system 16C is provided at a position where the processing light EL0 from the processing light source 2 proceeds to, reflects a part of the processing light EL0 to generate the first processing light EL1 that proceeds to the third optical system 18, and transmits another part of the processing light EL0 to generate the second processing light EL2 that proceeds to the lens 41.

The lens 41 condenses the second processing light EL2, which has passed through the beam splitter 23, on the galvanometer mirror 21 (its reflective surface). In the processing optical system 15C of this example, the processing light EL0 from the processing light source 2 is a generally collimated light (parallel light). Therefore, the first processing light EL1 split there is a collimated light (parallel light) having a predetermined size in the X-axis direction and Y-axis direction. In the lens 41, the back focus in the travel direction of the second processing light EL2 is set in the vicinity of the galvanometer mirror 21 (its reflective surface), thereby condensing the second processing light EL2 on the galvanometer mirror 21. The collimating lens 22 turns the second processing light EL2 reflected by the galvanometer mirror 21, into a collimated light (parallel light). The second processing light EL2 condensed by the lens 21 need not be perfectly condensed on the reflective surface of the galvanometer mirror 21, and the position of a condensed line of the second processing light EL2 by the lens 41 may deviate slightly from the reflective surface of the galvanometer mirror 21 in the optical axis direction.

Similar to the processing optical system 15A, at

**EP 4 523 835 A1**

the special beam splitter 25, the second optical system 17 of the processing optical system 15C reflects the second processing light EL221 by the reflective surface 25b to proceed toward the lens 33 and transmits the second processing light EL222 through the transmissive surface 25c to proceed toward the lens 33. Upon this, similar to the processing optical system 15A, the second optical system 17 of the processing optical system 15c changes the distance between the second processing lights EL221, EL222 on the special beam splitter 25 by switching between the condition that the optical deflecting member 28 is removed and the condition that the optical deflecting member 28 is disposed (see FIG. 17). Then, similar to the processing optical system 15A, the second optical system 17 of the processing optical system 15C forms the interference area IA1 of the interference fringes IS1 showing the basic frequency waveform Wb and the interference area IA2 of the interference fringes IS2 showing the twofold frequency waveform Wd.

The third optical system 18C is different from the third optical system 18 of the processing optical system 15A in that the fourth mirror 34 and the fourth cylindrical lens 35 are not provided, but only the fifth mirror 36 is provided. In the third optical system 18C, the first processing light EL1 from the first optical system 16C, that is, the beam splitter 23 is reflected by the fifth mirror 36 and is allowed to proceed to the surface of the work W. Since the processing light EL0 from the processing light source 2 is a generally collimated light (parallel light), the first processing light EL1 split therefrom is a collimated light (parallel light) having a predetermined size in the X-axis and Y-axis directions. Therefore, in the third optical system 18C, the first processing light EL11, which proceeds toward the surface of the work W after the reflection of the first processing light EL1 by the fifth mirror 36, becomes a collimated light having a predetermined size in the X-axis and Y-axis directions. The processing optical system 15C forms the irradiation area RA3 by irradiating the first processing light EL11 and makes the irradiation area RA3 have the same size as that of the processing area PA (see FIG. 11). In other words, the processing optical system 15C sets the processing light EL0 from the processing light source 2 such that the irradiation area RA3 is made to have the same size as that of the processing area PA.

Next, the operation of this processing optical system 15C is explained. Firstly, the processing light EL0 is emitted from the processing light source 2. Then, in the first optical system 16C, it is split into the first and second processing lights EL1, EL2 by the beam splitter 23. Then, the first processing light EL1 is allowed to proceed to the third optical system 18C. In the processing optical system 15C, the second processing light EL2 split in the first optical system 16C is turned into a collimated light by the collimating lens 22 and then is allowed to proceed to the second optical system 17.

The second optical system 17 forms, on the surface of the work W, the interference area IA1 of the interference fringes IS1 showing the basic frequency waveform Wb by removing the optical deflecting member 28 from the optical path between the first and second mirrors 27, 29. The second optical system 17 forms, on the surface of the work W, the interference area IA2 of the interference fringes IS2 showing the twofold frequency waveform Wd by disposing the optical deflecting member 28 in the optical path between the first and second mirrors 27, 29.

The third optical system 18C reflects the first processing light EL1 from the first optical system 16C by the fifth mirror 36, thereby irradiating the first processing light EL11 having a predetermined size in the X-axis and Y-axis directions to overlap the interference area IA (interference area IA1, interference area IA2) which has been formed on the surface of the work W, to form the irradiation area RA3. The irradiation area RA3 is made to have the same size as that of the processing area PA. With this, the processing optical system 15C forms the superimposed area OA4 by superimposing the interference area IA1 and the irradiation area RA3 on the surface of the work W under the condition that the optical deflecting member 28 is removed in the second optical system 17 (see FIG. 11). Furthermore, the processing optical system 15C forms the superimposed area OA5 by superimposing the interference area IA2 and the irradiation area RA3 on the surface of the work W under a condition that the optical deflecting member 28 is disposed in the second optical system 17 (see FIG. 11).

The processing optical system 15C forms the interference area IA1 at one end in the X-axis direction in the processing area PA, while forming the irradiation area RA3 in the processing area PA. The processing optical system 15C moves the interference area IA1 toward the other end in the X-axis direction by driving the galvanometer mirror 21 to scan the entire processing area PA, thereby forming the superimposed area OA4 in the entire processing area PA (see FIG. 11). Then, the processing optical system 15C forms the interference area IA2 at one end in the X-axis direction in the processing area PA, while forming the irradiation area RA3 in the processing area PA. The processing optical system 15C moves the interference area IA2 toward the other end in the X-axis direction by driving the galvanometer mirror 21 to scan the entire processing area PA, thereby forming the superimposed area OA5 in the entire processing area PA (see FIG. 11). With this, the processing optical system 15C can irradiate the entire processing area PA on the surface of the work W in a manner to superimpose the interference fringes IS1 of the basic frequency waveform Wb and the interference fringes IS2 of the twofold frequency waveform Wd on the first processing light EL11. Therefore, the processing optical system 15C can form the riblet structure RB with the ideal shape on the surface of the work W of the processing area PA. By moving the stage 13, the processing optical system 15C can turn any position on the surface of the work W into the processing area PA, thereby forming the riblet structure RB with the ideal shape at any position on the surface of the work W.

## (2-5) Processing Optical System 15D

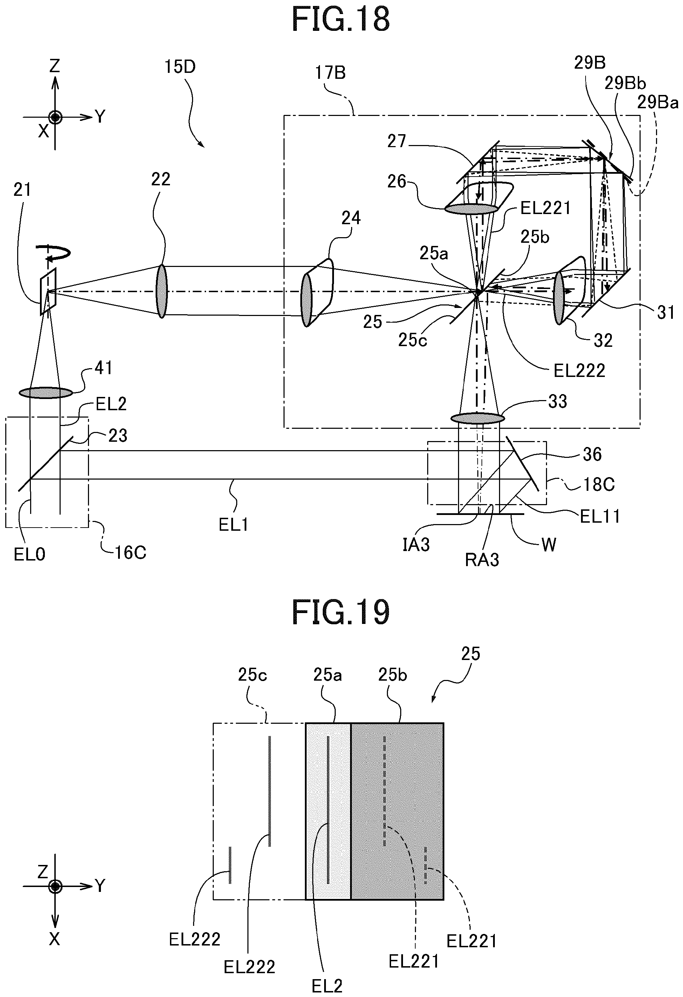

As shown in FIG. 18, in this processing optical system 15D, the first and third optical systems 16C, 18C of the processing optical system 15C are used, and the second optical system 17B of the processing optical system 15B is used. Therefore, the parts of equivalent configurations are designated by the same reference signs, and their detailed explanations are omitted.

The operation of this processing optical system 15D is explained. Firstly, the processing light EL0 is emitted from the processing light source 2. Then, in the first optical system 16C, it is split into the first and second processing lights EL1, EL2 by the beam splitter 23. Then, the first processing light EL1 is allowed to proceed to the third optical system 18C. In the processing optical system 15D, the second processing light EL2 split in the first optical system 16C is turned into a collimated light by the collimating lens 22 and then is allowed to proceed to the second optical system 17B.

In the second optical system 17B, at the special beam splitter 25, the second processing light EL221 turns, on the reflective surface 25b, into a linear light that extends in the X-axis direction, but its position in the Y-axis direction shifts midway, and the second processing light EL222 turns, on the transmissive surface 25c, into a linear light that extends in the X-axis direction, but its position in the Y-axis direction shifts midway (see FIG. 19). The second optical system 17B forms, on the surface of the work W, the interference area IA3 (see FIG. 11), in which the interference fringes IS1 showing the basic frequency waveform Wb and the interference fringes IS2 showing the twofold frequency waveform Wd are aligned side-by-side, by irradiating the surface of the work W with the second processing lights EL221, EL222 after passing through the lens 33.

The third optical system 18C reflects the first processing light EL1 from the first optical system 16C by the fifth mirror 36, thereby irradiating the first processing light EL11 having a predetermined size in the X-axis and Y-axis directions to overlap the interference area IA3 which has been formed on the surface of the work W, to form the irradiation area RA3 having the same size as that of the processing area PA. With this, in the processing optical system 15D, the second optical system 17B can form the superimposed area OA6 by superimposing the interference area IA3 and the irradiation area RA3 on the surface of the work W (see FIG. 11).

The processing optical system 15D forms the interference area IA3 at one end in the X-axis direction in the processing area PA, while forming the irradiation area RA3 in the processing area PA. The processing optical system 15D moves the interference area IA3 toward the other end in the X-axis direction by driving the galvanometer mirror 21 to scan the entire processing area PA, thereby forming the superimposed area OA6 in the entire processing area PA. With this, the processing optical system 15D can irradiate the entire processing area PA on the surface of the work W in a manner to superimpose the interference fringes IS1 of the basic frequency waveform Wb and the interference fringes IS2 of the twofold frequency waveform Wd on the first processing light EL11. Therefore, the processing optical system 15D can form the riblet structure RB with an ideal shape on the surface of the work W of the processing area PA. By moving the stage 13, the processing optical system 15D can turn any position on the surface of the work W into the processing area PA, thereby forming the riblet structure RB with an ideal shape at any position on the surface of the work W.

## (2-6) Processing Optical System 15E

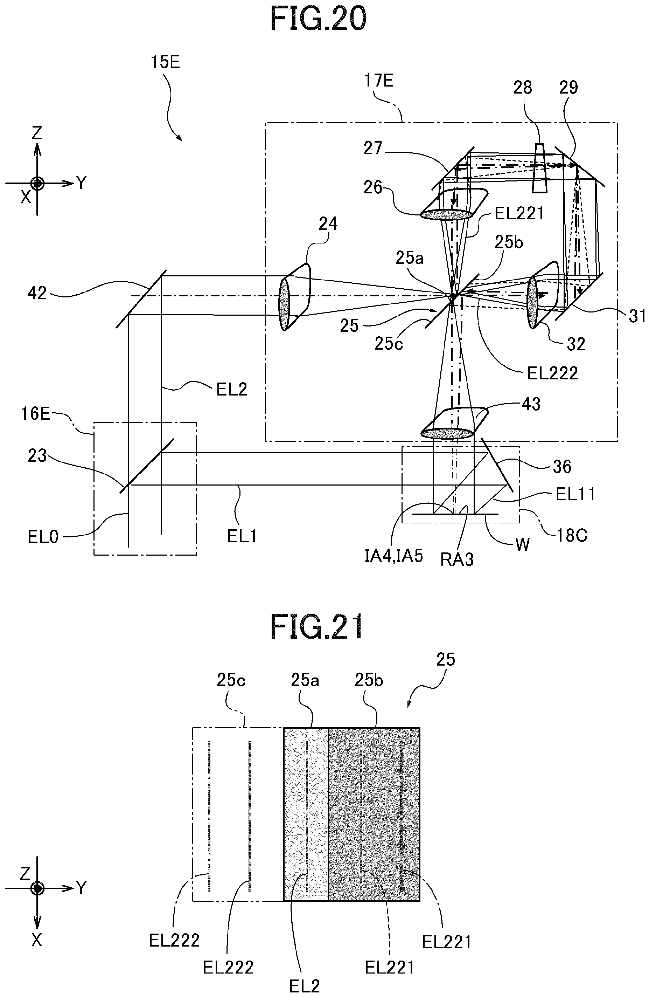

As shown in FIG. 20, this processing optical system 15E includes a first optical system 16E that is similar to the first optical system 16C of the processing optical system 15C in terms of basic concept and configuration. In the following explanation, the parts of equivalent configurations are designated by the same reference signs, and their detailed explanations are omitted. The processing optical system 15E includes a second optical system 17E that is similar to the second optical system 17 of the processing optical system 15A in terms of basic concept and configuration. In the following explanation, the parts of equivalent configurations are designated by the same reference signs, and their detailed explanations are omitted. Since the processing optical system 15E uses the third optical system 18C of the processing optical system 15C, the parts of equivalent configurations are designated by the same reference signs, and their detailed explanations are omitted.

The processing optical system 15E is different from the processing optical system 15C in that the galvanometer mirror 21, the collimating lens 22, and the lens 41 are not provided and in that a mirror 42 is newly provided. The beam splitter 23 as the first optical system 16E is provided at a position, to which the processing light EL0 from the processing light source 2 proceeds, reflects a part of the processing light EL0 to generate the first processing light EL1 that proceeds to the third optical system 18, and transmits another part of the processing light EL0 to generate the second processing light EL2 that proceeds to the mirror 42. The mirror 42 is a plate-shaped member and reflects the second processing light EL2, which has passed through the beam splitter 23, toward the second optical system 17E (its first cylindrical lens 24).

The second optical system 17E of the processing optical system 15E is different from the second optical system 17 of the processing optical system 15A in that a fourth cylindrical lens 43 is provided, in place of the lens 33. The fourth cylindrical lens 43 turns the second processing lights EL221, EL222 (see FIG. 21), which have been linear lights extending in the X-axis direction and coming from the special beam splitter 25, into rectangular lights having a side extending in the X-axis direction and a side extending in the Y-axis direction (see FIG. 11). In this fourth cylindrical lens 43, the front focus in the travel direction of the second processing lights EL221, EL222 is set in the vicinity of the special beam splitter 25 (its reflective surface). Therefore, on the surface of the work W, the fourth cylindrical lens 43 turns the second processing lights EL221, EL222 into collimated lights (parallel lights) having a predetermined size in the X-axis and Y-axis directions.

The operation of this processing optical system 15E is explained. Firstly, the processing light EL0 is emitted from the processing light source 2. Then, in the first optical system 16E, it is split into the first and second processing lights EL1, EL2 by the beam splitter 23. Then, the first processing light EL1 is allowed to proceed to the third optical system 18C. In the processing optical system 15E, the second processing light EL2 split in the first optical system 16E is reflected by the mirror 42 and then is allowed to proceed to the second optical system 17E.

The second optical system 17E passes the second processing lights EL221, EL222 coming from the special beam splitter 25, through the fourth cylindrical lens 43, thereby irradiating the resulting lights having a predetermined size in the X-axis and Y-axis directions onto the surface of the work W. The second optical system 17E forms the interference area IA4 (see FIG. 11) of the interference fringes IS1 showing the basic frequency waveform Wb on the surface of the work W, by removing the optical deflecting member 28 from the optical path between the first and second mirrors 27, 29. Furthermore, the second optical system 17E forms the interference area IA5 (see FIG. 11) of the interference fringes IS2 showing the twofold frequency waveform Wd on the surface of the work W, by disposing the optical deflecting member 28 in the optical path between the first and second mirrors 27, 29.

The third optical system 18C reflects the first processing light EL1 from the first optical system 16E by the fifth mirror 36, thereby irradiating the first processing light EL11 to overlap the interference area IA4 which has been formed on the surface of the work W, to form the irradiation area RA3 having the same size as that of the processing area PA. With this, under the condition that the optical deflecting member 28 has been removed in the second optical system 17, the processing optical system 15E forms, on the surface of the work W, the superimposed area OA7 having the same size as that of the processing area PA by superimposing the interference area IA4 and the irradiation area RA3 (see FIG. 11). The third optical system 18C reflects the first processing light EL1 from the first optical system 16E by the fifth mirror 36, thereby irradiating the first processing light EL11 to overlap the interference area IA5 which has been formed on the surface of the work W, to form the irradiation area RA3 having the same size as that of the processing area PA. With this, under the condition that the optical deflecting member 28 has been disposed in the second optical system 17, the processing optical system 15E forms, on the surface of the work W, the superimposed area OA8 by superimposing the interference area IA5 and the irradiation area RA3 (see FIG. 11).

With this, the processing optical system 15E can irradiate the entire processing area PA on the surface of the work W in a manner to superimpose the interference fringes IS1 of the basic frequency waveform Wb and the interference fringes IS2 of the twofold frequency waveform Wd on the first processing light EL11. Therefore, the processing optical system 15E can form the riblet structure RB with an ideal shape on the surface of the work W of the processing area PA. By moving the stage 13, the processing optical system 15E can turn any position on the surface of the work W into the processing area PA, thereby forming the riblet structure RB with an ideal shape at any position on the surface of the work W.

(2-7) Processing Optical System 15F as Modified Example

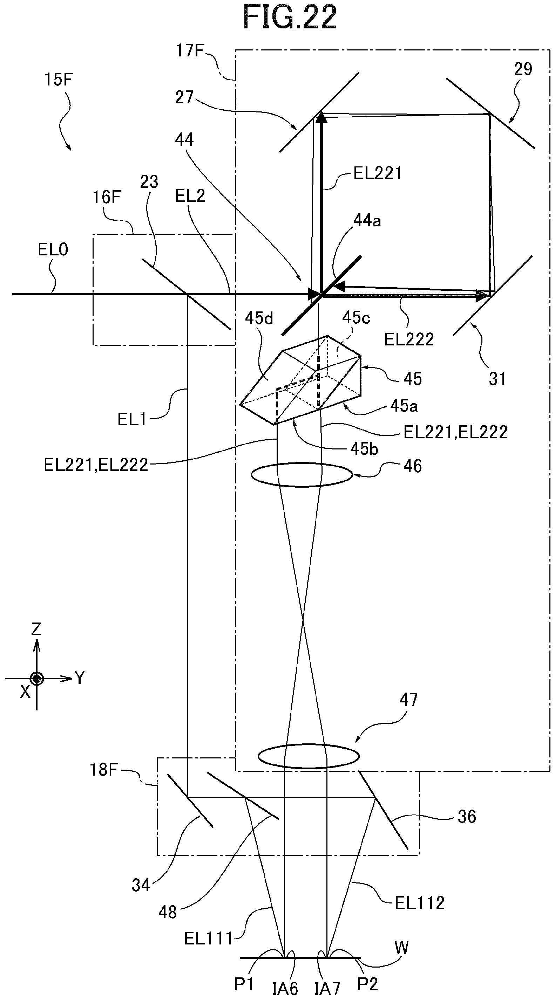

Next, a processing optical system 15F as a modified example of the processing optical system 15 is explained. As shown in FIG. 22, this processing optical system 15F is similar to the processing optical system 15A in terms of basic concept and configuration. Therefore, the parts of equivalent configurations are designated by the same reference signs, and their detailed explanations are omitted. In the processing optical system 15F, the processing light EL0 from the processing light source 2 is made to be a highly directional one having components of two different polarization directions.

The processing optical system 15F is different from the processing optical system 15A in that the galvanometer mirror 21 and the collimating lens 22 are not provided. The first optical system 16F of the processing optical system 15F splits the processing light EL0 from the processing light source 2 into the first and second processing lights EL1, EL2 by the beam splitter 23. In detail, the beam splitter 23 reflects a part of the processing light EL0 to generate the first processing light EL1 which proceeds to the third optical system 18F and transmits another part of the processing light EL0 to generate the second processing light EL2 which proceeds to the second optical system 17F.

In the processing optical system 15F, the second optical system 17F, on which the second processing light EL2 from the first optical system 16F is incident, is different from the second optical system 17 of the processing optical system 15A in that the first and second cylindrical lens 24, 26, the optical deflecting member 28, the third cylindrical lens 32, and the lens 33 are not provided. The second optical system 17F of the processing optical system 15F is different from the second optical system 17 of the processing optical system 15A in that a first polarizing beam splitter 44 is provided, in place of the special beam splitter 25, and in that a second polarizing beam splitter 45 and first and second lens 46, 47 are newly provided.

The first polarizing beam splitter 44 splits the second processing light EL2 from the first optical system 16F into the plurality of second processing lights EL22. In the following description, for convenience of explanation, there is described an example in which the first polarizing beam splitter 44 splits the second processing light EL2 into the two second processing lights EL22 (when indicated separately, one is referred to as the second processing light EL221, and the other is referred to as the second processing light EL222). The first polarizing beam splitter 44 also has a function that combines the two split second processing lights EL22 and allows both second processing lights EL22 to proceed toward the second polarizing beam splitter 45.

This first polarizing beam splitter 44 is a polarizing beam splitter with a rectangular plate shape and is disposed with a 45-degree inclination relative to the Y-axis direction around a center axis extending in the X-axis direction. Therefore, the first polarizing beam splitter 44 includes a first polarizing splitting surface 44a with a 45-degree inclination relative to the Y-axis direction. The first polarizing beam splitter 44 reflects a part of the second processing light EL2 from the first optical system 16F to generate the second processing light EL221 and transmits the rest of the second processing light EL2 to generate the second processing light EL222. Upon this, the first polarizing beam splitter 44 reflects one of the p-polarized component and the s-polarized component on the first polarizing splitting surface 44a and transmits the other of the p-polarized component and the s-polarized component thereon. Therefore, the second processing light EL2 from the first optical system 16F is made, at least at the time when incident on the first polarizing beam splitter 44, to contain the p-polarized component and s-polarized component on the first polarizing beam splitter 44. From this, two different polarization directions are set, such that the processing light EL0 from the processing light source 2 contains the p-polarized component and the s-polarized component at the time of incidence. Here, the first polarizing beam splitter 44 is disposed to be inclined 45 degrees relative to the Y-axis direction. Therefore, the second processing light EL221 generated by the reflection thereby proceeds to the first mirror 27 in parallel with the Z-axis direction, and the second processing light EL222 generated by the transmission therethrough proceeds to the third mirror 31 in parallel with the Y-axis direction.

The second optical system 17F is equivalent to the second optical system 17 of the processing system 15A, in terms of a relation of the first, second, and third mirrors 27, 29, 31 relative to the first polarizing beam splitter 44, except in that the first and second cylindrical lens 24, 26, the optical deflecting member 28, and the third cylindrical lens 32 are not provided. Therefore, in the second optical system 17F, the second processing lights EL221, EL222 are basically allowed to proceed from the first polarizing beam splitter 44 in rotational directions (clockwise direction and counterclockwise direction) different from each other to return to the first polarizing beam splitter 44. Here, in the second optical system 17F, the second mirror 29 is disposed to be inclined relative to the reference position (surface). Therefore, while the second processing lights EL221, EL222 are allowed to pass through basically the same optical path, the emission angles of the second processing lights EL221, EL222 are made into directions different from each other. In the second optical system 17F, the second processing light EL221 is reflected by the first polarizing beam splitter 44 to proceed toward the second polarizing beam splitter 45, and the second processing light EL222 is transmitted through the first polarizing beam splitter 44 to proceed toward the second polarizing beam splitter 45. This second processing light EL221 is a linearly polarized light that is one (first polarization direction) of p-polarized light and s-polarized light in the first polarized beam splitter 44, and the second processing light EL222 is a linearly polarized light that is the other (second polarization direction) of p-polarized light and s-polarized light therein.

Therefore, the first polarizing beam splitter 44 emits the second processing light EL221 in the first polarization direction and the second processing light EL222 in the second polarization direction to be different in at least one of the emission angle or the emission position. From this, in the second optical system 17F, the first polarizing beam splitter 44 and the first, second, and third mirrors 27, 29, 31 constitute an upstream optical system that emits the second processing light EL221 in the first polarization direction and the second processing light EL222 in the second polarization direction to be different in at least one of the emission angle or the emission position.

The second polarizing beam splitter 45 is composed of a combination of a cubic polarizing beam splitter portion 45a and a right triangular prism portion 45b that is continuous with one face thereof. The polarizing beam splitter portion 45a includes a second polarizing splitting surface 45c that is inclined by 45 degrees relative to the Y-axis direction. This second polarizing splitting surface 45c reflects one of the p-polarized component and s-polarized component on the second polarizing splitting surface 45c and transmits the other of the p-polarized component and the s-polarized component. The second polarizing beam splitter 45 is disposed by a rotation around a center axis extending in the Y-axis direction, relative to the first polarizing beam splitter 44, such that the second polarizing splitting surface 45c becomes non-parallel to the first polarizing splitting surface 44a of the first polarizing beam splitter 44 (their surface directions become different from each other). Here, the surface direction may be the direction of normal to the surface. In the second polarizing beam splitter 45 of this modified example, the second polarizing splitting surface 45c has an angle of 45 degrees to the first polarizing splitting surface 44a, when viewed in the rotational direction around a center axis extending in Y-axis. Therefore, in contrast with that a plane perpendicular to the first polarizing splitting surface 44a contains the X-axis direction (is made parallel), a plane perpendicular to the second polarizing splitting surface is made to have a predetermined angle (45 degrees in this modified example) to the X-axis direction.

As mentioned above, this second polarizing splitting surface 45c is disposed by a rotation around a center axis extending in the Y-axis direction relative to the first polarizing splitting surface 44a. Therefore, it is possible to split each of the second processing light EL221 of linear polarization in the first polarization direction and the second processing light EL222 of linear polarization in the second polarization direction, which are from the first polarizing beam splitter 44. In other words, the second polarizing splitting surface 45c transmits a part of the second processing light EL221 of linear polarization in the first polarization direction to make the second processing light EL221 in a third polarization direction and reflects the rest of the second processing light EL221 to make the second processing light EL221 in a fourth polarization direction. Furthermore, the second polarizing splitting surface 45c transmits a part of the second processing light EL222 of linear polarization in the second polarization direction to make the second processing light EL222 in a third polarization direction and reflects the rest of the second processing light EL222 to make the second processing light EL222 in a fourth polarization direction. With this, the second polarizing splitting surface 45c makes it possible to achieve an interference between the second processing light EL221 in the third polarization direction and the second processing light EL222 in the third polarization direction, which have been transmitted, and to achieve an interference between the second processing light EL221 in the fourth polarization direction and the second processing light EL222 in the fourth polarization direction, which have been reflected. The second polarizing beam splitter 45 emits the second processing lights EL221, EL222, which are in the third polarization direction, downward from the Y-axis direction of the second polarizing splitting surface 45c, thereby allowing them to proceed toward the first lens 46.

The right triangular prism portion 45b includes a reflective surface 45d that is provided in a direction in which the second processing lights EL221, EL222 in the fourth polarization direction, reflected by the second polarizing splitting surface 45c, proceed. The reflective surface 45d of this modified example is made parallel with the second polarizing splitting surface 45c. Therefore, similar to the second polarizing splitting surface 45c, the reflective surface 45d is such that a plane perpendicular thereto has a predetermined angle (45 degrees in this modified example) relative to the X-axis direction. The reflective surface 45d reflects the second processing lights EL221, EL222 in the fourth polarization direction, downward from the Y-axis direction of the reflective surface 45d, thereby allowing them to proceed toward the first lens 46.

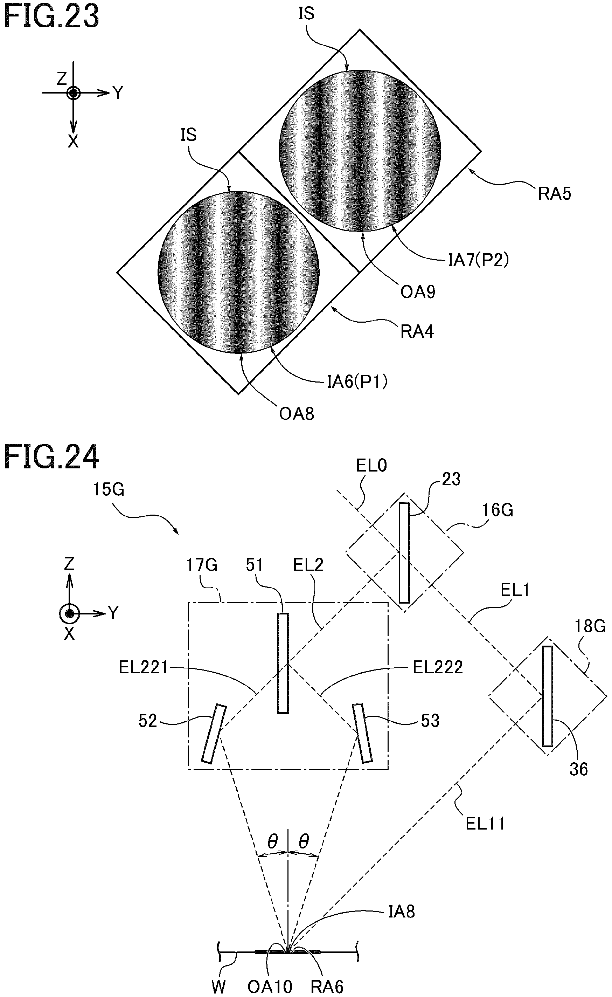

The first lens 46 is provided to make a pair with the second lens 47 in the Y-axis direction. In cooperation with the second lens 47, the first lens 46 irradiates the second processing lights EL221, EL222 in the third polarization direction onto a first position P1 on the surface of the work W, thereby forming first interference fringes (interference fringes IS of an interference area IA6 (see FIG. 23)). Furthermore, in cooperation with the second lens 47, the first lens 46 irradiates the second processing lights EL221, EL222 in the fourth polarization direction onto a second position P2 on the surface of the work W, thereby forming second interference fringes (interference fringes IS of an interference area IA7 (see FIG. 23)). In cooperation with the second lens 47, the first lens 46 adjusts, on the surface of the work W, the size of the interference area IA6 of the first position P1 and the size of the interference area IA7 of the second position P2. In other words, in cooperation with the second lens 47, the first lens 46 adjusts the sizes of the first interference fringes (the interference fringes IS of the interference area IA6) caused by the second processing lights EL221, EL222 in the third polarization direction and the second interference fringes (the interference fringes IS of the interference area IA7) caused by the second processing lights EL221, EL222 in the fourth polarization direction. This size adjustment includes adjusting the period of the interference fringes IS on the surface of the work W, in addition to adjusting the sizes of the interference areas IA6, IA7 on the surface of the work W. Therefore, it is also possible to say that the first and second lenses 46, 47 constitute an afocal optical system.

For simplicity of illustration, in FIG. 22, the first and second lenses 46, 47 are each illustrated as a single lens. However, the first and second lenses 46, 47 may each be composed of the plurality of lenses. Therefore, the first and second lenses 46, 47 may be referred to as first and second lens groups 46, 47, respectively. Instead of or in addition to the lens, it is optional to use a reflective member(s) or diffractive optical element(s). Therefore, the first and second lenses 46, 47 may be referred to as first and second optical member groups 46, 47, respectively.

In this second optical system 17F, the fringe pitch direction of the first interference fringes (interference fringes IS of interference area IA6) and the fringe pitch direction of the second interference fringes (interference fringes IS of interference area IA7) are made to be in the same direction or in directions parallel with each other. Furthermore, in the second optical system 17F, the fringe pitch of the first interference fringes (interference fringes IS of interference area IA6) and the fringe pitch of the second interference fringes (interference fringes IS of interference area IA7) are made to be the same. In the second optical system 17F, the bright and dark phases of the interference fringes IS in the interference area IA6 and the bright and dark phases of the interference fringes IS in the interference area IA7 are aligned. Here, when the bright and dark phases of both interference fringes IS are aligned, it means that the bright and dark positions are matched, that is, they form similar bright and dark patterns, between ones formed by virtually expanding the interference fringes IS in the interference area IA6 and ones formed by virtually expanding the interference fringes IS in the interference area IA7. In other words, the matching of the bright and dark phases of both interference fringes IS means that their phases match each other between ones formed by virtually expanding the interference fringes IS in the interference area IA6 and ones formed by virtually expanding the interference fringes IS in the interference area IA7.

Therefore, the second polarizing beam splitter 45 splits the second processing light EL221 in the first polarization direction into the second processing light EL221 in the third polarization direction and the second processing light EL221 in the fourth polarization direction, and splits the second processing light EL222 in the second polarization direction into the second processing light EL222 in the third polarization direction and the second processing light EL222 in the fourth polarization direction. From this, in the second optical system 17F, the second polarizing beam splitter 45 and the first and second lens 46, 47 constitute a downstream optical system that forms the first interference fringes (interference fringes IS in interference area IA6) at the first position P1 and the second interference fringes (interference fringes IS in interference area IA7) at the second position P2.

The third optical system 18F is different from the third optical system 18 of the processing optical system 15A in that a beam splitter 48 is newly provided, in place of the fourth cylindrical lens 35. In the third optical system 18F, the fourth mirror 34 reflects the first processing light EL1 from the first optical system 16F, thereby allowing it to proceed to the beam splitter 48.

When the first processing light EL1 from the first optical system 16F is incident on the beam splitter 48, the first processing light EL1 is split into first processing lights EL111, EL112. In detail, the beam splitter 48 generates the first processing light EL111, which proceeds to the surface of the work W, by reflecting a part of the first processing light EL1, and generates the first processing light EL112, which proceeds to the fifth mirror 36, by transmitting another part of the first processing light EL1. An area irradiated with this first processing light EL111 is referred to as an irradiation area RA4. The beam splitter 48 (third optical system 18F) of this modified example is set to irradiate the first processing light EL111 onto the first position P1, where the interference area IA6 is formed, on the surface of the work W, thereby superimposing the irradiation area RA4 and the interference area IA6 (see FIG. 23). This beam splitter 48 may be an amplitude-dividing beam splitter or polarizing beam splitter.

The fifth mirror 36 reflects the first processing light EL112 from the beam splitter 48, thereby allowing it to proceed to the surface of the work W. The fifth mirror 36 (third optical system 18F) of this modified example is set to irradiate the first processing light EL112 onto the second position P2, where the interference area IA7 is formed, on the surface of the work W (see FIG. 23). An area irradiated with this first processing light EL112 is referred to as an irradiation area RA5.

Therefore, the third optical system 18F splits the first processing light EL1 by the beam splitter 48 into the first processing light EL111 (irradiation area RA4), which is irradiated onto an area where the interference area IA6 is formed on the surface of the work W, and into the first processing light EL112 (irradiation area RA5), which is irradiated onto an area where the interference area IA7 is formed on the surface of the work W. The processing optical system 15F can form, on the surface of the work W, a superimposed area OA8 by superimposing the interference area IA6 and the irradiation area RA4, and a superimposed area OA9 by superimposing the interference area IA7 and the irradiation area RA5 (see FIG. 23). Therefore, in the processing optical system 15F, an area that is a combination of the superimposed areas OA8, OA9 is referred as the processing area PA.

The processing optical system 15F of this modified example sets fluences of the first processing lights EL111, EL112, in consideration of the arrangement and optical performance in the first, second and third optical systems 16, 17, 18, such that the minimum fluences of the processing lights in the superimposed areas OA8, OA9 become fluences at which the work W can be processed. In other words, the processing optical system 15F sets the splitting ratios in the beam splitter 23 of the first optical system 16F and in the beam splitter 48 of the third optical system 18F, based on the arrangement and optical performance of each optical member in the first, second and third optical systems 16F, 17F, 18F, such that the fluences of the interference fringes IS in the interference areas IA7, IA8 become equal to or greater than the lower limit value TH_lowest of the fluence at which the work W can be processed.

Next, the operation of this processing optical system 15F is explained. Firstly, the processing light EL0 is emitted from the processing light source 2. Then, in the first optical system 16F, it is split into the first and second processing lights EL1, EL2 by the beam splitter 23. The first processing light EL1 proceeds to the third optical system 18F, and the second processing light EL2 proceeds to the second optical system 17F.

In the second optical system 17F, a part of the second processing light EL2 is reflected by the first polarizing beam splitter 44 (first polarizing splitting surface 44a) into the second processing light EL221 toward the first mirror 27, and another part is transmitted through the first polarizing beam splitter 44 (first polarizing splitting surface 44a) into the second processing light EL222 toward the third mirror 31. The second processing light EL221 is reflected by the first, second, and third mirrors 27, 29, 31, thereby proceeding toward the first polarizing beam splitter 44. The second processing light EL222 is reflected by the third, second, and first mirrors 31, 29, 27, thereby proceeding toward the first polarizing beam splitter 44.

Here, all of the first polarizing beam splitter 44, the first mirror 27, and the third mirror 31 are plate-shaped members and inclined by 45 degrees relative to the Z-axis direction, and the second mirror 29 is also a plate-shaped member and inclined by 45 degrees relative to the Z-axis direction as a reference position. Therefore, in the second optical system 17F, the second processing lights EL221, EL222 are basically made to proceed from the first polarizing beam splitter 44 in their respective different rotational directions (clockwise direction and counterclockwise direction), thereby returning to the first polarizing beam splitter 44. In the second optical system 17F, the second mirror 29 is inclined in a counterclockwise direction in FIG. 22 around the center axis relative to the reference position. Therefore, the second processing light EL221 reflected by the second mirror 29, as compared with the case of being at the reference position, proceeds to a position that is displaced rightward in the third mirror 31 and then is reflected there, thereby proceeding toward a position that is displaced upward in the first polarizing beam splitter 44. The second processing light EL222 reflected by the second mirror 29, as compared with the case of being at the reference position, proceeds to a position that is displaced downward in the first mirror 27 and then is reflected there, thereby proceeding toward a position that is displaced downward in the first polarizing beam splitter 44. With this, the second optical system 17F can generate a spatial position difference between the second processing lights EL221, EL222, while they are passed through basically the same optical path. Therefore, it is possible to say that the second optical system 17F (its upstream optical system) constitutes a square Sagnac optical system.

In the second optical system 17F, the second processing light EL221 is reflected by the first polarizing beam splitter 44 (first polarizing splitting surface 44a) to proceed toward the second polarizing beam splitter 45, and the second processing light EL222 is transmitted through the first polarizing beam splitter 44 (first polarizing splitting surface 44a) to proceed toward the second polarizing beam splitter 45. With this, the second processing light EL221 is turned to a linearly polarized light in the first polarization direction, and the second processing light EL222 is turned to a linearly polarized light in the second polarization direction.

In the second polarizing beam splitter 45, the first polarizing splitting surface 44a transmits a part of the second processing light EL221 in the first polarization direction into the second processing light EL221 in the third polarization direction and transmits a part of the second processing light EL222 in the second polarization direction into the second processing light EL222 in the third polarization direction. Furthermore, in the second polarizing beam splitter 45, the first polarizing splitting surface 44a reflects the rest of the second processing light EL221 in the first polarization direction into the second processing light EL221 in the fourth polarization direction and reflects the rest of the second processing light EL222 in the second polarization direction into the second processing light EL222 in the fourth polarization direction. Then, the second polarizing beam splitter 45 makes the second processing lights EL221, EL222 in the third polarization direction proceed toward the first lens 46. Furthermore, the second polarizing beam splitter 45 reflects the second processing lights EL221, EL222 in the fourth polarization direction by the reflective surface 45d to make them proceed toward the first lens 46. Then, the first and second lenses 46, 47 form the interference fringes IS (interference area IA6) at the first position P1 by the second processing lights EL221, EL222 in the third polarization direction on the surface of the work W. Furthermore, the first and second lenses 46, 47 form the interference fringes IS (interference area IA7) at the second position P2 by the second processing lights EL221, EL222 in the fourth polarization direction on the surface of the work W.

In the third optical system 18F, the first processing light EL1 from the first optical system 18F is reflected by the fourth mirror 34 and then is split by the beam splitter 48 into the first processing lights EL111, EL112. Then, in the third optical system 18F, the first processing light EL111 proceeds from the beam splitter 48 to the surface of the work W to form the irradiation area RA4 at the first position P1, and the first processing light EL112 is reflected by the fifth mirror 36 and then proceeds to the surface of the work W to form the irradiation area RA5 at the second position P2. With this, the processing optical system 15F forms, on the surface of the work W, the superimposed area OA8 by superimposing the interference area IA6 and the irradiation area RA4 at the first position P1, and the superimposed area OA9 by superimposing the interference area IA7 and the irradiation area RA5 at the second position P2. In the processing optical system 15F, the bright and dark phases of the interference fringes IS in the interference area IA6, and the bright and dark phases of the interference fringes IS in the interference area IA7 are aligned.

With this, the processing optical system 15F can irradiate the entire processing area PA on the surface of the work W with the interference fringes IS under the condition that the first processing light EL111 or EL112 has been superimposed. The processing optical system 15F sets the fluences of the first processing lights EL111, EL112, such that the minimum fluences of the processing lights in the superimposed areas OA8, OA9 become fluences at which the work W can be processed. Therefore, the processing optical system 15F can form the riblet structure RB with an ideal shape on the surface of the work W of the processing area PA. By moving the stage 13, the processing optical system 15F can turn any position on the surface of the work W into the processing area PA, thereby forming the riblet structure RB with the ideal shape at any position on the surface of the work W. Upon this, the processing optical system 15F aligns the bright and dark phases of the interference fringes IS between the superimposed areas OA8, OA9. Therefore, it is possible to form similar riblet structures RB in both superimposed areas OA8, OA9. Thus, it is possible to form the riblet structure RB more efficiently at any position on the surface of the work W by moving the processing optical system 15F.

In the processing optical system 15F, the upstream optical system of the second optical system 17F emits the second processing light EL221 as a linearly polarized light in the first polarization direction and the second processing light EL222 as a linearly polarized light in the second polarization direction to be different in terms of at least one of the emission angle or the emission position. Upon this, in the processing optical system 15F, the second processing light EL2 is split by the first polarizing beam splitter 44 into the second processing light EL221 in the first polarization direction and the second processing light EL222 in the second polarization direction. Since the processing optical system 15F splits the second processing light EL2 by using the first polarizing beam splitter 44, it is possible to greatly suppress the optical loss when conducting the splitting.

In addition, the processing optical system 15F has a positional relation between the first polarizing splitting surface 44a of the first polarizing beam splitter 44 and the second polarizing splitting surface 45c of the second polarizing beam splitter 45, which are rotated around a center axis extending in the Y-axis direction. With this, the second polarizing splitting surface 45c can split each of the second processing lights EL221, EL222, which have been respectively split into a p-polarized component and an s-polarized component at the first polarizing splitting surface 44a, into a p-polarized component and an s-polarized component at the second polarizing splitting surface 45c. In the processing optical system 15F, the second polarizing splitting surface 45c of the second polarizing beam splitter 45 splits the second processing light EL221 in the first polarization direction into the second processing light EL221 in the third polarization direction and the second processing light EL221 in the fourth polarization direction, and splits the second processing light EL222 in the second polarization direction into the second processing light EL222 in the third polarization direction and the second processing light EL222 in the fourth polarization direction. The processing optical system 15F transmits the second processing light EL221 in the third polarization direction and the second processing light EL222 in the fourth polarization direction, which have been transmitted through the first polarizing splitting surface 44a, through the first and second lens 46, 47, thereby allowing them to proceed to the first position P1 on the surface of the work W. In the processing optical system 15F, the reflective surface 45d is provided in a reflection direction of the second polarizing splitting surface 45c of the second polarizing beam splitter 45. In the processing optical system 15F, the second processing lights EL221, EL222 in the fourth polarization direction, which have been reflected by the reflective surface 45d, are transmitted through the first and second lens 46, 47, thereby proceeding to the second position P2 on the surface of the work W. In this way, the processing optical system 15F can respectively match the polarization directions of the second processing lights EL221, EL222 by transmitting them through the second polarizing splitting surface 45c and reflecting them by the second polarizing splitting surface 45c. With this, in the processing optical system 15F, although different polarization directions cause no interference between the second processing lights EL221, 222, the use of the second polarizing beam splitter 45 causes their polarization directions to make their interference possible. The processing optical system 15F forms the interference fringes IS by the second processing lights EL221, EL222 in the third polarization direction, which have been transmitted, and forms the interference fringes IS by the second processing lights EL221, EL222, in the fourth polarization direction, which have been reflected. Therefore, the processing optical system 15F can form the interference fringes IS by efficiently using the second processing light EL2, which has been emitted toward the second optical system 17F.

Although the processing optical system 15F forms single-frequency interference fringes IS, similar to the processing optical systems 15A, 15C, and 15E, one or more n-frequency waveform Wn may be superimposed on the basic frequency waveform Wb. In this case, for example, in the second optical system 17F, similar to the second optical system 17 of the processing optical system 15A, the processing optical system 15F may include the optical deflecting member 28, which can be disposed in an optical path between the first and second mirrors 27, 29 and removed from the optical path.

(2-8) Processing Optical System 15G as Modified Example

Next, a processing optical system 15G as a modified example of the processing optical system 15 is explained. This processing optical system 15G is similar to the processing optical system 15A in terms of basic concept and configuration. Therefore, the parts of equivalent configurations are designated by the same reference signs, and their detailed explanations are omitted.

As shown in FIG. 24, the processing optical system 15G is different from the processing optical system 15A in that the galvanometer mirror 21 and the collimating lens 22 are not provided. Therefore, a first optical system 16G splits the processing light EL0 from the processing light source 2 into the first and second processing lights EL1, EL2 by the beam splitter 23. In detail, the beam splitter 23 transmits a part of the processing light EL0 to generate the first processing light EL1 which proceeds to the third optical system 18G and reflects another part of the processing light EL0 to generate the second processing light EL2 which proceeds to the second optical system 17G.

In the processing optical system 15G, the second optical system 17G, on which the second processing light EL2 from the first optical system 16G is incident, is different in configuration from the second optical system 17 of the processing optical system 15A. This second optical system 17G includes a beam splitter 51 and mirrors 52, 53. The beam splitter 51 is a light splitting member, on which the second processing light EL2 from the first optical system 16G is incident, and which splits the second processing light EL2 into the plurality of second processing lights EL22. This beam splitter 51 generates the plurality of second processing lights EL2 by splitting the second processing light EL2. In the following description, for convenience of explanation, there is described an example in which the beam splitter 51 splits the second processing light EL22 into the two second processing lights EL22 (when indicated separately, one is referred to as the second processing light EL221, and the other as the second processing light EL222).

The beam splitter 51 may be an amplitude-dividing beam splitter. In this case, a part of the second processing light EL2 is transmitted as the second processing light EL221 through the beam splitter 51. On the other hand, another part of the second processing light EL2 is reflected as the second processing light EL222 by the beam splitter 51. The beam splitter 51 is not limited to the amplitude-dividing beam splitter but may be a polarizing beam splitter. Upon this, it is optional to dispose a polarization control member, such as a wavelength plate, in at least one of the optical paths of the plurality of processing lights split by the polarizing beam splitter.

The second processing light EL221, which has been transmitted through the beam splitter 51, is incident on a mirror 52. The mirror 52 reflects the second processing light EL221 toward the work W. The mirror 52 reflects the second processing light EL221 such that the second processing light EL221 is incident on the work W at a predetermined incident angle $\theta$.

The second processing light EL222, which has been reflected by the beam splitter 51, is incident on a mirror 53. The mirror 53 reflects the second processing light EL222 toward the work W. The mirror 53 reflects the second processing light EL222 such that the second processing light EL222 is incident on the work W at the predetermined incident angle $\theta$ from a direction that is different from that of the second processing light EL221.

The second processing light EL221 reflected by the mirror 52 and the second processing light EL222 reflected by the mirror 53 are irradiated onto an interference area IA8 that is set on the work W. The second optical system 17G makes the interference area IA8 have predetermined dimensions in the X-axis direction and Y-axis direction. As a result, in the interference area IA8, an interference light generated by interference between the second processing lights EL221, EL222 forms the interference fringes IS.

The third optical system 18G of the processing optical system 15G is different from the third optical system 18 of the processing optical system 15A in that the fourth mirror 34 and the fourth cylindrical lens 35 are not provided, and only the fifth mirror 36 is provided. In the third optical system 18G, the first processing light EL1 from the first optical system 16G, that is, the beam splitter 23 is reflected by the fifth mirror 36, such that the first processing light EL11 proceeds to the surface of the work W. This third optical system 18G makes the first processing light EL1 1, which is directed toward the surface of the work W, into a light having predetermined dimensions in the X-axis direction and Y-axis direction. An area that is irradiated with the first processing light EL11 is referred to as an irradiation area RA6.

Next, the operation of this processing optical system 15G is explained. Firstly, the processing light EL0 is emitted from the processing light source 2, followed by splitting, in the first optical system 16G, into the first and second processing lights EL1, EL2 by the beam splitter 23. Then, the first processing light EL1 is allowed to proceed to the third optical system 18G, and the second processing light EL2 is allowed to proceed to the second optical system 17G.

The second optical system 17G splits the second processing light EL2 from the first optical system 16G by the beam splitter 51 into the second processing lights EL221, EL222 and then reflects them by the mirrors 52, 53 toward the surface of the work W. With this, the second optical system 17G forms the interference area IA8 of the interference fringes IS on the surface of the work W. The third optical system 18G reflects the first processing light EL1 from the first optical system 16G, thereby irradiating the first processing light EL11 having predetermined dimensions in the X-axis direction and Y-axis direction, in a manner to overlap the interference area IA8 formed on the surface of the work W, to form the irradiation area RA6.

With this, the processing optical system 15G forms a superimposed area OA10 by superimposing the interference area IA8 and the irradiation area RA6. Therefore, in the processing optical system 15G, the superimposed area OA10 becomes the processing area PA. With this, the processing optical system 15G can irradiate the entire processing area PA on the surface of the work W in a manner to superimpose the interference fringes IS on the first processing light EL11. The processing optical system 15G sets the fluence of the first processing light EL111, such that the minimum fluence of the processing light in the superimposed area OA10 becomes a fluence at which the work W can be processed. Therefore, the processing optical system 15G can form the riblet structure RB with ideal shape on the surface of the work W of the processing area PA. By moving the stage 13, the processing optical system 15G can turn any position on the surface of the work W into the processing area PA, thereby forming the riblet structure RB with ideal shape at the any position on the surface of the work W.

Although the processing optical system 15G forms single-frequency interference fringes IS, similar to the processing optical systems 15A, 15C, 15E, one or more n-frequency waveform Wn may be superimposed on the basic frequency waveform Wb. In this case, for example, the processing optical system 15G may make the angle of at least one of the mirrors 52, 53 changeable, or include a light-refracting optical member that can be disposed in an optical path from the first or second mirror 27, 29 to the surface of the work W and removed from the optical path. In the processing optical system 15G, the optical paths in which the second processing lights EL221, EL222 proceed toward the work W, and the optical path in which the first processing light EL11 proceeds toward the work W are positioned on the same plane. However, the optical path in which the first processing light EL11 proceeds toward the work W need not be positioned on the same plane as that of the optical paths of the second processing lights EL221, EL222.

(2-9) Processing Optical System 15H as Modified Example

Next, a processing optical system 15H as a modified example of the processing optical system 15 is explained. This processing optical system 15H is similar to the processing optical system 15A in terms of basic concept and configuration. Therefore, the parts of equivalent configurations are designated by the same reference signs, and their detailed explanations are omitted.

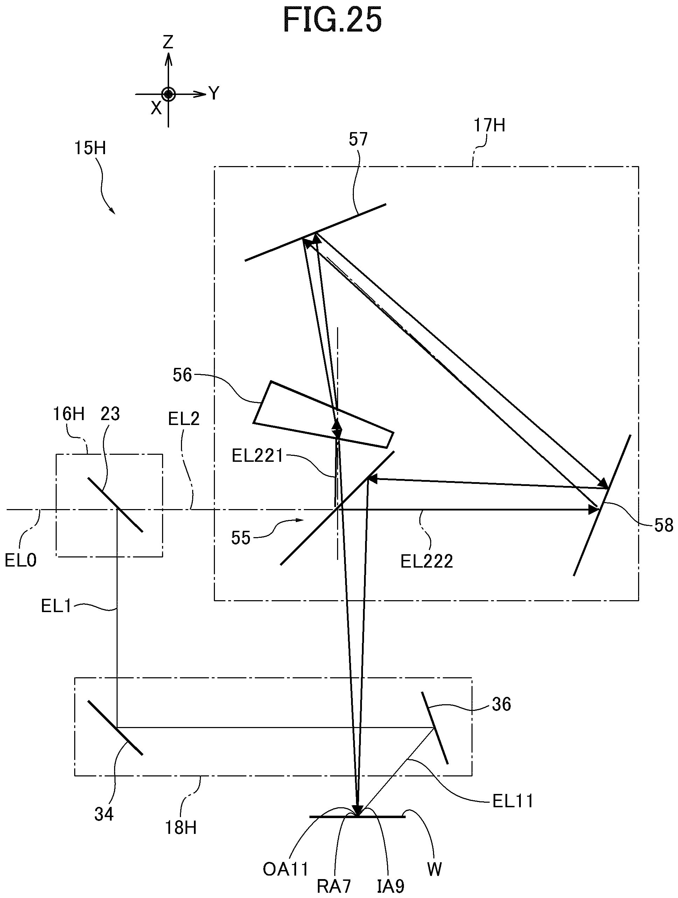

As shown in FIG. 25, the processing optical system 15H is different from the processing optical system 15A in that the galvanometer mirror 21 and the collimating lens 22 are not provided. Therefore, the first optical system 16H of the processing optical system 15H splits the processing light EL0 from the processing light source 2 by the beam splitter 23 into the first and second processing lights EL1, EL2. In detail, the beam splitter 23 transmits a part of the processing light EL0 to generate the first processing light EL 1 which proceeds to the third optical system 18H and reflects another part of the processing light EL0 to generate the second processing light EL2 which proceeds to the second optical system 17H. In this example, the beam splitter 23 allows the second processing light EL2, which has been generated by the transmission therethrough, to proceed in parallel with the Y-axis direction.

In the processing optical system 15H, the second optical system 17H, on which the second processing light EL2 from the first optical system 16H is incident, is different in configuration from the second optical system 17 of the processing optical system 15A. This second optical system 17H includes a beam splitter 55, an optical deflecting member 56, and first and second mirrors 57, 58. The beam splitter 55 is an optical splitting member which the second processing light EL2 from the first optical system 16H is incident on, and which splits the second processing light EL2 into the plurality of second processing lights EL22. This beam splitter 55 splits the second processing light EL2, which has been turned into a linear light extending in the X-axis direction by the first cylindrical lens 24, into the plurality of second processing lights EL22. Therefore, the beam splitter 55 functions as a light splitting member that splits the second processing light EL2 into the plurality of second processing lights EL22. In the following description, for convenience of explanation, there is described an example in which the beam splitter 55 splits the second processing light EL2 into the two second processing lights EL22 (when indicated separately, one is referred to as the second processing light EL221, and the other as the second processing light EL222). The beam splitter 55 also has a function that combines the two split second processing lights EL22 and allows both second processing lights EL22 to proceed toward the work W.

This beam splitter 55 is a rectangular plate-shaped member and is disposed to have an inclination of 45 degrees relative to the Y-axis direction around a center axis extending in the X-axis direction. This beam splitter 55 is composed of an amplitude-dividing beam splitter or polarizing beam splitter, generates the second processing light EL221 by reflecting a part of the second processing light EL2, and generates the second processing light EL222 by transmitting another part of the second processing light EL2. Here, the beam splitter 55 is disposed to have an inclination of 45 degrees relative to the Y-axis direction. Therefore, the second processing light EL221 resulting from reflection by the beam splitter 55 proceeds to the optical deflecting member 56 in parallel with the Z-axis direction, and another processing light EL222 resulting from transmission through the beam splitter 55 proceeds to the second mirror 58 in parallel with the Y-axis direction.

The light deflecting member 56 is a member that changes (deflects) the travel directions of the lights (second processing lights EL221, EL222) between the beam splitter 55 and the first mirror 57. The optical deflecting member 56 is an optical member that has a shape extending in the X-axis direction and a refractive power only in the Y-axis direction, thereby refracting the travel direction of the light either rightward or leftward in FIG. 25 in the Y-axis direction between the beam splitter 55 and the first mirror 57. The optical deflecting member 56 in this example is trapezoidal (wedge-shaped) in cross section perpendicular to the X-axis direction to have a thickness (dimension in the Z-axis direction) that is minimum at the right side in the Y-axis direction and increases as going leftward in the Y-axis direction. Therefore, as compared with a case that the optical deflecting member 56 is not installed, the optical deflecting member 56 refracts the light from one of the beam splitter 55 and the first mirror 57 leftward in the Y-axis direction and allows it to proceed toward the other of the beam splitter 55 and the first mirror 57.

The first mirror 57 is a plate-shaped member and is disposed to have a predetermined inclination relative to the Z-axis direction around a center axis extending in the X-axis direction. This predetermined inclination is set, to reflect the second processing light EL221, which has been transmitted through the optical deflecting member 56 after reflection by the beam splitter 55, toward the second mirror 58, and to reflect the second processing light EL222, which has been reflected by the second mirror 58, toward the optical deflecting member 56. The first mirror 57 reflects the second processing light EL221 from the optical deflecting member 56, thereby allowing it to proceed to the second mirror 58. The first mirror 57 reflects the second processing light EL222 from the second mirror 29, thereby allowing it to proceed to the optical deflecting member 56.

The second mirror 58 is a plate-shaped member and is disposed to have a predetermined inclination, which is different from that of the first mirror 57, relative to the Z-axis direction around a center axis extending in the X-axis direction. The predetermined inclination, which is different from that of the first mirror 57, is set, to reflect the second processing light EL222, which has been transmitted through the beam splitter 55, toward the first mirror 57, and to reflect the second processing light EL221, which has been reflected by the first mirror 57, toward the beam splitter 55.

The beam splitter 55 reflects the second processing light EL221, which has been reflected by the second mirror 58, thereby allowing it to proceed to the surface of the work W, and transmits the second processing light EL222, which has been transmitted through the optical deflecting member 56 after refection by the first mirror 57, thereby allowing it to proceed to an interference area IA9 on the surface of the work W. The second optical system 17H makes the interference area IA9 have predetermined dimensions in the X-axis direction and Y-axis direction. As a result, in the interference area IA9, an interference light that is generated by interference between the second processing lights EL221, EL222 forms the interference fringes IS.

The third optical system 18H of the processing optical system 15H is different from the third optical system 18 of the processing system 15A in that the fourth cylindrical lens 35 is not provided and that the fourth and fifth mirrors 34, 36 are provided. The third optical system 18H reflects the first processing light EL1, which is from the first optical system 16H, that is, the beam splitter 23, by the fourth mirror 34 and then by the fifth mirror 36, thereby allowing it as the first processing light EL11 to proceed to the surface of the work W. This third optical system 18H makes the first processing light EL11, which has been allowed to proceed toward the surface of the work W, into a light having predetermined dimensions in the X-axis direction and Y-axis direction. An area irradiated with this first processing light EL11 is referred to as an irradiation area RA7.

Next, the operation of this processing optical system 15H is explained. Firstly, the processing light EL0 is emitted from the processing light source 2, followed by splitting, in the first optical system 16H, into the first and second processing lights EL1, EL2 by the beam splitter 23. Then, the first processing light EL1 is allowed to proceed to the third optical system 18H, and the second processing light EL2 is allowed to proceed to the second optical system 17H.

The second optical system 17H allows the second processing light EL2 to proceed to the beam splitter 55. With this, a part of the second processing light EL2 is reflected by the beam splitter 55 toward the optical deflecting member 56 into the second processing light EL221, and another part thereof is transmitted through the beam splitter 55 toward the second mirror 58 into the second processing light EL222. The second processing light EL221 is transmitted through the optical deflecting member 56, and then is reflected by the first mirror 57 and then the second mirror 58, thereby proceeding toward the beam splitter 55. The second processing light EL222 is reflected by the second mirror 58 and the first mirror 57, and then is transmitted through the optical deflecting member 56, thereby proceeding toward the beam splitter 55.

Here, in the second optical system 17H, the second processing light EL221, which has been reflected by the beam splitter 55, the first mirror 57 and the second mirror 58, proceeds to the beam splitter 55, and the second processing light EL222, which has been transmitted through the beam splitter 55 and reflected by the second mirror 58 and the first mirror 57, proceeds to the beam splitter 55. Therefore, in the second optical system 17H, the second processing lights EL221, EL222 are basically made to proceed from the special beam splitter 55 in their respective different rotational directions (clockwise direction and counterclockwise direction), thereby returning to the special beam splitter 55. In the second optical system 17H, the optical deflecting member 56 is installed between the beam splitter 55 and the first mirror 57.

Therefore, as compared with the case in which the optical deflecting member 56 is not provided, the second processing light EL221, which has been reflected by the beam splitter 55, proceeds to a position that is displaced leftward on the first mirror 57. Due to the reflection there, it proceeds to positions where the displacement on the first mirror 57 has been reflected on the second mirror 58 and the beam splitter 55, too. As compared with the case in which the optical deflecting member 56 is not provided, the second processing light EL222, which has been transmitted through the beam splitter 55, is incident on the optical deflecting member 56 after its reflection by the second mirror 58 and the first mirror 57, and then is refracted there, thereby proceeding toward a position that is displaced leftward on the beam splitter 55. In this way, in the second optical system 17H, the optical deflecting member 56 is provided between the beam splitter 55 and the first mirror 57, thereby generating bias in the directions of the optical paths where the second processing lights EL221, EL222 proceed after their refractions by the optical deflecting member 56. Therefore, the second optical system 17H generates a difference between refraction influences by the optical deflecting member 56 on the second processing lights EL221, EL222, that is, between deviations caused by their passing through the optical deflecting member 56. With this, in the second optical system 17H, while the second processing lights EL221, EL222 are allowed to pass through basically the same optical path, it is possible to make the emission angles of the second processing lights EL221, EL222 into directions different from each other. Therefore, it is possible to say that the second optical system 17H constitutes a triangular Sagnac optical system.

The second optical system 17H reflects the second processing light EL221 by the beam splitter 55, thereby allowing it to proceed toward the surface of the work W, and transmits the second processing light EL222 through the beam splitter 55, thereby allowing it to proceed toward the surface of the work W. The second optical system 17H condenses the second processing lights EL221, EL222 onto the surface of the work W, thereby forming the interference fringes IS to form the interference area IA9. The third optical system 18H reflects the first processing light EL1 from the first optical system 16H by the fourth mirror 34 and the fifth mirror 36, thereby irradiating the first processing light EL11 having predetermined dimensions in the X-axis direction and Y-axis direction, in a manner to overlap the interference area IA9 formed on the surface of the work W, to form the irradiation area RA7.

With this, the processing optical system 15H forms a superimposed area OA11 by superimposing the interference area IA9 and the irradiation area RA7. Therefore, in the processing optical system 15H, the superimposed area OA11 becomes the processing area PA. With this, the processing optical system 15H can irradiate the entire processing area PA on the surface of the work W in a manner to superimpose the interference fringes IS on the first processing light EL11. The processing optical system 15H sets the fluence of the first processing light EL111, such that the minimum fluence of the processing light in the superimposed area OA11 becomes a fluence at which the work W can be processed. Therefore, the processing optical system 15H can form the riblet structure RB with an ideal shape on the surface of the work W of the processing area PA. By moving the stage 13, the processing optical system 15H can turn any position on the surface of the work W into the processing area PA, thereby forming the riblet structure RB with an ideal shape at any position on the surface of the work W.

Although the processing optical system 15H forms single-frequency interference fringes IS, similar to the processing optical systems 15A, 15C, and 15E, one or more n-frequency waveform Wn may be superimposed on the basic frequency waveform Wb. In this case, for example, the processing optical system 15H may be provided in the second optical system 17H with a second deflecting member that refracts the travel direction of light in either of Y-axis directions similar to the optical deflecting member 56 at a refraction angle that is different from that of the optical deflecting member 56, in a manner to be replaceable with the optical deflecting member 56.

Therefore, it is possible to form a riblet structure with an ideal shape by the processing optical system 15, etc., the processing apparatus 1, and the processing method according to the present disclosure.

As above, the processing optical system, the processing apparatus, and the processing method of the present disclosure have been described, based on each example. However, specific configuration is not limited to each example. Changes and additions in design, etc. should be allowed as long as they do not deviate from the gist of the inventions recited in the claims.

In the above description, the processing apparatus 1 includes the head drive system 12. However, the processing apparatus 1 need not include the head drive system 12. In other words, the processing head 11 need not be movable. Furthermore, in the above description, the processing apparatus 1 includes the stage drive system 14. However, the processing apparatus 1 need not include the stage drive system 14. In other words, the stage 13 need not be movable. Alternatively, in the first place, the processing apparatus 1 need not include the stage 13.

The above description has explained an example in which the processing apparatus 1 forms the riblet structure RB on the metallic work W (object as base material), and an example in which the riblet structure RB is formed on a film as a coating on the surface of the work W. However, the processing conducted by the processing apparatus 1 is not limited to the above examples. For example, the processing apparatus 1 may form a riblet structure RB on the surface of the work W, and the surface of the work W, on which the riblet structure RB has been formed, may be coated with a film. For example, in the case of forming a riblet structure RB on a film as a coating on the surface of the work W, the film on which the riblet structure RB has been formed may be coated with another film. In each example, the riblet structure RB may be coated with a film. In this case, the thickness of the film may be determined such that the film as a coating formed on the riblet structure RB does not lower the functions of the riblet structure RB. For example, in case that the riblet structure RB is embedded in a film, there is a possibility that the film lowers the functions of the riblet structure RB. Therefore, the thickness of the film may be determined to prevent the riblet structure RB from being embedded in the film. To prevent the film as a coating formed on the riblet structure RB from lowering the functions of the riblet structure RB, it is optional to form a film along the shape of the riblet structure RB (for example, along the raised structure body 81 or the valley structure 82).

In addition to or in place of the removal processing, the processing apparatus 1 may conduct an addition processing to add a new structure to the work W by irradiating the processing light EL onto the work W. In this case, the processing apparatus 1 may form the riblet structure RB on the surface of the work W by conducting the addition processing. Alternatively, in addition to or in place of at least one of the removal processing or the addition processing, the processing apparatus 1 may conduct a machine processing to process the work W by bringing a tool(s) into contact with the work W. In this case, the processing apparatus 1 may form the riblet structure RB on the surface of the work W by conducting the machine processing.

In the above description, the processing system SYS forms a riblet structure RB that has a function of reducing resistance against fluid on the surface of the work W. However, the processing system SYS may form, on the work W, a structure having a function that is different from the function of reducing resistance against fluid on the surface of the work W. For example, the processing system SYS may form, on the work W, a riblet structure for reducing a noise that is generated at a relative movement between the fluid and the surface of the work W. For example, the processing system SYS may form, on the work W, a riblet structure that generates swirls to the flow of fluid on the surface of the work W. For example, the processing system SYS may form, on the work W, a structure for providing the surface of the work W with hydrophobicity.

In the above description, the processing system SYS forms the riblet structure RB on the surface of the work W. However, the processing system SYS may form any structure having any shape on the surface of the work W. As one example of any structure, it is possible to cite a structure that generates swirls to the flow of fluid on the surface of the work W. As another example of any structure, it is possible to cite a structure for providing the surface of the work W with hydrophobicity. As another example of any structure, it is possible to cite a micro- or nanometer-order fine-texture structure (typically, an uneven structure including a mountain structure and valley structure) that has been regularly or irregularly formed. The fine texture structure may include at least one of a sharkskin structure or a dimple structure, which have a function of reducing resistance caused by fluid (gas and/or liquid). The fine texture structure may include a lotus leaf surface structure (e.g., having a lotus effect) with at least one of a liquid repellent function or a self-cleaning function. The fine texture structure may include at least one of a fine projection structure with a liquid transport function (see U.S. Patent Application Publication No. 2017/0044002), an uneven structure with a lyophilic function, an uneven structure with an antifouling function, a moth-eye structure with at least one of a reflectance reduction function and a liquid-repellent function, an uneven structure that shows a structural color by strengthening only a specific wavelength light through interference, a pillar array structure with an adhesion function using van der Waals' force, an uneven structure with an aerodynamic noise reduction function, a honeycomb structure with a droplet collection function, an uneven structure that improves adhesion with a layer formed on the surface, an uneven structure for reducing friction resistance, etc. Even in this case, the raised structure body that constitutes the uneven structure may include a structure similar to the raised structure body 81 that constitutes the riblet structure RB. The valley structure that constitutes the uneven structure may include a structure similar to the valley structure 82 that constitutes the riblet structure RB. The fine texture structure need not have a specific function.

In the above description, the processing system SYS forms the riblet structure RB on the surface of the work W. However, the processing system SYS may form a mold for transferring the riblet structure RB to the surface of the work W. In this case, the work W may be the surface of a moving object or a film that can be attached to the moving object.

In the above description, the processing system SYS processes the work W by irradiating the processing light EL onto the work W. However, the processing system SYS may process the work W by irradiating the work W with any energy beam that is different from light. In this case, in addition to or in place of the processing light source 2, the processing system SYS may include a beam irradiation apparatus that can irradiate any energy beam. As one example of any energy beam, it is possible to cite at least one of a charged particle beam or an electromagnetic wave. As one example of the charged particle beam, it is possible to cite at least one of electron beam or ion beam.

In the above description, in the first four processing optical systems (15A to 15D), the processing system SYS includes the single galvanometer mirror 21 as an interference fringe moving member, before and after the first optical system 16 (16A, 16C). However, the interference fringe moving member may have another configuration and is not limited to the above examples, as long as it moves the position of the interference area IA (interference fringes IS) formed by the second optical system 17 (17A to 17D) in a direction perpendicular to the optical axis of the second optical system 17. The galvanometer mirror 21 as the interference fringe moving member is singularly installed before and after the first optical system 16 (16A, 16C). However, it may be installed by a plural number in an optical path from the processing light source 2 to the work W via the second optical system 17, or it may be installed by a plural number in an optical path from the processing light source 2 to the work W via the third optical system 18, and it is not limited to the above examples. As one example thereof, in the processing optical system 15A, in addition to the galvanometer mirror 21, it is possible to install another galvanometer mirror. In such an example, it is possible in the second optical system 17 of the processing optical system 15A to dispose a re-imaging optical system between the special beam splitter 25 and the lens 33 and to install a galvanometer mirror at a position that is between the re-imaging optical system and the lens 33 and is generally conjugate to the special beam splitter 25. In this case, the galvanometer mirror between the re-imaging optical system and the lens 33, and the galvanometer mirror 21 function as the interference fringe moving members. In this case, according to need, it is also possible to install a galvanometer mirror in an optical path from the processing light source 2 to the work W via the third optical system 18.

In the above description, the processing system SYS as the processing optical system 15 (15A to 15H) shows multiple examples of the second optical system 17 (17A to 17H). However, the second optical system 17 may have another configuration and is not limited to the above examples, as long as the second optical system 17 forms the plurality of second processing lights EL22 for forming the interference fringes IS by irradiation onto the work W from different incident directions by splitting the second processing light EL2 from the first optical system 16. Another second optical system 17 may be one that forms the plurality of second processing lights EL22, which proceed in directions different from each other, from the second processing light EL2 from the first optical system 16, by using a diffraction optical element (DOE) or an optical mask (one partially blocking the progression of light).

**Claims**

1. A processing optical system, comprising:

   a first optical system that is configured to split a processing light from a light source into a first processing light and a second processing light; a second optical system that is configured to split the second processing light into a plurality of second processing lights and to irradiate the split second processing lights onto an object from different incident directions respectively to form interference fringes on a surface of the object; and a third optical system that is configured to irradiate the first processing light from the first optical system toward an interference area on the surface of the object, the interference fringes being formed in the interference area.

2. The processing optical system according to claim 1, wherein the third optical system is configured to simultaneously irradiate the plurality of second processing lights and the first processing light onto the object.

3. The processing optical system according to claim 2, wherein the plurality of second processing lights and the first processing light are simultaneously irradiated onto the object such that at least a minimum fluence at a dark part of the interference fringes on the surface of the object is made to be a fluence at which the surface of the object is removed.

4. The processing optical system according to claim 1 or 2, wherein the second optical system is configured to form a first interference fringe on the surface of the object by using at least two second processing lights of the split plurality of second processing lights, and a second interference fringe on the surface of the object by using at least two second processing lights of the split plurality of second processing lights, wherein the second interference fringe is different from the first interference fringe, and the at least two second processing lights used for the formation of the second interference fringe are different from the at least two second processing lights used for the formation of the first interference fringe.

5. The processing optical system according to claim 4, wherein the interference area, in which the interference fringes on the surface of the object are formed, comprises a first area in which the first interference fringe is formed, and a second area in which the second interference fringe is formed.

6. The processing optical system according to any one of claims 1 to 5,

   wherein the second optical system comprises: a light splitting member that is configured to split the second processing light into the plurality of second processing lights; a first optical member on which a second processing light of the plurality of second processing lights split by the light splitting member is incident; and a second optical member on which another second processing light of the plurality of second processing lights split by the light splitting member that is different from the one second processing light is incident, wherein the another second processing light incident on the second optical member is different from the one second processing light incident on the first optical member, and wherein the one second processing light from the first optical member is directed to the light splitting member via the second optical member, and the another second processing light from the second optical member is directed to the light splitting member via the first optical member.

7. The processing optical system according to any one of claims 1 to 6, wherein the first processing light is irradiated onto the surface of the object without the second optical system.

8. The processing optical system according to any one of claims 1 to 7, wherein the second optical system comprises a light splitting member that is configured to split the second processing light into the plurality of second processing lights, and the second optical system changes incident angles of the plurality of second processing lights that are incident on the light splitting member via the first and second optical members to adjust at least one of amplitude or a period in the interference fringes.

9. The processing optical system according to any one of claims 1 to 8, wherein the second optical system is configured to form, on the surface of the object, a first interference fringe and a second interference fringe that is different from the first interference fringe in terms of at least one of amplitude and period.

10. The processing optical system according to claim 9, wherein a first duration during which the first interference fringe is formed by the second optical system and a second duration during which the second interference fringe is formed by the second optical system at least partially overlap.

11. The processing optical system according to claim 9, wherein a first duration during which the first interference fringe is formed by the second optical system and a second duration during which the second interference fringe is formed by the second optical system do not overlap.

12. The processing optical system according to any one of claims 9 to 11, wherein the first and second interference fringes are at least two interference fringes of a plurality of types of interference fringes obtained by performing a Fourier transform on an ideal waveform to obtain a riblet structure to be formed.

13. The processing optical system according to any one of claims 1 to 12, wherein the second optical system is capable of adjusting at least one of an amplitude or a period in the interference fringes.

14. The processing optical system according to any one of claims 1 to 10, wherein the second optical system forms the interference fringes in at least a part of an interference area in a processing area on the surface of the object,
wherein the third optical system increases an integrated value of a fluence of light that is irradiated onto at least a part of an area in the processing area.

15. The processing optical system according to claim 14, wherein the interference area that is formed by the second optical system and an irradiation area where the first processing light is irradiated onto the surface of the object by the third optical system at least partially overlap in a superimposed area on the surface of the object,
wherein the surface of the object is processed while changing a positional relation between the processing area and the superimposed area.

16. The processing optical system according to claim 15, further comprising an interference fringe moving member that is configured to move a position of the interference area relative to the second optical system in a direction that crosses an optical axis of the second optical system.

17. The processing optical system according to claim 16, wherein the interference fringe moving member moves the irradiation area, where the first processing light is irradiated onto the surface of the object, in the crossing direction.

18. The processing optical system according to claim 16 or 17, wherein the interference fringe moving member comprises a scan mirror that is configured to reflect light from the light source,
wherein a position of the interference area is moved in a direction that crosses an optical axis of the second optical system by changing a direction of reflection by the scan mirror.

19. The processing optical system according to any one of claims 16 to 18, wherein the interference fringe moving member is disposed in an optical path between the light source and the first optical system.

20. The processing optical system according to any one of claims 16 to 19, wherein the interference fringe moving member is disposed in an optical path between the first optical system and the second optical system.

21. The processing optical system according to any one of claims 1 to 20, wherein a position of the interference area is changed in an irradiation area where the first processing light is irradiated onto the surface of the object by the third optical system.

22. The processing optical system according to any one of claims 1 to 20, wherein the interference area is formed at a position that is fixed relative to an irradiation area where the first processing light is irradiated onto the surface of the object by the third optical system.

23. The processing optical system according to any one of claims 1 to 22, wherein the second optical system changes at least one of an amplitude or a period of the interference fringes formed on the surface of the object.

24. The processing optical system according to any one of claims 1 to 23, wherein the second optical system changes at least one of an amplitude or a period of the interference fringes formed on the surface of the object.

25. The processing optical system according to any one of claims 1 to 7, wherein the second optical system comprises:

an upstream optical system comprising a first polarizing beam splitter that is configured to split the second processing light into a second processing light of first polarization and a second processing light of second polarization, which are different from each other in a polarization direction, the upstream optical system emitting the second processing light of the first polarization and the second processing light of the second polarization to be different in at least one of an emission angle or an emission position; and a downstream optical system comprising a second polarizing beam splitter that is configured to split the second processing light of the first polarization into a second processing light of third polarization and a second processing light of fourth polarization which are different from each other in a polarization direction and to split the second processing light of the second polarization into the second processing light of the third polarization and the second processing light of the fourth polarization,
wherein the downstream optical system is configured to form
a first interference fringe by irradiating the second processing light of the third polarization generated by the second processing light of the first polarization and the second processing light of the third polarization generated by the second processing light of the second polarization onto a first position on the surface of the object, and
a second interference fringe by irradiating the second processing light of the fourth polarization generated by the second processing light of the first polarization, and the second processing light of the fourth polarization generated by the second processing light of the second polarization onto a second position on the surface of the object, and
wherein the second position on the surface of the object is different from the first position on the surface of the object.

26. The processing optical system according to any one of claims 1 to 25, wherein the processing light from the light source comprises a pulsed light with a pulse width of less than a nanosecond.

27. The processing optical system according to any one of claims 1 to 26, wherein the interference area, where the interference fringes are formed on the surface of the object, is subjected to ablation processing.

28. The processing optical system according to any one of claims 1 to 27, wherein the second optical system is configured to generate the plurality of second processing lights by diffracting the second processing light.

29. A processing optical system, comprising:

an interference fringe formation optical system that is configured to split a second processing light, among first and second processing lights, which are pulsed lights with emission durations that at least partially overlap, into a plurality of second processing lights, and to irradiate the split plurality second processing lights onto the object from different incident directions respectively, thereby forming interference fringes on a surface of the object; and
an irradiation optical system that is configured to irradiate the first processing light toward an interference area where the interference fringes are formed.

30. The processing optical system according to claim 29, further comprising a splitting optical system that is configured to split a processing light from a light source into the first processing light and the second processing light.

31. A processing apparatus for conducting a riblet processing on a surface of an object by using a light from a light source, comprising:

the processing optical system according to any one of claims 1 to 30; and
a positional relation changing mechanism that is configured to change a positional relation between the surface of the object and the interference fringes formed on the surface of the object by the processing optical system.

**32.** The processing apparatus according to claim 31, wherein the positional relation changing mechanism is configured to change the positional relation in a direction to cross a fringe pitch direction of the interference fringes.

**33.** A processing method for a riblet processing on a surface of an object by using a light from a light source, comprising:

splitting a processing light from the light source into a first processing light and a second processing light;

splitting the second processing light into a plurality of second processing lights, and irradiating the split plurality second processing lights onto the object from different incident directions respectively, thereby forming interference fringes on the surface of the object; and

irradiating the first processing light toward an interference area on the surface of the object, the interference fringes being formed in the interference area.

# FIG.1

EP 4 523 835 A1

# FIG.2

SYS

2 — PROCESSING LIGHT SOURCE

3 — CONTROLLER

EL(EL0)

1 — PROCESSING APPARATUS

11 — PROCESSING HEAD

15 — PROCESSING OPTICAL SYSTEM

12 — HEAD DRIVE SYSTEM

13 — STAGE

14 — STAGE DRIVE SYSTEM

# FIG.3A

# FIG.3B

# FIG.3C

# FIG.4

# FIG.5

EP 4 523 835 A1

# FIG.6A

# FIG.6B

# FIG.7

# FIG.8

# FIG.9

# FIG.10A

IDEAL WAVEFORM Wi

# FIG.10B

BASIC FREQUENCY WAVEFORM Wb

TWOFOLD FREQUENCY WAVEFORM Wd

# FIG.11

| | PROCESSING OPTICAL SYSTEM 15A | PROCESSING OPTICAL SYSTEM 15B | PROCESSING OPTICAL SYSTEM 15C | PROCESSING OPTICAL SYSTEM 15D | PROCESSING OPTICAL SYSTEM 15E |
|---|---|---|---|---|---|
| IRRADIATION AREA RA | RA1(EL11) | RA2(EL11) | RA3(EL11) | RA3(EL11) | RA3(EL11) |
| INTERFERENCE AREA IA | IA1(IS1) IA2(IS2) | IA3 IS1 IS2 | IA1(IS1) IA2(IS2) | IA3 IS1 IS2 | IA4(IS1) IA5(IS2) |
| SUPERIMPOSED AREA OA | PA OA1 IA1(RA1) PA OA2 IA2(RA1) | PA OA3 PA IA3(RA2) | PA RA3 OA4 IA1 RA3 PA OA5 IA2 | PA RA3 IA3 OA6 | IA4(RA3) PA OA7 PA IA5(RA3) OA8 |

EP 4 523 835 A1

# FIG.12

# FIG.13

# FIG.14

# FIG.15

# FIG.16

# FIG.17

# FIG.18

# FIG.19

# FIG.20

# FIG.21

# FIG.22

FIG.23

FIG.24

# FIG.25

## INTERNATIONAL SEARCH REPORT

| International application No. |
|---|
| **PCT/JP2022/019995** |

### A. CLASSIFICATION OF SUBJECT MATTER

***B23K 26/359***(2014.01)i; ***B23K 26/064***(2014.01)i; ***B23K 26/067***(2006.01)i; ***B23K 26/364***(2014.01)i
FI:   B23K26/359; B23K26/364; B23K26/067; B23K26/064 Z

According to International Patent Classification (IPC) or to both national classification and IPC

### B. FIELDS SEARCHED

Minimum documentation searched (classification system followed by classification symbols)

B23K26/00-26/70

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2016/0265570 A1 (UT-BATTELLE, LLC) 15 September 2016 (2016-09-15) paragraphs [0009]-[0065], fig. 1-2, 5 | 1-2, 7, 13, 22-24, 26-30, 33 |
| A | | 3-6, 8-12, 14-21, 25, 31-32 |
| X | JP 2021-509864 A (FRAUNHOFER-GESELLSCHAFT ZUR FÖRDERUNG DER ANGEWANDTEN FORSCHUNG E.V) 08 April 2021 (2021-04-08) paragraphs [0036]-[0054], fig. 1-2, 5 | 1-2, 7, 13, 22-24, 26, 28-30 |
| A | | 3-6, 8-12, 14-21, 25, 27, 31-33 |
| A | EP 2431120 A1 (VALSTYBINIS MOKSLINIU TYRIMU INSTITUTAS FIZINIU IR TECHNOLOGIJOS MOKSLU CENTRAS) 21 March 2012 (2012-03-21) entire text, all drawings | 1-33 |
| A | JP 2020-518458 A (4JET MICROTECH GMBH) 25 June 2020 (2020-06-25) entire text, all drawings | 1-33 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 July 2022** | **02 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2022/019995**

**C. DOCUMENTS CONSIDERED TO BE RELEVANT**

| Category* | Citation of document, with indication, where appropriate, of the relevant passages | Relevant to claim No. |
|---|---|---|
| A | WO 2019/082309 A1 (NIKON CORPORATION) 02 May 2019 (2019-05-02) entire text, all drawings | 1-33 |

Form PCT/ISA/210 (second sheet) (January 2015)

## INTERNATIONAL SEARCH REPORT
### Information on patent family members

International application No.

**PCT/JP2022/019995**

| Patent document cited in search report | | | Publication date (day/month/year) | Patent family member(s) | | | Publication date (day/month/year) |
|---|---|---|---|---|---|---|---|
| US | 2016/0265570 | A1 | 15 September 2016 | (Family: none) | | | |
| JP | 2021-509864 | A | 08 April 2021 | US | 2020/0306879 | A1 | |
| | | | | paragraphs [0042]-[0060], fig. 1-2, 5 | | | |
| | | | | WO | 2019/134769 | A1 | |
| | | | | EP | 3735332 | B1 | |
| | | | | DE | 102018200036 | B3 | |
| | | | | KR | 10-2020-0127976 | A | |
| EP | 2431120 | A1 | 21 March 2012 | ES | 2637475 | T3 | |
| JP | 2020-518458 | A | 25 June 2020 | US | 2020/0139488 | A1 | |
| | | | | entire text, all drawings | | | |
| | | | | WO | 2018/197555 | A1 | |
| | | | | DE | 102017206968 | A1 | |
| | | | | CN | 111093883 | A | |
| | | | | KR | 10-2020-0032031 | A | |
| WO | 2019/082309 | A1 | 02 May 2019 | US | 2021/0370444 | A1 | |
| | | | | entire text, all drawings | | | |
| | | | | EP | 3702094 | A1 | |
| | | | | CN | 111246965 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4994639 A
- US 20170044002